(19) Europäisches Patentamt European Patent Office Office européen des brevets

(11) **EP 4 668 699 A1**

(12) **EUROPEAN PATENT APPLICATION**
published in accordance with Art. 153(4) EPC

(43) Date of publication:
**24.12.2025 Bulletin 2025/52**

(21) Application number: **23927158.8**

(22) Date of filing: **23.11.2023**

(51) International Patent Classification (IPC):
*H04L 45/16* (2022.01)

(52) Cooperative Patent Classification (CPC):
**H04L 45/16**

(86) International application number:
**PCT/CN2023/133808**

(87) International publication number:
**WO 2024/187817 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.03.2023 PCT/CN2023/081172**

(71) Applicant: **Huawei Technologies Co., Ltd.
Shenzhen, Guangdong 518129 (CN)**

(72) Inventors:
• **ZHOU, Weiguang
Shenzhen, Guangdong 518129 (CN)**

• **TAN, Lijuan
Shenzhen, Guangdong 518129 (CN)**
• **GAO, Fei
Shenzhen, Guangdong 518129 (CN)**
• **WANG, Xinyuan
Shenzhen, Guangdong 518129 (CN)**
• **LONG, Hua
Shenzhen, Guangdong 518129 (CN)**
• **LIU, Yan
Shenzhen, Guangdong 518129 (CN)**

(74) Representative: **Maiwald GmbH
Engineering
Elisenhof
Elisenstrasse 3
80335 München (DE)**

(54) **TRANSMISSION METHOD AND APPARATUS, AND DEVICE AND NETWORK**

(57) A transmission method, apparatus, and network, and a device are disclosed. The method is applied to the communication field. A first device and a second device are connected through a port. The method includes: obtaining a packet of a first service stream from a receive buffer; and transmitting the packet of the first service stream through a transmit buffer of a first service virtual shuttle between the first device and the second device based on a router forwarding table. The router forwarding table indicates a packet forwarding rule based on a service virtual shuttle, and the service virtual shuttle is used to support bidirectional transmission of a service stream between two devices. According to the transmission method provided in this application, devices can be freely connected through a port, bidirectional transmission of the service stream is implemented between interconnected devices based on the service virtual shuttle, and the device forwards a packet of the service stream based on the packet forwarding rule that is based on the service virtual shuttle and that is indicated by the router forwarding table, so that free connection and data transmission between the devices are implemented, and flexibility of networking and data transmission between the devices is improved.

[FIG. 8]

EP 4 668 699 A1

**Description**

This application claims priority to Patent Application No. PCT/CN2023/081172, filed with the China National Intellectual Property Administration on March 13, 2023 and entitled "ROUTING METHOD, ROUTING INFORMATION CONFIGURATION METHOD, AND ELECTRONIC DEVICE", which is incorporated herein by reference in its entirety.

TECHNICAL FIELD

This application relates to the communication field, and in particular, to a transmission method, apparatus, and network, and a device.

BACKGROUND

Currently, multimedia devices are interconnected based on a tree topology, and data is transmitted based on a high definition multimedia interface (High Definition Multimedia Interface, HDMI) protocol. With development of an internet of things, there are more multimedia devices, and more information is exchanged between multimedia devices. A connection mode and data transmission between devices based on a conventional tree topology are limited.

SUMMARY

This application provides a transmission method, apparatus, and network, and a device, to improve flexibility of networking and data transmission between devices.

According to a first aspect, a transmission method is provided. A first device and a second device are connected through a port. The method includes: obtaining a packet of a first service stream from a receive buffer; and transmitting the packet of the first service stream through a transmit buffer of a first service virtual shuttle between the first device and the second device based on a router forwarding table. The router forwarding table indicates a packet forwarding rule based on a service virtual shuttle. The service virtual shuttle is used to support bidirectional transmission of a service stream between two devices.

According to the transmission method provided in this application, devices are freely connected through a port, bidirectional transmission of the service stream is implemented between interconnected devices based on the service virtual shuttle, and the device forwards a packet of the service stream based on the packet forwarding rule that is based on the service virtual shuttle and that is indicated by the router forwarding table, so that free connection and data transmission between the devices are implemented, and flexibility of networking and data transmission between the devices is improved.

In a possible implementation, the packet of the first service stream includes a first shuttle identifier, and the first shuttle identifier indicates the first service virtual shuttle.

Therefore, virtual shuttles of different service streams are distinguished based on shuttle identifiers (Shuttle identity, Shuttle ID).

In another possible implementation, a forward bandwidth of the first service virtual shuttle is inconsistent with a reverse bandwidth of the first service virtual shuttle. A forward direction is a direction from the first device to the second device, and a reverse direction is a direction from the second device to the first device.

In this way, transmission of a plurality of types of signals or data can be performed between devices, improving flexibility of data transmission.

In another possible implementation, the service virtual shuttle is a unidirectional virtual shuttle. The forward bandwidth is 0, or the reverse bandwidth is 0.

In another possible implementation, a forward bandwidth of the first service virtual shuttle is consistent with a reverse bandwidth of the first service virtual shuttle.

In another possible implementation, that the first device and the second device are connected through the port includes: the first device and the second device are connected through a unified multimedia interconnection.

In another possible implementation, the first device includes a management adapter, a plurality of service adapters, and a plurality of ports, each port includes a management virtual shuttle and a plurality of service virtual shuttles, and the management adapter and the plurality of service adapters form a virtual port.

In another possible implementation, the router forwarding table includes input stream information and output stream information, the input stream information indicates a port identifier and a shuttle identifier that correspond to an input stream, and the output stream information indicates a target port identifier and a target shuttle identifier that correspond to an output stream.

In another possible implementation, obtaining the packet of the first service stream from the receive buffer includes: obtaining the packet of the first service stream from a receive buffer of a first service adapter in the first device.

The packet of the first service stream is obtained by converting a to-be-transmitted signal or to-be-transmitted data.

In this way, the device sends, through the service virtual shuttle, a packet that is of the service adapter and that is obtained from the service adapter.

In another possible implementation, obtaining the packet of the first service stream from the receive buffer includes: obtaining the packet of the first service stream from a receive buffer of a second service virtual shuttle. A receive port is prohibited from forwarding a packet on a service virtual shuttle in the receive port to another service virtual shuttle in the receive port.

In this way, the device forwards, through another service virtual shuttle, a packet received from one service virtual shuttle.

In another possible implementation, the method further includes: forwarding the packet of the first service stream to a transmit buffer of a second service adapter in the first device based on the router forwarding table.

In this way, the device forwards the obtained packet to the service adapter, and converts the packet into a signal or data.

In another possible implementation, the first service adapter and the second service adapter in the first device form a virtual channel. Packet transmission between adapters is implemented.

In another possible implementation, the router forwarding table indicates a plurality of pieces of output stream information, and the method further includes: transmitting the packet of the first service stream through a transmit buffer of a third service virtual shuttle indicated by the router forwarding table. When a packet of the same service stream is forwarded to another port, the port includes a maximum of one service virtual shuttle.

In another possible implementation, a virtual channel between two adapters includes a plurality of cascaded virtual shuttles, and the virtual channel supports bidirectional transmission.

In this way, a multicast function of the device based on the service virtual shuttle is implemented.

In another possible implementation, the router forwarding table further includes a receiver count, and the receiver count indicates a quantity of virtual channels on which a service virtual shuttle is used.

In this way, the device forwards the packet based on the receiver count.

In another possible implementation, the method further includes: transmitting a packet of a second service stream through a transmit buffer of a fourth service virtual shuttle based on the router forwarding table. The first service virtual shuttle and the fourth service virtual shuttle belong to a same port.

In this way, a plurality of service streams can be transmitted through a plurality of virtual shuttles on a same link.

In another possible implementation, the method further includes: obtaining a first management packet from the management virtual shuttle, and forwarding the first management packet to the management adapter in the first device.

In another possible implementation, the method further includes: obtaining a second management packet from the management adapter in the first device, and forwarding the second management packet to a management virtual shuttle in a port specified by the management adapter in the first device.

In this way, forwarding of a management packet between devices is implemented.

According to a second aspect, a transmission network is provided. The transmission network includes a first device, a second device, and a router device, and the first device, the second device, and the router device are connected through ports.

The first device is configured to transmit a packet of a first service stream with the second device through the router device. The packet of the first service stream is obtained by converting first data.

The first device is further configured to transmit a packet of a second service stream with the second device through the router device. The packet of the second service stream is obtained by converting second data.

The second device is configured to transmit a packet of a third service stream with the first device through the router device. The packet of the third service stream is obtained by converting third data.

In a possible implementation, the first device is further configured to obtain the packet of the first service stream from a receive buffer of a first service adapter in the first device; and the first device is further configured to obtain the packet of the second service stream from a receive buffer of a second service adapter in the first device.

In another possible implementation, the first device is specifically configured to transmit the packet of the first service stream to the router device through a transmit buffer of a first service virtual shuttle based on a first router forwarding table. The first service virtual shuttle is a virtual shuttle between the first device and the router device, the router forwarding table indicates a packet forwarding rule based on a service virtual shuttle, and the service virtual shuttle is used to support bidirectional transmission of a service stream between two devices.

The router device is configured to receive the packet of the first service stream through a receive buffer of the first service virtual shuttle.

The router device is further configured to transmit the packet of the first service stream to the second device through a transmit buffer of a second service virtual shuttle based on a second router forwarding table. The second service virtual shuttle is a virtual shuttle between the router device and the second device.

The second device is specifically configured to receive the packet of the first service stream through a receive buffer of the second service virtual shuttle.

The second device is further configured to forward the packet of the first service stream to a receive buffer of a service adapter in the second device based on a third router forwarding table, and the service adapter restores the first service stream to a signal or data.

In another possible implementation, the first device is specifically configured to transmit the packet of the second service stream to the router device through a transmit buffer of a third service virtual shuttle based on the first router forwarding table. The third service virtual shuttle is a virtual shuttle between the first device and the router device.

The router device is further configured to receive the packet of the second service stream through a receive buffer of the third service virtual shuttle.

The router device is further configured to transmit the packet of the second service stream to the second device through a transmit buffer of a fourth service virtual shuttle based on the second router forwarding table. The fourth service virtual shuttle is a virtual shuttle between the router device and the second device.

The second device is specifically configured to receive the packet of the second service stream through a receive buffer of the fourth service virtual shuttle.

The second device is further configured to forward the packet of the second service stream to a receive buffer of a service adapter in the second device based on the third router forwarding table.

In another possible implementation, the second device is further configured to obtain the packet of the third service stream from a receive buffer of a third service adapter in the second device.

In another possible implementation, the second device is specifically configured to transmit the packet of the third service stream to the router device through a transmit buffer of a fifth service virtual shuttle based on the third router forwarding table. The fifth service virtual shuttle is a virtual shuttle between the second device and the router device.

The router device is further configured to receive the packet of the third service stream through a receive buffer of the fifth service virtual shuttle.

The router device is further configured to transmit the packet of the third service stream to the first device through a transmit buffer of a sixth service virtual shuttle based on the second router forwarding table. The sixth service virtual shuttle is a virtual shuttle between the router device and the first device.

The first device is specifically configured to receive the packet of the third service stream through a receive buffer of the sixth service virtual shuttle.

The first device is further configured to forward the packet of the third service stream to a receive buffer of a service adapter in the first device based on the first router forwarding table.

According to a third aspect, a transmission network is provided. The transmission network includes a first device, a second device, and a third device, and the first device, the second device, and the third device are connected through ports.

The first device is configured to obtain a packet of a first service stream from a receive buffer of a service adapter in the first device. The packet of the first service stream is obtained by converting first data.

The first device is further configured to transmit the packet of the first service stream to the second device through a transmit buffer of a first service virtual shuttle based on a first router forwarding table. The router forwarding table indicates a packet forwarding rule based on a service virtual shuttle, and the service virtual shuttle is used to support bidirectional transmission of a service stream between two devices.

The second device is configured to receive the packet of the first service stream through a receive buffer of the first service virtual shuttle.

The second device is further configured to transmit the packet of the first service stream to the third device through a transmit buffer of a second service virtual shuttle based on a second router forwarding table.

The second device is further configured to forward the packet of the first service stream to a receive buffer of a service adapter in the second device based on the second router forwarding table, and the service adapter restores the first service stream to a signal or data.

The third device is configured to receive the packet of the first service stream through a receive buffer of the second service virtual shuttle.

The third device is further configured to forward the packet of the first service stream to a receive buffer of a service adapter in the third device based on a third router forwarding table, and the service adapter restores the first service stream to the signal or data.

According to a fourth aspect, a transmission network is provided. The transmission network includes a first device, a second device, a third device, and a plurality of router devices, the first device, the second device, the third device, and the plurality of router devices are connected through ports, and the first device is configured to perform operation steps of the method according to any one of the first aspect or the possible implementations of the first aspect.

In a possible implementation, a network topology of the transmission network is a star topology or a mesh topology.

According to a fifth aspect, a transmission apparatus is provided, including modules that perform operation steps of the method according to any one of the first aspect or the possible implementations of the first aspect. For example, the transmission apparatus includes a receiving module and a sending module.

The receiving module is configured to obtain a packet of a first service stream from a receive buffer.

The sending module is configured to transmit the packet of the first service stream through a transmit buffer of a first service virtual shuttle based on a router forwarding table. The first service virtual shuttle is a virtual shuttle between a first device and a second device, the router forwarding table indicates a packet forwarding rule based on a service virtual shuttle, and the service virtual shuttle is used to support bidirectional transmission of a service stream between two devices.

In a possible implementation, the packet of the first service stream includes a first shuttle identifier, and the first shuttle identifier indicates the first service virtual shuttle.

In another possible implementation, a forward bandwidth of the first service virtual shuttle is inconsistent with a reverse bandwidth of the first service virtual shuttle. A forward direction is a direction from the first device to the second device, and a reverse direction is a direction from the second device to the first device.

In another possible implementation, the service virtual shuttle is a unidirectional virtual shuttle. The forward bandwidth is 0, or the reverse bandwidth is 0.

In another possible implementation, a forward bandwidth of the first service virtual shuttle is consistent with a reverse bandwidth of the first service virtual shuttle.

In another possible implementation, that the first device and the second device are connected through the port includes: the first device and the second device are connected through a unified multimedia interconnection.

In another possible implementation, the first device includes a management adapter, a plurality of service adapters, and a plurality of ports, each port includes a management virtual shuttle and a plurality of service virtual shuttles, and the management adapter and the plurality of service adapters form a virtual port.

In another possible implementation, the router forwarding table includes input stream information and output stream information, the input stream information indicates a port identifier and a shuttle identifier that correspond to an input stream, and the output stream information indicates a target port identifier and a target shuttle identifier that correspond to an output stream.

In another possible implementation, when obtaining the packet of the first service stream from the receive buffer, the receiving module is specifically configured to obtain the packet of the first service stream from a receive buffer of a first service adapter in the first device. The packet of the first service stream is obtained by converting a to-be-transmitted signal or to-be-transmitted data.

In another possible implementation, when obtaining the packet of the first service stream from the receive buffer, the receiving module is specifically configured to obtain the packet of the first service stream from a receive buffer of a second service virtual shuttle. A receive port is prohibited from forwarding a packet on a service virtual shuttle in the receive port to another service virtual shuttle in the receive port.

In another possible implementation, the sending module is further configured to forward the packet of the first service stream to a transmit buffer of a second service adapter in the first device based on the router forwarding table.

In another possible implementation, the first service adapter and the second service adapter in the first device form a virtual channel.

In another possible implementation, the router forwarding table indicates a plurality of pieces of output stream information, and the sending module is further configured to transmit the packet of the first service stream through a transmit buffer of a third service virtual shuttle indicated by the router forwarding table. When a packet of the same service stream is forwarded to another port, the port includes a maximum of one service virtual shuttle.

In another possible implementation, a virtual channel between two adapters includes a plurality of cascaded virtual shuttles, and the virtual channel supports bidirectional transmission.

In another possible implementation, the router forwarding table further includes a receiver count, and the receiver count indicates a quantity of virtual channels on which a service virtual shuttle is used.

In another possible implementation, the sending module is further configured to transmit a packet of a second service stream through a transmit buffer of a fourth service virtual shuttle based on the router forwarding table. The first service virtual shuttle and the fourth service virtual shuttle belong to a same port.

In another possible implementation, the receiving module is further configured to obtain a first management packet from the management virtual shuttle, and the sending module is further configured to forward the first management packet to the management adapter in the first device.

In another possible implementation, the receiving module is further configured to obtain a second management packet from the management adapter in the first device, and the sending module is further configured to forward the second management packet to a management virtual shuttle in a port specified by the management adapter in the first device.

According to a sixth aspect, an electronic device is provided. The electronic device includes a storage and a processor, the storage is configured to store a group of computer instructions, and when the processor executes the group of computer instructions, the processor performs operation steps of the method according to any one of the first aspect or the possible implementations of the first aspect.

According to a seventh aspect, a chip is provided, including one or more interface circuits and one or more processors. The interface circuit is configured to: receive a signal from a storage of an electronic device, and send the signal to the processor, the signal includes computer instructions stored in the storage, and when the processor executes the computer instructions, the processor is enabled to perform operation steps of the method according to any one of the first aspect or the possible implementations of the first aspect.

According to an eighth aspect, a computer-readable storage medium is provided. The computer-readable storage medium stores a computer program, and when the computer program is run on a computer or a processor, the computer or the processor is enabled to perform operation steps of the method according to any one of the first aspect or the possible implementations of the first aspect.

For technical effect brought by any design manner in the second aspect to the eighth aspect, refer to technical effect brought by the first aspect or different design manners in the first aspect. Details are not described herein again.

Based on the implementations provided in the foregoing aspects, implementations in this application may be further combined to provide more implementations.

This application provides a routing method, a routing information configuration method, and an electronic device. In the routing method, a packet can be multicast (to be specific, a packet of a same data stream is multicast to a plurality of receivers), so that a data stream multicast service can be implemented quickly and effectively, and resources (for example, bandwidth resources and device resources) can be further saved.

According to a ninth aspect, an embodiment of this application provides a routing method. The method includes: reading a packet from a first buffer, where the first buffer corresponds to a source port that receives the packet; determining a plurality of pieces of target output stream information based on routing information, a first port identifier of the source port, and a first shuttle identifier that is of a source and that is obtained from a packet header of the packet, where the routing information includes a plurality of output stream information groups, one output stream information group includes a plurality of pieces of output stream information, and one output stream information group corresponds to one shuttle of one port; determining a plurality of target ports and a plurality of target shuttles based on the plurality of pieces of target output stream information, where the plurality of target ports are in one-to-one correspondence with the plurality of target shuttles, and one piece of target output stream information is used to determine one target port and one target shuttle; and adding the packet to a plurality of second buffers, where one second buffer corresponds to one target port.

Because the routing information includes a plurality of pieces of output stream information corresponding to one shuttle of one port, one piece of output stream information may be used to determine one port and one shuttle. Therefore, after the plurality of pieces of target output stream information are read from the routing information based on the first port identifier and the first shuttle identifier of the source shuttle, the plurality of target ports and the plurality of target shuttles may be determined, and subsequently, the packet may be multicast based on the plurality of target ports and the plurality of target shuttles. That is, a same packet is simultaneously sent to a plurality of devices. Compared with the conventional technology, in the routing method in this application, there is no need to add another device, perform data backhaul, or send a plurality of data streams, so that a data stream multicast service can be implemented quickly and effectively, and resources can be further saved.

For example, a shuttle (namely, a shuttle) may be a bidirectional virtual shuttle used to transmit all packets of a same data stream between two ports (namely, two ports between two directly connected end devices) on a same physical link. The shuttle identifier may also be referred to as a shuttle ID. For example, in this application, all adapters (Adapter) in the end device are combined to form a virtual port (Port 0), one adapter is one shuttle in the port, and an adapter identifier adapter ID of the adapter is a shuttle ID.

For example, the source port may be a port that receives a packet sent by another end device/an apparatus in the end device, the source shuttle may be a shuttle that receives the packet sent by the another end device/the apparatus in the end device, and the source shuttle may be one of a plurality of shuttles of the source port.

In a possible manner, one receive buffer (RBuff) and one transmit buffer (SBuff) may be established for one or more shuttles with a high priority based on priorities of the shuttles. A quantity of receive buffers included in each port is less than a quantity of shuttles included in the port, and a quantity of transmit buffers included in each port is less than the quantity of shuttles included in the port. For example, the first buffer is a receive buffer corresponding to the source port, and the second buffer is a transmit buffer corresponding to the source port.

In a possible manner, one receive buffer and one transmit buffer may be established for each shuttle. A quantity of receive buffers included in each port is the same as a quantity of shuttles included in the port, and a quantity of receive buffers included in each port is the same as a quantity of shuttles included in the port. In this case, the first buffer may be a receive buffer (RBuff) corresponding to a source shuttle of a source port, and the second buffer may be a transmit buffer (SBuff) corresponding to the target shuttle of the target port. In this application, an example in which one shuttle corresponds to one receive buffer and one transmit buffer is used for description.

For example, the target port may be a port used to send a packet to another end device/an apparatus in the end device, the target shuttle may be a shuttle used to send the packet to the another end device/the apparatus in the end device, and the target shuttle may be one of the plurality of shuttles of the target ports.

For example, one port may be uniquely determined based on one port identifier, and one shuttle may be uniquely determined based on one port identifier and one shuttle identifier.

For example, the routing information may further include a plurality of pieces of input stream information, and one shuttle of one port may correspond to one piece of input stream information. A packet in the second buffer may be scheduled based on the input stream information in a process of sending the packet to the another end device/the apparatus in the end device.

For example, it is assumed that the end device includes M ports, and quantities of shuttles corresponding to the M ports are N1, N2, N3, ..., and NM. Any two values of N1, N2, N3, ..., and NM may be the same or different. This is not limited in this application. For example, routing information in the end device may include M input stream information sets and M output stream information sets that correspond to the M ports. One port corresponds to one input stream information set and one output stream information set. M, N1, N2, N3, ..., and NM each are a positive integer.

For example, for a $k^{th}$ (k is a positive integer between 1 and M, including 1 and M) port, if the $k^{th}$ port corresponds to Nk shuttles, one input stream information set corresponding to the $k^{th}$ port may include Nk pieces of input stream information (the input stream information may also be referred to as an input stream node). One output stream information set corresponding to the $k^{th}$ port may include Nk output stream information groups (the output stream information group may be referred to as an output stream linked list), and each output stream information group includes one or more pieces of output stream information (the output stream information may also be referred to as an output stream node). One shuttle in the $k^{th}$ port may correspond to one piece of input stream information in the input stream information set corresponding to the $k^{th}$ port, and may correspond to one output stream information group in the output stream information set corresponding to the $k^{th}$ port. One piece of input stream information corresponding to one shuttle in the $k^{th}$ port and a $1^{st}$ piece of output stream information in the corresponding output stream information group may be referred to as an entry node. One piece of input stream information corresponding to one shuttle in the $k^{th}$ port and the corresponding output stream information group may be referred to as a routing entry. The routing information may include a plurality of routing entries.

For example, the input stream information may be used to describe a feature of a data stream received by a port, for example, a data stream priority, a data stream scheduling weight, a data stream bandwidth, whether to enable stream control, and whether to use a shared buffer.

For example, the output stream information may be used to describe a feature related to the port (which may include related information about the port and the corresponding shuttle, a related feature of a corresponding transmit buffer, and the like).

It should be understood that, in a possible case, a part of output stream information groups of the routing information include only one piece of output stream information. When only one piece of target output stream information is determined based on the first port identifier, the first shuttle identifier, and the routing information, it may be determined that the packet is to be unicast. In this case, one target port and one target shuttle may be determined based on the target output stream information, and then the packet is added to the second buffer corresponding to the target port.

For example, both the source port and the target port may be a unified multimedia interconnection interface (Unified MultiMedia Interconnection, UMI), and the UMI interface is a high-speed interface. The UMI interface may be a transmission interface used for an ultra-high definition video signal/audio signal, supports a third-party protocol tunnel transmission function, and further supports a power supply function between devices. The unified multimedia interconnection interface (Unified MultiMedia Interconnection, UMI) may also be referred to as a unified multimedia interconnection.

For example, the UMI interface supports a direct connection between a source device (for example, a set-top box) and a sink device (for example, a television)/a docking station; or supports a multi-device networking connection. The source device and the sink device/the docking station may be networked by using a router device or a composite device.

For example, the UMI interface supports bidirectional transmission of audio/video data/third-party protocol data. To be specific, when the source device transmits the audio/video data/third-party protocol data to the sink device/the docking station, the source device may also receive audio/video data/third-party protocol data returned by the sink device/the docking station.

According to the ninth aspect, the routing information includes first routing information and second routing information, the first routing information includes a $1^{st}$ piece of output stream information in the output stream information group, the second routing information includes other output stream information in the output stream information group, and the plurality of pieces of target output stream information include a $1^{st}$ piece of output stream information corresponding to the packet and other output stream information corresponding to the packet; and determining the plurality of pieces of target output stream information based on the routing information, the first port identifier of the source port, and the first shuttle identifier that is of the source shuttle and that is obtained from the packet header of the packet includes: reading the $1^{st}$ piece of output stream information corresponding to the packet from the first routing information based on the first shuttle identifier and the first port identifier; and reading other output stream information corresponding to the packet from the second routing information based on the 1st piece of output stream information corresponding to the packet. In this way, routing efficiency can be improved, so that the target port and the target shuttle can be determined quickly.

For example, the other output stream information is output stream information in the output stream information group other than the 1st piece of output stream information.

For example, the first routing information may include a plurality of entry nodes. For example, first address information may be calculated based on the first shuttle identifier and the first port identifier, and then the 1st piece of output stream information corresponding to the packet is read from an entry node stored in the first address information.

According to any one of the ninth aspect or the implementations of the ninth aspect, the 1st piece of output stream information corresponding to the packet includes first identification information, and reading the other output stream information corresponding to the packet from the second routing information based on the 1st piece of output stream information corresponding to the packet includes: when it is determined, based on the first identification information, that the other output stream information corresponding to the packet exists in the second routing information, reading the other output stream information corresponding to the packet from the second routing information based on the first identification information. Compared with a case in which the second routing information is directly queried, in this application, when it is determined that the other output stream information corresponding to the packet exists in the second routing information, the other output stream information corresponding to the packet is read from the second routing information, so that time of querying the second routing information can be reduced, an invalid query can be avoided, and efficiency of determining the other output stream information corresponding to the packet can be improved.

For example, second address information may be calculated based on the first identification information, and then information stored in the second address information is read, to obtain the other output stream information corresponding to the packet.

According to any one of the ninth aspect or the implementations of the ninth aspect, reading the other output stream information corresponding to the packet from the second routing information based on the first identification information includes: reading an $i^{th}$ piece of output stream information corresponding to the packet from the second routing information based on the first identification information, where the $i^{th}$ piece of output stream information includes second identification information, and an initial value of i is 2; determining, based on the second identification information included in the $i^{th}$ piece of output stream information, whether an $(i+1)^{th}$ piece of output stream information corresponding to the packet exists in the second routing information; when it is determined, based on the second identification information included in the $i^{th}$ piece of output stream information, that the $(i+1)^{th}$ piece of output stream information corresponding to the packet exists in the second routing information, reading the $(i+1)^{th}$ piece of output stream information corresponding to the packet from the second routing information based on the second identification information included in the $i^{th}$ piece of output stream information, where the $(i+1)^{th}$ piece of output stream information corresponding to the packet includes the second identification information; and increasing i by 1, and returning to perform the step of determining, based on the second identification information included in the $i^{th}$ piece of output stream information, whether the $(i+1)^{th}$ piece of output stream information corresponding to the packet exists in the second routing information. In this way, whether a next piece of output stream information exists in the second routing information is determined based on a current piece of output stream information, and when it is determined that the next piece of output stream information corresponding to the packet exists in the second routing information, the next piece of output stream information is read from the second routing information, so that time of querying the second routing information can be reduced, an invalid query can be avoided, and efficiency of determining the other output stream information corresponding to the packet can be improved.

According to any one of the ninth aspect or the implementations of the ninth aspect, adding the packet to the plurality of second buffers includes: copying the packet to a second buffer corresponding to a first target port, and forwarding the packet to a second buffer corresponding to a second target port. The second target port is a last target port, and the first target port is a port in the plurality of target ports other than the second target port. In this way, the packet can be multicast.

According to any one of the ninth aspect or the implementations of the ninth aspect, the target output stream information includes a second port identifier and a second shuttle identifier, and determining the plurality of target ports and the plurality of target shuttles based on the plurality of pieces of target output stream information includes: determining the plurality of target ports based on a plurality of second port identifiers included in the plurality of pieces of target output stream information; and determining one target shuttle from a plurality of shuttles of one target port based on one second shuttle identifier included in one piece of target output stream information.

According to any one of the ninth aspect or the implementations of the ninth aspect, the method further includes: when the first identification information is preset information, determining that the other output stream information corresponding to the packet does not exist in the second routing information; or when the first identification information is address information, determining that the other output stream information corresponding to the packet exists in the second routing information.

For example, the first identification information may represent whether the other output stream information corresponding to the packet exists in the second routing information.

For example, the address information may be used to determine an address of the other output stream information corresponding to the packet. For example, the address information may be a pointer used to point to the address of the other output stream information corresponding to the packet. When the first identification information is address information, the first identification information may be further used to determine the address of the other output stream information corresponding to the packet.

For example, the preset information may be 0, or may be another value. This is not limited in this application.

It should be understood that the second identification information in the $i^{th}$ piece of output stream information may represent whether the $(i+1)^{th}$ piece of output stream information corresponding to the packet exists in the second routing information.

According to any one of the ninth aspect or the implementations of the ninth aspect, the method further includes: when it is determined, based on the first identification information, that the other output stream information corresponding to the packet does not exist in the second routing information, determining a $1^{st}$ target port and a $1^{st}$ target shuttle based on the $1^{st}$ piece of output stream information corresponding to the packet, where the $1^{st}$ target port corresponds to the $1^{st}$ target shuttle; and forwarding the packet to a second buffer corresponding to the $1^{st}$ target port. In this way, the packet can be unicast.

According to any one of the ninth aspect or the implementations of the ninth aspect, the packet is a packet of multimedia data.

It should be understood that the packet may alternatively be a packet of other data, for example, a packet of the third-party protocol data. This is not limited in this application.

According to a tenth aspect, an embodiment of this application provides a routing information configuration method. The method includes: determining an input stream port and a plurality of output stream ports corresponding to the input stream port; and for a $j^{th}$ output stream port in the plurality of output stream ports: configuring a first preset field in a $j^{th}$ piece of output stream information in an output stream information group based on a port identifier of the $j^{th}$ output stream port, and configuring a second preset field in the $j^{th}$ piece of output stream information based on a shuttle identifier of an output stream shuttle of the $j^{th}$ output stream port, where the output stream information group corresponds to an input stream shuttle of the input stream port; and when the $j^{th}$ output stream port is not a last output stream port, configuring a third preset field in the $j^{th}$ piece of output stream information based on address information of a $(j+1)^{th}$ piece of output stream information in the output stream information group; or when the $j^{th}$ output stream port is a last output stream port, configuring a third preset field in the $j^{th}$ piece of output stream information based on preset information.

It should be understood that, when the input stream port corresponds to one output stream port, a first preset field in one piece of output stream information in the output stream information group may be configured based on a port identifier of the output stream port; a second preset field in the output stream information is configured based on a shuttle identifier of an output stream shuttle of the output stream port; and a third preset field in the output stream information is configured based on the preset information. The output stream information group corresponds to the input stream shuttle of the input stream port.

For example, the address information of the $(j+1)^{th}$ piece of output stream information may be used to determine an address of the $(j+1)^{th}$ piece of output stream information, for example, may be a value of a pointer used to point to the address of the $(j+1)^{th}$ piece of output stream information.

It should be understood that the output stream information may further include another preset field. The another preset field in the output stream information may be further configured in a routing information configuration process. This is not limited in this application.

It should be understood that, a preset field included in input stream information may also be configured in the routing information configuration process.

For example, in any one of the ninth aspect or the implementations of the ninth aspect, a second port identifier may be extracted from a first preset field in target output stream information, a second shuttle identifier may be extracted from a second preset field in the target output stream information, and second identification information/first identification information may be extracted from a third preset field in the target output stream information.

According to an eleventh aspect, an embodiment of this application provides a routing apparatus. The routing apparatus may include:

a packet reading module, configured to read a packet from a first buffer, where the first buffer corresponds to a source port that receives the packet;
a routing module, configured to determine a plurality of pieces of target output stream information based on routing information, a first port identifier of the source port, and a first shuttle identifier that is of a source shuttle and that is obtained from a packet header of the packet, where the routing information includes a plurality of output stream information groups, one output stream information group includes a plurality of pieces of output stream information, and one output stream information group corresponds to one shuttle of one port;
a port and shuttle determining module, configured to determine a plurality of target ports and a plurality of target shuttles based on the plurality of pieces of target output stream information, where the plurality of target ports are in one-to-one correspondence with the plurality of target shuttles, and one piece of target output stream information is used to determine one target port and one target shuttle; and

a packet addition module, configured to add the packet to a plurality of second buffers, where one second buffer corresponds to one target port.

It should be understood that the routing apparatus can perform the routing method according to any one of the ninth aspect or the possible implementations of the ninth aspect.

Any one of the eleventh aspect and the implementations of the eleventh aspect corresponds to any one of the ninth aspect and the implementations of the ninth aspect respectively. For technical effect corresponding to any one of the eleventh aspect and the implementations of the eleventh aspect, refer to technical effect corresponding to any one of the ninth aspect and the implementations of the ninth aspect. Details are not described herein again.

According to a twelfth aspect, an embodiment of this application provides a routing information configuration apparatus. The routing information configuration apparatus may include: a port determining module, configured to determine an input stream port and a plurality of output stream ports corresponding to the input stream port; and

a configuration module, configured to: for a jth output stream port in the plurality of output stream ports: configure a first preset field in a jth piece of output stream information in an output stream information group based on a port identifier of the $j^{th}$ output stream port, and configure a second preset field in the $j^{th}$ piece of output stream information based on a shuttle identifier of an output stream shuttle of the $j^{th}$ output stream port, where the output stream information group corresponds to an input stream shuttle of the input stream port; and when the $j^{th}$ output stream port is not a last output stream port, configure a third preset field in the $j^{th}$ piece of output stream information based on address information of a $(j+1)^{th}$ piece of output stream information in the output stream information group; or when the $j^{th}$ output stream port is a last output stream port, configure a third preset field in the $j^{th}$ piece of output stream information based on preset information.

According to a thirteenth aspect, an embodiment of this application provides an electronic device, including a storage and a processor. The storage is coupled to the processor. The storage stores program instructions. When the program instructions are executed by the processor, the electronic device is enabled to perform the routing method according to any one of the ninth aspect or the possible implementations of the ninth aspect.

Any one of the thirteenth aspect and the implementations of the thirteenth aspect corresponds to any one of the ninth aspect and the implementations of the ninth aspect respectively. For technical effect corresponding to any one of the thirteenth aspect and the implementations of the thirteenth aspect, refer to the technical effect corresponding to any one of the ninth aspect and the implementations of the ninth aspect. Details are not described herein again.

According to a fourteenth aspect, an embodiment of this application provides an electronic device, including a storage and a processor. The storage is coupled to the processor. The storage stores program instructions. When the program instructions are executed by the processor, the electronic device is enabled to perform the routing information configuration method according to any one of the tenth aspect or the possible implementations of the tenth aspect.

Any one of the fourteenth aspect and the implementations of the fourteenth aspect corresponds to any one of the tenth aspect and the implementations of the tenth aspect respectively. For technical effect corresponding to any one of the fourteenth aspect and the implementations of the fourteenth aspect, refer to technical effect corresponding to any one of the tenth aspect and the implementations of the tenth aspect. Details are not described herein again.

According to a fifteenth aspect, an embodiment of this application provides a chip, including one or more interface circuits and one or more processors. The interface circuit is configured to: receive a signal from a storage of an electronic device, and send the signal to the processor. The signal includes computer instructions stored in the storage. When the processor executes the computer instructions, the electronic device is enabled to perform the routing method according to any one of the ninth aspect or the possible implementations of the ninth aspect.

Any one of the fifteenth aspect and the implementations of the fifteenth aspect corresponds to any one of the ninth aspect and the implementations of the ninth aspect respectively. For technical effect corresponding to any one of the fifteenth aspect and the implementations of the fifteenth aspect, refer to the technical effect corresponding to any one of the ninth aspect and the implementations of the ninth aspect. Details are not described herein again.

According to a sixteenth aspect, an embodiment of this application provides a chip, including one or more interface circuits and one or more processors. The interface circuit is configured to: receive a signal from a storage of an electronic device, and send the signal to the processor. The signal includes computer instructions stored in the storage. When the processor executes the computer instructions, the electronic device is enabled to perform the routing information configuration method according to any one of the tenth aspect or the possible implementations of the tenth aspect.

Any one of the sixteenth aspect and the implementations of the sixteenth aspect corresponds to any one of the tenth aspect and the implementations of the tenth aspect respectively. For technical effect corresponding to any one of the sixteenth aspect and the implementations of the sixteenth aspect, refer to technical effect corresponding to any one of the tenth aspect and the implementations of the tenth aspect. Details are not described herein again.

According to a seventeenth aspect, an embodiment of this application provides a computer storage medium. The computer-readable storage medium stores a computer program. When the computer program is run on a computer or a processor, the computer or the processor is enabled to perform the routing method according to any one of the ninth aspect or the possible implementations of the ninth aspect.

Any one of the seventeenth aspect and the implementations of the seventeenth aspect corresponds to any one of the ninth aspect and the implementations of the ninth aspect respectively. For technical effect corresponding to any one of the seventeenth aspect and the implementations of the seventeenth aspect, refer to the technical effect corresponding to any one of the ninth aspect and the implementations of the ninth aspect. Details are not described herein again.

According to an eighteenth aspect, an embodiment of this application provides a computer storage medium. The computer-readable storage medium stores a computer program. When the computer program is run on a computer or a processor, the computer or the processor is enabled to perform the routing information configuration method according to any one of the tenth aspect or the possible implementations of the tenth aspect.

Any one of the eighteenth aspect and the implementations of the eighteenth aspect corresponds to any one of the tenth aspect and the implementations of the tenth aspect respectively. For technical effect corresponding to any one of the eighteenth aspect and the implementations of the eighteenth aspect, refer to the technical effect corresponding to any one of the tenth aspect and the implementations of the tenth aspect. Details are not described herein again.

According to a nineteenth aspect, an embodiment of this application provides a computer program product. The computer program product includes a software program, and when the software program is executed by a computer or a processor, steps of the routing method according to any one of the ninth aspect or the possible implementations of the ninth aspect are performed.

Any one of the nineteenth aspect and the implementations of the nineteenth aspect corresponds to any one of the ninth aspect and the implementations of the ninth aspect respectively. For technical effect corresponding to any one of the nineteenth aspect and the implementations of the nineteenth aspect, refer to the technical effect corresponding to any one of the ninth aspect and the implementations of the ninth aspect. Details are not described herein again.

According to a twentieth aspect, an embodiment of this application provides a computer program product. The computer program product includes a software program, and when the software program is executed by a computer or a processor, steps of the routing information configuration method according to any one of the tenth aspect or the possible implementations of the tenth aspect are performed.

Any one of the twentieth aspect and the implementations of the twentieth aspect corresponds to any one of the tenth aspect and the implementations of the tenth aspect respectively. For technical effect corresponding to any one of the twentieth aspect and the implementations of the twentieth aspect, refer to the technical effect corresponding to any one of the tenth aspect and the implementations of the tenth aspect. Details are not described herein again.

BRIEF DESCRIPTION OF DRAWINGS

FIG. 1 is a diagram of an adapter according to this application;
FIG. 2 is a diagram of a virtual shuttle according to this application;
FIG. 3 is a diagram of a virtual channel according to this application;
FIG. 4 is a diagram of multicast according to this application;
FIG. 5 is a diagram of a virtual port according to this application;
FIG. 6 is a diagram of forwarding a packet by a router according to this application;
FIG. 7 is a diagram of a receiver count according to this application;
FIG. 8 is a schematic flowchart of a transmission method according to this application;
FIG. 9 is a diagram of a structure of a transmission network according to this application;
FIG. 10 is a diagram of a structure of another transmission network according to this application;
FIG. 11 is a diagram of a structure of another transmission network according to this application;
FIG. 12 is a diagram of a structure of a transmission apparatus according to this application;
FIG. 13 is a diagram of a structure of a computer device according to this application;
FIG. 14a is a diagram of an example shuttle;
FIG. 14b is a diagram of an example channel;
FIG. 14c is a diagram of an example end device;
FIG. 14d is a diagram of an example end device;
FIG. 15a is a diagram of an example application scenario;
FIG. 15b is a diagram of an example application scenario;
FIG. 16a is a diagram of example routing information;
FIG. 16b is a diagram of example routing information;

FIG. 17a is a diagram of an example data structure of input stream information;

FIG. 17b is a diagram of an example data structure of output stream information;

FIG. 18a is a diagram of an example routing information configuration process;

FIG. 18b is a diagram of an example data structure of configured output stream information;

FIG. 18c is a diagram of an example data structure of configured output stream information;

FIG. 18d is a diagram of an example data structure of configured output stream information;

FIG. 18e is a diagram of an example data structure of configured output stream information;

FIG. 19a is a diagram of an example data structure of configured input stream information;

FIG. 19b is a diagram of an example data structure of configured input stream information;

FIG. 20 is a diagram of an example routing process;

FIG. 21A and FIG. 21B are a diagram of an example routing process;

FIG. 22 is a diagram of a structure of an example routing apparatus;

FIG. 23 is a diagram of a structure of an example routing information configuration apparatus; and

FIG. 24 is a diagram of a structure of an example apparatus.

DESCRIPTION OF EMBODIMENTS

For ease of understanding, main terms in this application are first explained.

An adapter (Adapter) is responsible for completing mutual conversion between a packet and a signal/data (for example, audio/video data, management and control information, and third-party protocol data) of an external component.

For example, adapters are classified into a plurality of types of adapters including three types: a management adapter, an audio/video adapter, and a third-party protocol adapter (for example, a universal serial bus (Universal Serial Bus, USB) adapter). The management adapter may also be referred to as a management and control adapter. The audio/video adapter may also be referred to as an audio/video signal adapter.

The management adapter is a special adapter, and is an entity that discovers, manages, and configures a network.

The management adapter provides functions such as device management, port management, bandwidth management, device control, and content protection.

Audio/Video adapters are classified into an audio/video transmit adapter and an audio/video receive adapter. The audio/video transmit adapter obtains audio/video data from an audio/video source component, and encapsulates the audio/video data into an audio/video packet format, to form an audio/video service stream. A router forwards the audio/video service stream to a corresponding port. The port processes the audio/video service stream to generate a signal. The signal is transferred to a router of a peer device through a connector and a cable.

The router is further responsible for obtaining the audio/video service stream restored by the port, and forwarding the audio/video service stream to the corresponding audio/video receive adapter for processing. A process in which the port restores the audio/video service stream is as follows: 1. Obtain a signal from the peer device. 2. Restore signals on all shuttles to a data stream. 3. Restore the data stream to the audio/video service stream.

The third-party protocol adapter receives third-party protocol data from a third-party protocol (for example, a USB or a high-speed serial computer expansion bus standard (Peripheral Component Interconnect express, PCIe)) component, and encapsulates the third-party protocol data into a third-party protocol packet, to form a third-party protocol service stream. A router forwards the third-party protocol service stream to a corresponding port, and the port processes the third-party protocol service stream to generate a signal. The signal is transferred to a router of a peer device through a connector and a cable. The router is further responsible for obtaining the third-party protocol service stream restored by the port, and forwarding the third-party protocol service stream to a corresponding third-party protocol adapter for processing. After obtaining the third-party protocol data through processing, the third-party protocol adapter sends the third-party protocol data to the third-party protocol component.

Table 1 shows definitions of an adapter type, a version, and a subtype provided in this application.

Table 1

| Adapter name | Type | Version | Subtype |
|---|---|---|---|
| Reserved | 00h | 00h | 00h |
| Management adapter | 01h | 01h | 00h |
| Audio/Video transmit adapter | 02h | 01h | 01h |
| Audio/Video receive adapter | 02h | 01h | 02h |
| USB3.0 downstream adapter | 03h | 01h | 01h |

(continued)

| Adapter name | Type | Version | Subtype |
|---|---|---|---|
| USB3.0 upstream adapter | 03h | 01h | 02h |

Adapters of a same type and a same version can communicate with each other. The subtypes are used to identify different adapters of a same type and a same version. The subtype 01 represents a transmit adapter in a unidirectional stream, and represents a downstream adapter in a bidirectional stream. The subtype 02 represents a receive adapter in the unidirectional stream, and represents an upstream adapter in the bidirectional stream. The subtype 00 represents that an adapter may serve as a transmit adapter in the unidirectional stream, or may serve as a receive adapter, or an upstream adapter and a downstream adapter in the bidirectional stream.

An adapter identifier (Adapter ID) of the management adapter is 0. An adapter other than a management adapter in a device is a service adapter, which is responsible for converting an external service signal and data into a packet or converting a packet into an external service signal or data. For example, service adapters include the audio/video adapter and the third-party protocol adapter.

If a manufacturer needs to customize an adapter type, the manufacturer applies for the adapter type and a version, and defines a subtype based on an upstream/downstream adapter or a transmit/receive adapter.

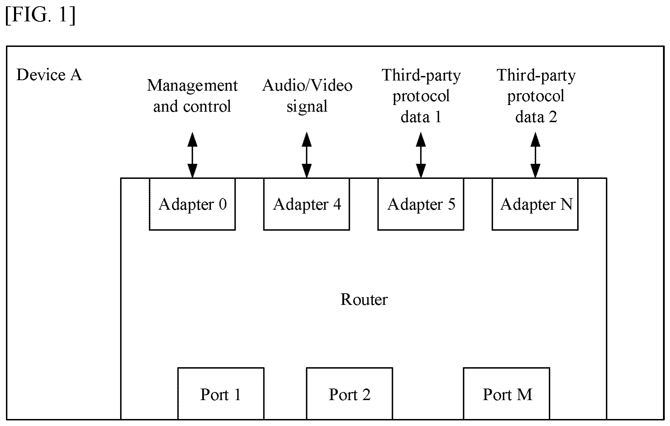

For example, FIG. 1 is a diagram of an adapter according to this application. A device A includes N adapters. An adapter 0 is configured to be responsible for mutual conversion between management and control information and a packet. An adapter 4 is configured to be responsible for mutual conversion between an audio/video signal and a packet. An adapter 5 is configured to be responsible for mutual conversion between third-party protocol data 1 and a packet. An adapter N is configured to be responsible for mutual conversion between third-party protocol data 2 and a packet. The adapter 0 is a management adapter. The adapter 4 to the adapter N are service adapters.

The device not only may include the management adapter and the plurality of service adapters, but also may include a plurality of ports. The adapter converts a to-be-transmitted signal or to-be-transmitted data into a packet. The packet is transmitted to a target device through a port and a network, and is restored to the data or the signal by an adapter in the target device.

The port is used to transmit a high-speed signal by an audio/video device, a third-party device (for example, a USB/PCIe/Ethernet device), or the like. The port provides the following capabilities:

audio/video bidirectional transmission, which meets an audio/video transmission requirement of a device such as a television, a personal computer (Personal Computer, PC), or a mobile phone, and supports audio/video content transmission protection, visual lossless compression, and the like;

third-party protocol data transmission, which implements interaction between the device and the third-party protocol device, where a third-party protocol may be USB3, and subsequently, Ethernet, PCIe, and the like will be supported; and

bidirectional power supply, which meets a power supply requirement of an electronic device whose power does not exceed 480 W.

Virtual shuttle (Shuttle): Packets of a same service stream that are transmitted on a link form the virtual shuttle. One port may include a plurality of virtual shuttles. A plurality of service streams can be transmitted through a plurality of virtual shuttles on a same link. Virtual shuttles of different service streams are distinguished by using shuttle identifiers (Shuttle ID). The virtual shuttle may also be referred to as a shuttle. The shuttle identifier may also be referred to as a shuttle identifier. The shuttle identifier (Shuttle ID) may also be referred to as a virtual shuttle identifier.

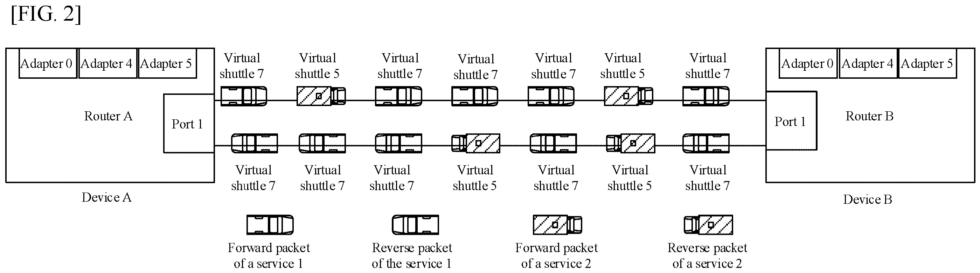

As shown in FIG. 2, a packet of a service stream 1 is transmitted through a virtual shuttle whose shuttle identifier is 7, and a packet of a service stream 2 is transmitted through a virtual shuttle whose shuttle identifier is 5.

The virtual shuttle supports bidirectional data transmission. For example, as shown in FIG. 2, a device A transmits the packet of the service stream 1 to a device B through a virtual shuttle 7 in a port 1 of the device A, and the device B transmits the packet of the service stream 1 to the device A through a virtual shuttle 7 in a port 1 of the device B. The device B transmits a packet of a service stream 2 to the device A through a virtual shuttle 5 in the port 1 of the device B, and the device A transmits the packet of the service stream 2 to the device B through a virtual shuttle 5 in the port 1 of the device A.

In this application, it is allowed that bidirectional bandwidths of a same virtual shuttle are inconsistent. In particular, when a bandwidth of a virtual shuttle in a direction is greater than 0, and a bandwidth in the other direction is 0, the virtual shuttle is a unidirectional virtual shuttle. For example, when a forward bandwidth of the virtual shuttle is greater than 0, and a reverse bandwidth is 0, the virtual shuttle is a unidirectional virtual shuttle. For another example, when a reverse bandwidth of the virtual shuttle is greater than 0, and a forward bandwidth is 0, the virtual shuttle is a unidirectional virtual shuttle. A forward direction may be a direction from the device A to the device B, and a reverse direction may be a direction from the device B to the device A.

Optionally, it is allowed that bidirectional bandwidths of a same virtual shuttle are consistent.

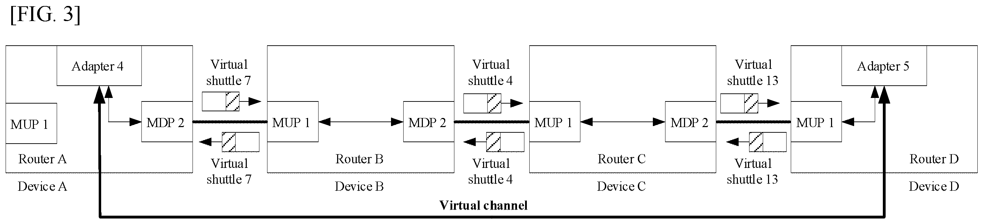

Virtual channel (Channel): One or more virtual shuttles are cascaded to form a virtual channel between two adapters. For example, as shown in FIG. 3, a bold line represents a virtual channel from an adapter 4 of a device A to an adapter 5 of a device D. The virtual channel includes three virtual shuttles, namely, a virtual shuttle whose shuttle identifier is 7 between the device A and a device B, a virtual shuttle whose shuttle identifier is 4 between the device B and a device C, and a virtual shuttle whose shuttle identifier is 13 between the device C and the device D.

In this application, the virtual channel is a bidirectional channel. A direction from an adapter whose subtype is 01 to an adapter whose subtype is 02 is defined as a forward direction, and a direction from the adapter whose subtype is 02 to the adapter whose subtype is 01 is a reverse direction. Bidirectional bandwidths of the virtual channel may be inconsistent. A unidirectional virtual channel is actually a special virtual channel whose reverse bandwidth is 0. The unidirectional virtual channel may be a virtual channel whose reverse bandwidth is 0.

In some embodiments, the virtual channel may be represented by using a quadruplet, for example, (device identifier, adapter identifier, device identifier, adapter identifier). For example, as shown in FIG. 3, the virtual channel may be represented as (device A, adapter 4, device D, adapter 5).

A virtual shuttle of a port may be represented by using a 2-tuple, for example, (port identifier, shuttle identifier) or [Port ID, Shuttle ID]. For example, [5, 7] represents a virtual shuttle 7 in a port 5 in a router. [1, 4] represents a virtual shuttle 4 in a port 1 in the router.

An adapter may be represented by using a 2-tuple, for example, [0, Adapter ID]. For ease of description, Adapter ID and Shuttle ID are not distinguished subsequently. When the port identifier is 0, Shuttle ID is Adapter ID. For example, [0, 4] represents an adapter whose adapter identifier is 4 in the router, or [0, 4] may represent a virtual shuttle 4 in a port 0 in the router.

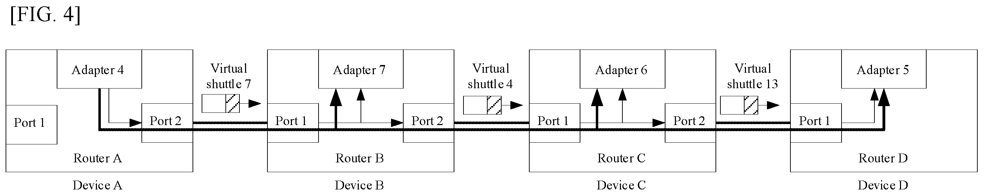

In this application, a device supports a multicast function, and a data/video stream generated by a same transmit adapter may be transmitted to a plurality of receive adapters. For example, as shown in FIG. 4, an adapter 4 of a device A sends a service stream, an adapter 7 of a device B receives the service stream, an adapter 6 of a device C receives the service stream, and an adapter 5 of a device D receives the service stream. Three corresponding virtual channels include (device A, adapter 4, device B, adapter 7), (device A, adapter 4, device C, adapter 6), and (device A, adapter 4, device D, adapter 5).

During multicast, one virtual shuttle may be used by a plurality of virtual channels. As shown in FIG. 4, a virtual shuttle whose shuttle identifier is 7 between the device A and the device B is used by the foregoing three virtual channels.

In some embodiments, the adapter is logically equivalent to the virtual shuttle. In other words, the adapter logically serves as the virtual shuttle. For simplicity of a model, all adapters in a router form a virtual port, and each adapter is a virtual shuttle in the virtual port. The adapter identifier (Adapter ID) may also be replaced with the shuttle identifier (Shuttle ID). For example, the port 0 in the router serves as the virtual port. A port 1 to a port n in the router serve as physical ports.

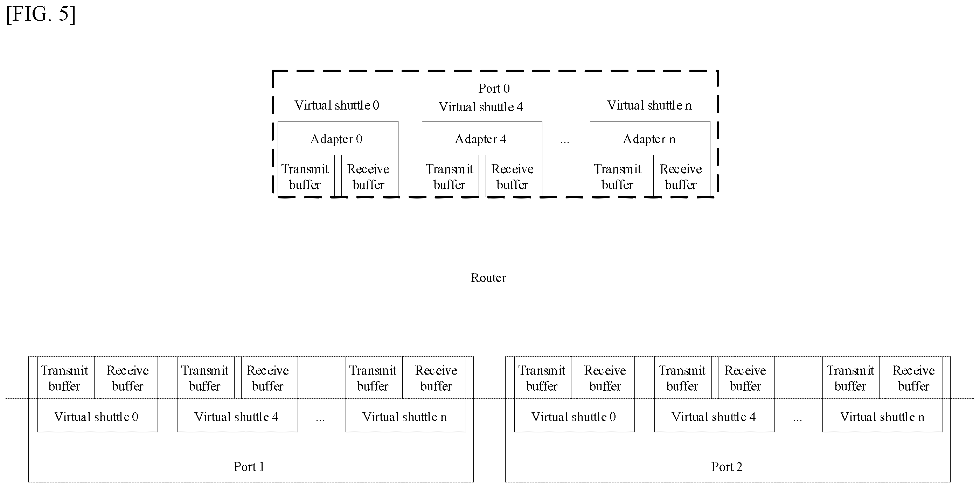

For example, as shown in FIG. 5, the router includes n adapters, the n adapters form a virtual port, and the virtual port serves as a port 0 (port 0). The router may further include another physical port. For example, the router includes the port 1 and a port 2.

In some embodiments, each port may include n virtual shuttles. In the port, a virtual shuttle 0 serves as a management virtual shuttle, and a virtual shuttle 1 to a virtual shuttle 3 are reserved for future expansion. A virtual shuttle 4 to a virtual shuttle n serve as service virtual shuttles. The service virtual shuttle is used to transmit a packet of a service stream. The management virtual shuttle is used to transmit a transport layer management data packet (TLMDP) of a management adapter.

The router is a component responsible for traffic management and routing. The router may obtain a packet from a receive buffer (RBuff) of the adapter or a receive buffer (RBuff) of the virtual shuttle, and then forward the packet to a transmit buffer (TBuff) of another adapter or a transmit buffer (TBuff) of a virtual shuttle.

In some embodiments, during forwarding of the packet, the router may obtain the packet from the receive buffer (RBuff), and send the packet to a transmit buffer (TBuff) corresponding to the receive buffer based on a router forwarding table.

For example, a packet is obtained from the receive buffer (RBuff) of the adapter (Adapter), and the packet is sent to a transmit buffer (TBuff) of a corresponding virtual shuttle in a corresponding port based on the router forwarding table.

For another example, a packet is obtained from the receive buffer (RBuff) of the adapter (Adapter), and the packet is sent to a transmit buffer (TBuff) of another adapter based on the router forwarding table.

For another example, a packet is obtained from a receive buffer (Rbuff) of a virtual shuttle in a port, and the packet is sent to a transmit buffer (TBuff) of the adapter based on the router forwarding table.

For another example, a packet is obtained from a receive buffer (Rbuff) of a virtual shuttle in a port, and the packet is sent to a transmit buffer (TBuff) of a virtual shuttle in another port based on the router forwarding table.

It should be noted that the router is used as a reference for both the receive buffer (RBuff) and the transmit buffer (TBuff). A buffer that is of the router and that is responsible for receiving is RBuff, and a buffer that is of the router and that is responsible for sending is TBuff. The receive buffer of the adapter is a buffer of data sent by the router to the adapter. The transmit buffer of the adapter is a buffer of data received by the router from the adapter.

The router forwarding table indicates a packet forwarding rule based on a service virtual shuttle, namely, a rule of forwarding a packet received from an input stream virtual shuttle to an output stream virtual shuttle. The router forwarding table includes input stream information and output stream information. One router forwarding entry may be represented by {input stream information|output stream information}.

The input stream information includes a single input stream node. The input stream information is used to describe a port identifier and a shuttle identifier that correspond to an input stream.

The output stream information includes one or more output stream nodes. The output stream information is used to describe related information such as a target port identifier and a target shuttle identifier of a forwarded packet.

For example, Table 2 shows a router forwarding table.

Table 2

| Input stream information | Output stream information |
| --- | --- |
| [0, 4] | [1, n] and [2, 4] |
| [1, n] | [0, 4] |
| [2, 4] | [0, 4] |
| [1, 4] | [2, n] |
| [2, n] | [1, 4] |

As shown in Table 2, the router forwarding table includes five router forwarding entries. The 1st router forwarding entry is represented as {[0, 4]|[1, n], [2, 4]}. The input stream information includes only one input stream node [0, 4], indicating that the packet is received from a receive buffer of an adapter 4 in the router; and the output stream information includes two output stream nodes: [1, n] and [2, 4], indicating that the router needs to simultaneously forward the packet to a transmit buffer of a virtual shuttle n in a port 1 and a transmit buffer of a virtual shuttle 4 in a port 2.

The 2nd router forwarding entry is represented as {[1, n]|[0, 4]}. The input stream information includes an input stream node [1, n], indicating that the packet is received from a receive buffer of the virtual shuttle n in the port 1 in the router. The output stream information includes an output stream node [0, 4], indicating that the router forwards the packet to a transmit buffer of the adapter 4.

The 3rd router forwarding entry is represented as {[2, 4]|[0,4]}. The input stream information includes an input stream node [2, 4], indicating that the packet is received from a receive buffer of the virtual shuttle 4 in the port 2 in the router. The output stream information includes an output stream node [0, 4], indicating that the router forwards the packet to a transmit buffer of the adapter 4.

The 4th router forwarding entry is represented as {[1, 4]|[2, n]}. The input stream information includes an input stream node [1, 4], indicating that the packet is received from a receive buffer of a virtual shuttle 4 in the port 1 in the router. The output stream information includes an output stream node [2, n], indicating that the router forwards the packet to a transmit buffer of a virtual shuttle n in the port 2.

The 5th router forwarding entry is represented as {[2, n]|[1, 4]}. The input stream information includes an input stream node [2, n], indicating that the packet is received from a receive buffer of the virtual shuttle n in the port 2 in the router. The output stream information includes an output stream node [1, 4], indicating that the router forwards the packet to a transmit buffer of the virtual shuttle 4 in the port 1.

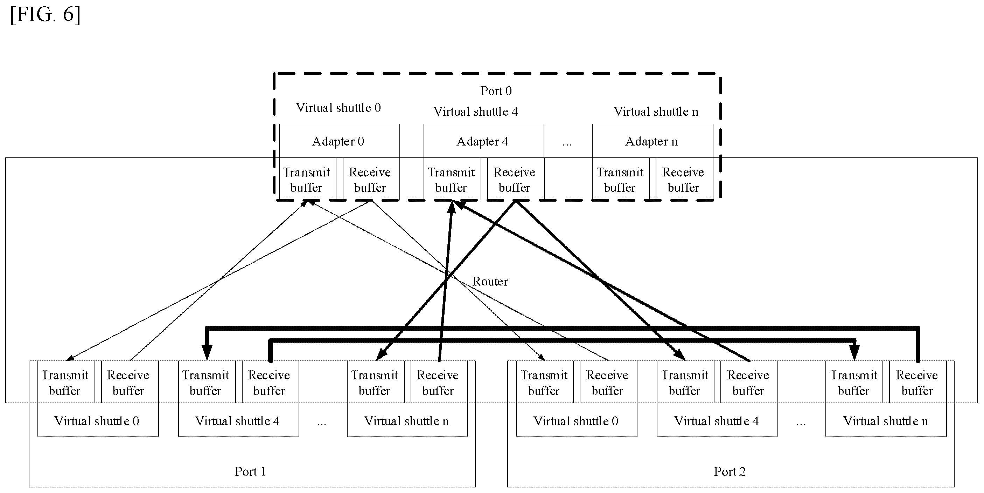

FIG. 6 is a diagram of forwarding a packet by a router according to this application. The router forwards the packet based on a routing rule described in Table 2.

It should be noted that, the packet may be forwarded through two service virtual shuttles in a port 0. To be specific, the router may forward the packet from a receive buffer of one service virtual shuttle in the port 0 to a transmit buffer of another service virtual shuttle in the port 0 based on a routing rule of a router forwarding table. Another port in the router cannot forward a packet on a service virtual shuttle in the port to another service virtual shuttle in the port. In other words, a receive port is prohibited from forwarding a packet on a service virtual shuttle in the receive port to another service virtual shuttle in the receive port.

In addition, when a packet on a same service virtual shuttle is forwarded to another port, a maximum of one service virtual shuttle exists in the port. To be specific, the receive port forwards the packet on the service virtual shuttle in the receive port to another service virtual shuttle in a transmit port, and forwards the packet to a maximum of one service virtual shuttle in the transmit port. For example, in the 1st router forwarding entry in Table 2, when the packet is forwarded from the service virtual shuttle [0, 4] to the port 1, there is a maximum of one service virtual shuttle [1, n], and the packet cannot be forwarded to another service virtual shuttle in the port 1.

In this application, a device supports a multicast function. When the device uses the multicast function, one service virtual shuttle may be used by a plurality of virtual channels. To facilitate management of the router forwarding table, a receiver count (ReceiverCount) is added in an output stream node to describe a quantity of virtual channels that use a service virtual shuttle, namely, a quantity of devices that receive a service stream corresponding to the virtual shuttle through a target port. After the receiver count is increased, output stream information changes from a 2-tuple [Port, Shuttle ID] to a triplet [Port, Shuttle ID, ReceiverCount].

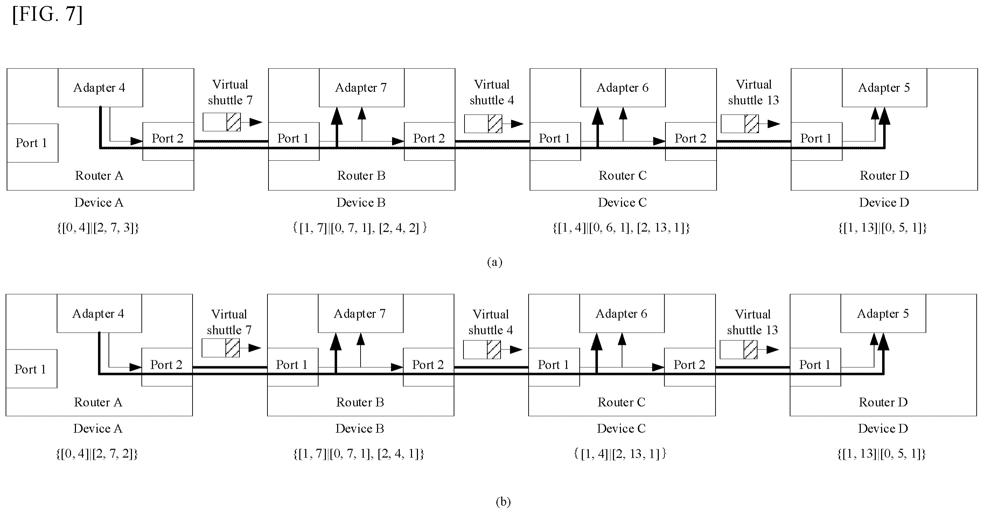

For example, as shown in (a) in FIG. 7, a device A, a device B, a device C, and a device D are cascaded. A router forwarding entry {[0, 4]|[2, 7, 3]} in the device A indicates that a virtual shuttle 7 in a target port 2 in the device A has three receivers, that is, is jointly used by three virtual channels. When a virtual channel (device A, adapter 4, device C, adapter 6) is released, a receiver count of the virtual channel in the forwarding node [2, 7, 3] in the router forwarding entry in the device A is decreased by 1, a receiver count in a forwarding node [2, 4, 2] in a router forwarding entry in the device B is decreased by 1, and a receiver count in a forwarding node [0, 6, 1] in a router forwarding entry in the device C is decreased by 1. If the receiver count is not 0 after being decreased by 1, it indicates that the router forwarding entry includes another receiver and the forwarding node does not need to be deleted; or if the receiver count is 0 after being decreased by 1, it indicates that the forwarding node includes no receiver and the forwarding node needs to be deleted. (b) in FIG. 7 shows a router forwarding entry after the virtual channel (device A, adapter 4, device C, adapter 6) is released.

It should be noted that the foregoing provides merely an example. In an actual implementation, information related to stream management such as a priority, a scheduling weight, a bandwidth, whether to enable stream control, and whether to use a shared buffer may be further added in an input stream node and an output stream node. This is not limited in this application.

The foregoing describes a forwarding rule of a packet of a service stream. This application further provides the following forwarding rule of forwarding a management packet by a router.

A transport layer management data packet received from a management virtual shuttle in a port that is not the port 0 is directly forwarded to a management adapter of this router for processing, and is not forwarded to another port.

When generating a new transport layer management data packet, the management adapter needs to simultaneously provide a forwarding output port of the packet. The router sends the transport layer management data packet to a management virtual shuttle in a port specified by the management adapter.

In this application, devices may be directly connected through a port, or may be connected through a router. A system including a plurality of connected devices is referred to as a transmission network.

The following describes a transmission method provided in this application.

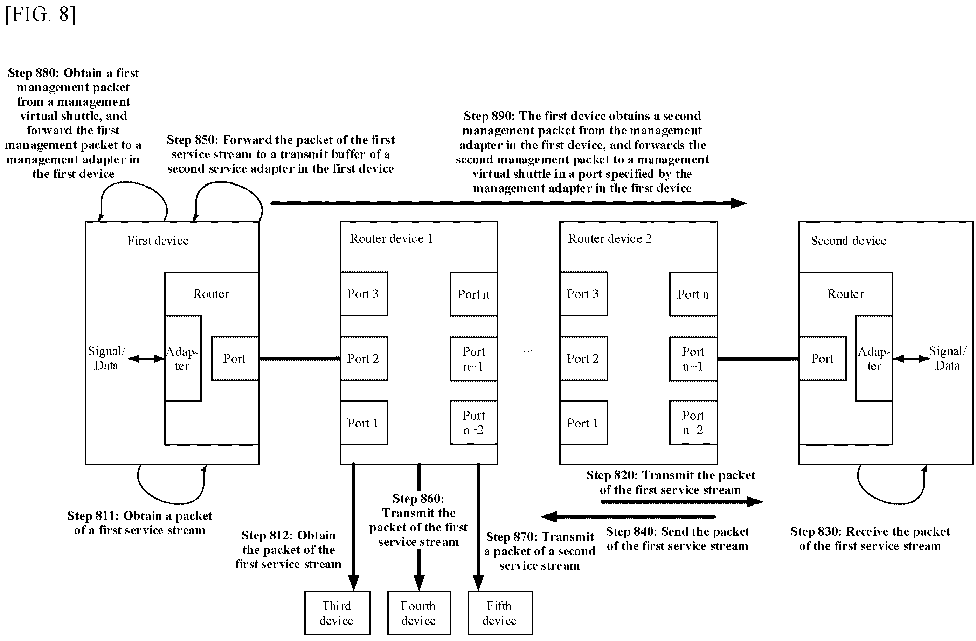

FIG. 8 is a schematic flowchart of a transmission method according to this application. Herein, an example in which a first device and a second device are connected through a port is used for description. As shown in FIG. 8, the method includes the following steps.

Step 810: The first device obtains a packet of a first service stream from a receive buffer.

The first device may obtain the packet of the first service stream from a receive buffer of a service adapter (step 811). For example, a first service adapter in the first device generates the packet that is of the first service stream and that is obtained by converting a to-be-transmitted signal or to-be-transmitted data. The first device obtains the packet of the first service stream from a receive buffer of the first service adapter in the first device.

The first device may obtain the packet of the first service stream from a receive buffer of a service virtual shuttle (step 812). For example, the first device may be further connected to a third device through a port, and the first device receives, through a second service virtual shuttle, the packet that is of the first service stream and that is sent by the third device, and obtains the packet of the first service stream from a receive buffer of the second service virtual shuttle.

Step 820: The first device transmits the packet of the first service stream through a transmit buffer of the first service virtual shuttle based on a router forwarding table.

The router forwarding table indicates a packet forwarding rule based on the service virtual shuttle. The service virtual shuttle is used to support bidirectional transmission of a service stream between two devices. The first device determines, based on the router forwarding table, to transmit the packet of the first service stream through the first service virtual shuttle. The first service virtual shuttle is a virtual shuttle between the first device and the second device. In this case, the first device transmits the packet of the first service stream through the transmit buffer of the first service virtual shuttle based on the router forwarding table. For example, the first packet of the first service stream is forwarded to the transmit buffer of the first service virtual shuttle, and the first packet of the first service stream is forwarded to the second device through the first service virtual shuttle.

It should be noted that, a receive port is prohibited from forwarding a packet on a service virtual shuttle in the receive port to another service virtual shuttle in the receive port. For example, the first service virtual shuttle and the second service virtual shuttle belong to different ports in the first device.

The packet of the first service stream includes a first shuttle identifier, and the first shuttle identifier indicates the first service virtual shuttle.

Step 830: The second device receives the packet of the first service stream through a receive buffer of the first service virtual shuttle.

Step 840: The second device sends the packet of the first service stream through the transmit buffer of the first service virtual shuttle.

The second device receives the first packet of the first service stream through the receive buffer of the first service virtual shuttle, and sends the second packet of the first service stream through the transmit buffer of the first service virtual shuttle.

Optionally, the first device may further forward the packet of the first service stream to a transmit buffer of a second service adapter in the first device based on the router forwarding table (step 850).

It should be noted that, because the adapter is logically equivalent to the virtual shuttle. In other words, the adapter is considered as the virtual shuttle. In this case, two service adapters may form a virtual channel. For example, the first service adapter and the second service adapter in the first device form a virtual channel.

Optionally, the router forwarding table indicates a plurality of pieces of output stream information. The first device may be further connected to a fourth device through a port. In this case, the first device transmits the packet of the first service stream through a transmit buffer of a third service virtual shuttle indicated by the router forwarding table (step 860). In other words, the third service virtual shuttle is a virtual shuttle between the first device and the fourth device, and the first device transmits the packet of the first service stream to the fourth device through the third service virtual shuttle.

It should be noted that when a packet of the same service stream is forwarded to another port, the port includes a maximum of one service virtual shuttle.

Optionally, the first device may be further connected to a fifth device through a port. The first device transmits a packet of a second service stream through a transmit buffer of a fourth service virtual shuttle based on the router forwarding table (step 870). In other words, the fourth service virtual shuttle is a virtual shuttle between the first device and the fifth device, and the first device transmits the packet of the second service stream to the fifth device through the fourth service virtual shuttle. The first service virtual shuttle and the fourth service virtual shuttle belong to a same port.

Optionally, the first device obtains a first management packet from a management virtual shuttle, and forwards the first management packet to a management adapter in the first device (step 880). For example, the first device obtains the first management packet from a receive buffer of a virtual shuttle 0 in a port 1, and forwards the first management packet to a transmit buffer of a virtual shuttle 0 in a port 0 in the first device.

Optionally, the first device obtains a second management packet from the management adapter in the first device, and forwards the second management packet to a management virtual shuttle in a port specified by the management adapter in the first device (step 890). For example, the first device obtains the second management packet from a receive buffer of the virtual shuttle 0 in the port 0 in the first device, and forwards the second management packet to a transmit buffer of the virtual shuttle 0 in the port 1 in the first device.

In some embodiments, another device may be further connected between the first device and the second device. A virtual channel between the adapter in the first device and an adapter in the second device may include a plurality of cascaded virtual shuttles, and the virtual channel supports bidirectional transmission. The router forwarding table further includes a receiver count.

The following describes an example of a structure of a transmission network.

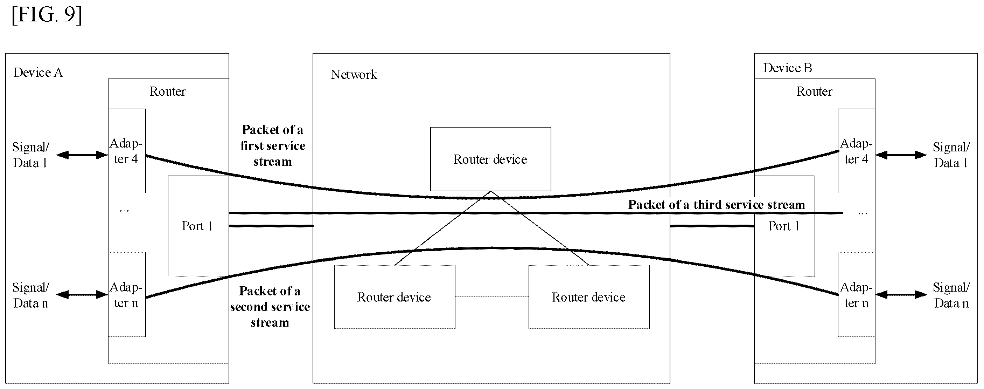

FIG. 9 is a diagram of a structure of a transmission network according to this application. As shown in FIG. 9, the transmission network includes a device A, a device B, and a router device, and the device A, the device B, and the router device are connected through ports.

The device A is configured to transmit a packet of a first service stream with the device B through the router device. The packet of the first service stream is obtained by converting first data.

The device A is further configured to transmit a packet of a second service stream with the device B through the router device. The packet of the second service stream is obtained by converting second data.

The device B is configured to transmit a packet of a third service stream with the device A through the router device. The packet of the third service stream is obtained by converting third data.

The device A is further configured to obtain the packet of the first service stream from a receive buffer of a first service adapter in the device A.

The device A is further configured to obtain the packet of the second service stream from a receive buffer of a second service adapter in the device A.

The device A is specifically configured to transmit the packet of the first service stream to the router device through a transmit buffer of a first service virtual shuttle based on a first router forwarding table. The first service virtual shuttle is a virtual shuttle between the device A and the router device, the router forwarding table indicates a packet forwarding rule based on a service virtual shuttle, and the service virtual shuttle is used to support bidirectional transmission of a service stream between two devices.

The router device is configured to receive the packet of the first service stream through a receive buffer of the first service virtual shuttle.

The router device is further configured to transmit the packet of the first service stream to the device B through a transmit buffer of a second service virtual shuttle based on a second router forwarding table. The second service virtual shuttle is a virtual shuttle between the router device and the device B.

The device B is specifically configured to receive the packet of the first service stream through a receive buffer of the second service virtual shuttle.

The device B is further configured to forward the packet of the first service stream to a receive buffer of a service adapter in the device B based on a third router forwarding table, and the service adapter restores the first service stream to a signal or data.

The device A is specifically configured to transmit the packet of the second service stream to the router device through a transmit buffer of a third service virtual shuttle based on the first router forwarding table. The third service virtual shuttle is a virtual shuttle between the device A and the router device.

The router device is further configured to receive the packet of the second service stream through a receive buffer of the third service virtual shuttle.

The router device is further configured to transmit the packet of the second service stream to the device B through a transmit buffer of a fourth service virtual shuttle based on the second router forwarding table. The fourth service virtual shuttle is a virtual shuttle between the router device and the device B.

The device B is specifically configured to receive the packet of the second service stream through a receive buffer of the fourth service virtual shuttle.

The device B is further configured to forward the packet of the second service stream to a receive buffer of a service adapter in the device B based on the third router forwarding table.

The device B is further configured to obtain the packet of the third service stream from a receive buffer of a third service adapter in the device B.

The device B is specifically configured to transmit the packet of the third service stream to the router device through a transmit buffer of a fifth service virtual shuttle based on the third router forwarding table. The fifth service virtual shuttle is a virtual shuttle between the device B and the router device.

The router device is further configured to receive the packet of the third service stream through a receive buffer of the fifth service virtual shuttle.

The router device is further configured to transmit the packet of the third service stream to the device A through a transmit buffer of a sixth service virtual shuttle based on the second router forwarding table. The sixth service virtual shuttle is a virtual shuttle between the router device and the device A.

The device A is specifically configured to receive the packet of the third service stream through a receive buffer of the sixth service virtual shuttle.

The device A is further configured to forward the packet of the third service stream to a receive buffer of a service adapter in the device A based on the first router forwarding table.

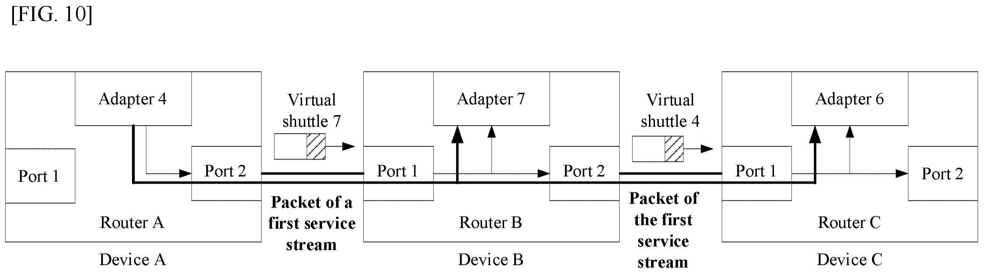

FIG. 10 is a diagram of a structure of a transmission network according to this application. As shown in FIG. 10, the transmission network includes a device A, a device B, and a device C, and the device A, the device B, and the device C are connected through ports.

The device A is configured to obtain a packet of a first service stream from a receive buffer of a service adapter in the device A. The packet of the first service stream is obtained by converting first data.

The device A is further configured to transmit the packet of the first service stream to the device B through a transmit buffer of a first service virtual shuttle based on a first router forwarding table. The router forwarding table indicates a packet forwarding rule based on a service virtual shuttle, and the service virtual shuttle is used to support bidirectional transmission of a service stream between two devices.

The device B is configured to receive the packet of the first service stream through a receive buffer of the first service virtual shuttle.

The device B is further configured to transmit the packet of the first service stream to the device C through a transmit buffer of a second service virtual shuttle based on a second router forwarding table.

The device B is further configured to forward the packet of the first service stream to a receive buffer of a service adapter in the device B based on the second router forwarding table, and the service adapter restores the first service stream to a signal or data.

The device C is configured to receive the packet of the first service stream through a receive buffer of the second service virtual shuttle.

The device C is further configured to forward the packet of the first service stream to a receive buffer of a service adapter in the device C based on a third router forwarding table, and the service adapter restores the first service stream to a signal or data.

In some other embodiments, the transmission network includes a first device, a second device, a third device, and a plurality of router devices, and the first device, the second device, the third device, and the plurality of router devices are connected through ports. The device is configured to perform the steps of the method in the foregoing embodiments. A network topology of the transmission network is a star topology or a mesh topology.

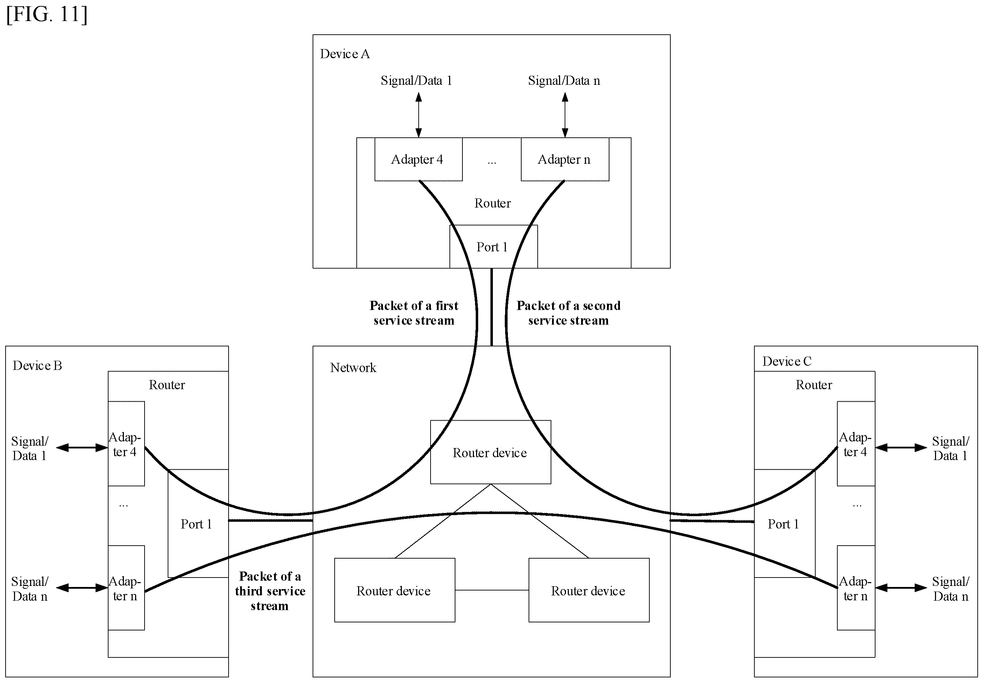

FIG. 11 is a diagram of a structure of a transmission network according to this application. As shown in FIG. 11, the transmission network includes a device A, a device B, a device C, and a plurality of router devices, and the device A, the device B, the device C, and the router devices are connected through ports.

A packet of a first service stream is transmitted between the device A and the device B through the router device.

A packet of a second service stream is transmitted between the device A and the device C through the router device.

A packet of a third service stream is transmitted between the device B and the device C through the router device.

For a transmission mode of the packet of the service stream, refer to the description in the foregoing embodiments. Details are not described again.

It may be understood that to implement functions in the foregoing embodiments, the device includes corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

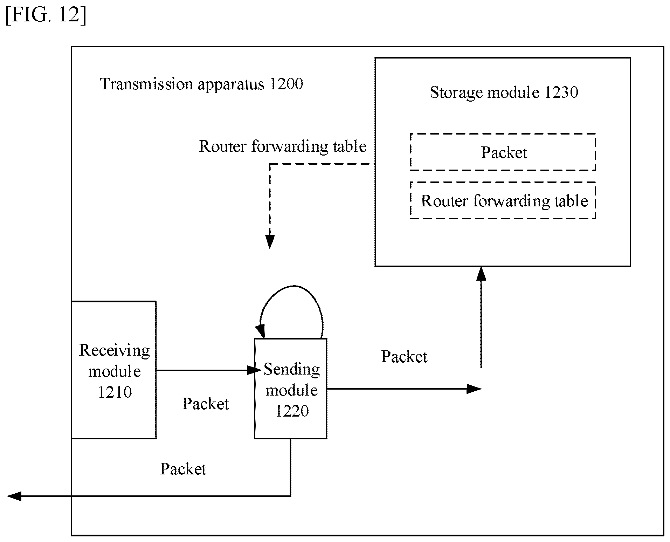

The foregoing describes in detail the transmission method/network provided in this application with reference to FIG. 1 to FIG. 11. The following describes an apparatus provided in this application with reference to FIG. 12. The apparatus may be configured to implement functions of the device in the method embodiments, and therefore can also implement beneficial effect of the method embodiments. In this embodiment, the apparatus may be the device shown in FIG. 1, or may be a module (for example, a chip) used in the device.

As shown in FIG. 12, a transmission apparatus 1200 includes a receiving module 1210, a sending module 1220, and a storage module 1230. The transmission apparatus 1200 is configured to implement functions of the device in the method embodiment shown in FIG. 8.

The receiving module 1210 is configured to obtain a packet of a first service stream from a receive buffer. For example, the receiving module 1210 is configured to perform step 810 in FIG. 8.

The sending module 1220 is configured to transmit the packet of the first service stream through a transmit buffer of a first service virtual shuttle based on a router forwarding table. The first service virtual shuttle is a virtual shuttle between a first device and a second device, the router forwarding table indicates a packet forwarding rule based on a service virtual shuttle, and the service virtual shuttle is used to support bidirectional transmission of a service stream between two devices. For example, the sending module 1220 is configured to perform step 820 in FIG. 8.

Optionally, the receiving module 1210 is specifically configured to obtain the packet of the first service stream from a receive buffer of a first service adapter in the first device. The packet of the first service stream is obtained by converting a to-be-transmitted signal or to-be-transmitted data.

Optionally, the receiving module 1210 is specifically configured to obtain the packet of the first service stream from a receive buffer of a second service virtual shuttle. A receive port is prohibited from forwarding a packet on a service virtual shuttle in the receive port to another service virtual shuttle in the receive port.

Optionally, the sending module 1220 is further configured to forward the packet of the first service stream to a transmit buffer of a second service adapter in the first device based on the router forwarding table.

Optionally, the sending module 1220 is further configured to transmit the packet of the first service stream through a transmit buffer of a third service virtual shuttle indicated by the router forwarding table. When a packet of the same service stream is forwarded to another port, the port includes a maximum of one service virtual shuttle.

Optionally, the sending module 1220 is further configured to transmit a packet of a second service stream through a transmit buffer of a fourth service virtual shuttle based on the router forwarding table. The first service virtual shuttle and the fourth service virtual shuttle belong to a same port.

The storage module 1230 is configured to store the packet and the router forwarding table.

It should be understood that the transmission apparatus 1200 in this embodiment of this application may be implemented by using an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the transmission method shown in FIG. 8 is implemented by using software, the transmission apparatus 1200 and modules thereof may also be software modules.

The transmission apparatus 1200 in this embodiment of this application may correspondingly perform the method described in embodiments of this application, and the foregoing and other operations and/or functions of the modules in the transmission apparatus 1200 are separately used to implement corresponding procedures of the method in FIG. 8. For brevity, details are not described herein again.

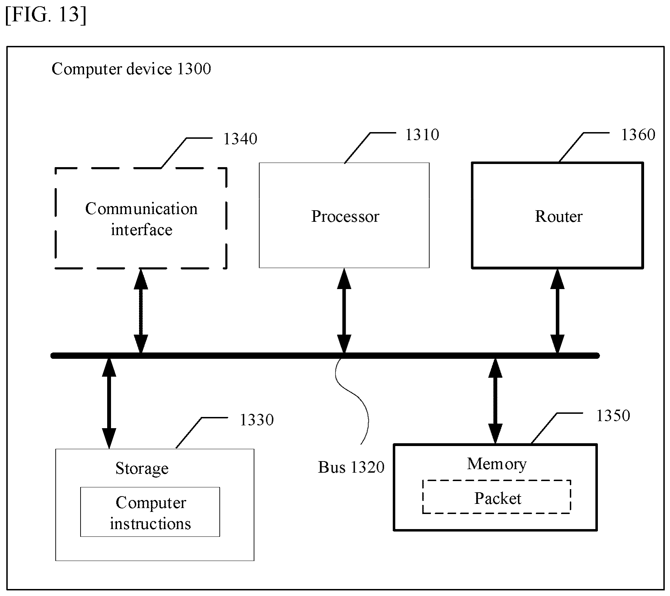

FIG. 13 is a diagram of a structure of a computer device 1300 according to this application. As shown in FIG. 13, the computer device 1300 includes a processor 1310, a bus 1320, a storage 1330, a communication interface 1340, a memory 1350 (which may also be referred to as a main memory (main memory) unit), and a router 1360. The processor 1310, the storage 1330, the memory 1350, the communication interface 1340, and the router 1360 are connected through the bus 1320.

It should be understood that, in this embodiment, the processor 1310 may be a CPU, or the processor 1310 may be another general-purpose processor, a digital signal processor (digital signal processor, DSP), an ASIC, an FPGA or another programmable logic device, a discrete gate or a transistor logic device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 1340 is configured to implement communication between the computer device 1300 and an external device or a component. In this application, when the computer device 1300 is configured to implement the functions of the device shown in FIG. 8, the communication interface 1340 is configured to receive a packet and send a packet.

The router 1360 is configured to forward a packet based on a router forwarding table.

The bus 1320 may include a channel, configured to transfer information between the foregoing components (such as the processor 1310, the memory 1350, and the storage 1330). In addition to a data bus, the bus 1320 may further include a power bus, a control bus, a status signal bus, or the like. However, for clear description, various buses are marked as the bus 1320 in the figure. The bus 1320 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect (cache coherent interconnect for accelerators, CCIX) protocol, or the like. Buses 1320 may be classified into an address bus, a data bus, a control bus, and the like.

In an example, the computer device 1300 may include a plurality of processors. The processor may be a multi-CPU (multi-CPU) processor. The processor herein may be one or more devices, circuits, and/or computing units configured to process data (for example, computer program instructions).

It should be noted that, in FIG. 13, only an example in which the computer device 1300 includes one processor 1310 and one storage 1330 is used. The processor 1310 and the storage 1330 each indicate a type of component or device. In a specific embodiment, a quantity of components or devices in each type may be determined based on a service requirement.

The memory 1350 may be a volatile memory pool or a nonvolatile memory pool, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory 1350 is configured to store a packet, and the like.

The storage 1330 may correspond to a storage medium configured to store information such as a packet in the foregoing method embodiments, for example, a magnetic disk, for example, a mechanical hard disk or a solid state disk.

The computer device 1300 may be a general-purpose device or a special-purpose device. For example, the computer device 1300 may be an edge device (for example, a box carrying a chip with a processing capability). Optionally, the computer device 1300 may alternatively be a server or another device having a computing capability.

It should be understood that the computer device 1300 according to this embodiment may correspond to the transmission apparatus 1200 in this embodiment, and may correspond to a corresponding body that performs any method in FIG. 8. In addition, the foregoing and other operations and/or functions of the modules in the transmission apparatus 1200 are respectively used to implement corresponding procedures of the method in FIG. 8. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist in the computing device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

1. End device

The end device may include a source device, a sink device, and a docking station.

2. Source device

The source device (Source Device) may be a device that has a downstream port (Main Downstream Port, MDP) and an audio/video transmit adapter.

For example, the source device may include a set-top box, a DVD, a personal computer (Personal Computer, PC), a game console, and a host of a split-type television. This is not limited in this application.

It should be understood that the source device may include a plurality of downstream ports and a plurality of audio/video transmit adapters. One audio/video transmit adapter may be configured to send one path of audio/video data. In other words, the source device may support to simultaneously send a plurality of paths of audio/video data.

It should be understood that the source device may further include another adapter, for example, an audio/video receive adapter, a management and control adapter, or a third-party protocol adapter. This is not limited in this application. A third-party protocol is, for example, a universal serial bus (Universal Serial Bus, USB), a high-speed serial computer expansion bus standard (Peripheral Component Interconnect express, PCIe), or the Ethernet. This is not limited in this application.

3. Sink device

The sink device (Sink Device) may be a device that has an upstream port (Main Upstream Port, MUP) and an audio/video receive adapter.

For example, the sink device may include a television, a display, a speaker device, and the like.

It should be understood that the sink device may include a plurality of upstream ports and a plurality of audio/video receive adapters. One audio/video receive adapter may receive one path of audio/video data. In other words, the sink device may support to simultaneously receive a plurality of pieces of audio/video data.

It should be understood that the sink device may further include another adapter, for example, an audio/video transmit adapter, a management and control adapter, or a third-party protocol adapter. This is not limited in this application.

4. Docking station

The docking station (Docking Station) may be a device that has an upstream port (MUP), an audio/video receive adapter, and a legacy (Legacy) audio/video interface. The docking station device supports to convert UMI audio/video data (namely, audio/video data received through the MUP) into legacy audio/video interface data.

## 5. Router device

The router device (Router Device) may be a device that has a routing function, has a downstream port and an upstream port, and does not have an audio/video transmit adapter or an audio/video receive adapter. The router device supports only routing and forwarding of data (for example, UMI audio/video data), but does not support packet encryption/decryption or encapsulation/decapsulation.

## 6. Composite device

The composite device may be a source device or a sink device that has both an upstream port and a downstream port.

For example, the foregoing MDP and the foregoing MUP each are a unified multimedia interconnection interface (Unified MultiMedia Interconnection, UMI), and the UMI interface is a high-speed interface. The UMI interface may be a transmission interface used for an ultra-high definition video signal/audio signal, supports a third-party protocol tunnel transmission function, and further supports a power supply function between devices.

For example, the UMI interface supports a direct connection between a source device (for example, a set-top box) and a sink device (for example, a television)/a docking station; or supports a multi-device networking connection. The source device and the sink device/the docking station may be networked by using a router device or a composite device.

For example, the UMI interface may support bidirectional transmission of audio/video data/third-party protocol data. To be specific, when the source device transmits the audio/video data/third-party protocol data to the sink device/the docking station, the source device may also receive audio/video data/third-party protocol data returned by the sink device/the docking station.

For example, an end device may include a UMI controller, and the UMI controller may include a UMI interface (including the MUP and/or the MDP), an adapter, and a routing apparatus (Router). The router may be configured to: read a packet from a buffer, and forward or copy the packet to another buffer. The router may be configured to perform the routing method in this application.

## 7. Shuttle (Shuttle)

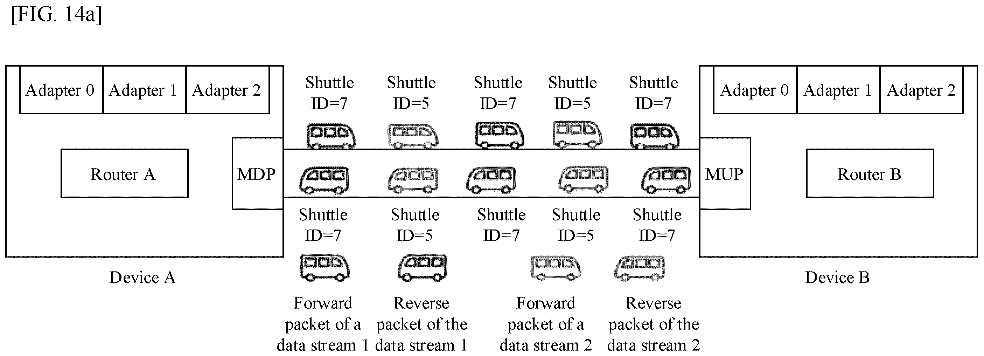

FIG. 14a is a diagram of an example shuttle.

For example, a device A in FIG. 14a is a source device, and the device A may include an adapter 0, an adapter 1, an adapter 2, an MDP, and a router A. It should be understood that FIG. 14a shows merely an example source device in this application. The source device in this application may include more or fewer components than the device A shown in FIG. 14a. This is not limited in this application.

For example, a device B in FIG. 14a is a sink device, and the device B may include an adapter 0, an adapter 1, an adapter 2, an MUP, and a router B. It should be understood that FIG. 14a shows merely an example sink device in this application. The sink device in this application may include more or fewer components than the device B shown in FIG. 14a. This is not limited in this application.

As shown in FIG. 14a, on a physical link between the MDP in the device A and the MUP in the device B, a packet of a data stream is transmitted between the MDP of the device A and the MUP of the device B like a shuttle bus (shuttle bus). Shuttle IDs may be used to identify shuttle buses that carry packets of different data streams. For example, in FIG. 14a, a shuttle bus whose shuttle ID is 7 transmits a packet of a data stream 1 (including a forward packet of the data stream 1 and a reverse packet of the data stream 1), and a shuttle bus whose shuttle ID is 5 transmits a packet of a data stream 2 (including a forward packet of the data stream 2 and a reverse packet of the data stream 2).

For example, a bidirectional virtual shuttle used to transmit all packets of a same data stream between two ports (namely, two ports between two directly connected end devices) on a same physical link may be referred to as a shuttle (namely, a shuttle) The shuttle ID may be a shuttle identifier, and is used to uniquely identify a shuttle (Shuttle).

## 8. Channel

A channel (which may also be referred to as a channel) may be a bidirectional virtual shuttle used to transmit all packets (including a forward packet and a reverse packet) of a data stream between adapters in two end devices. The channel may include zero, one, or a plurality of shuttles.

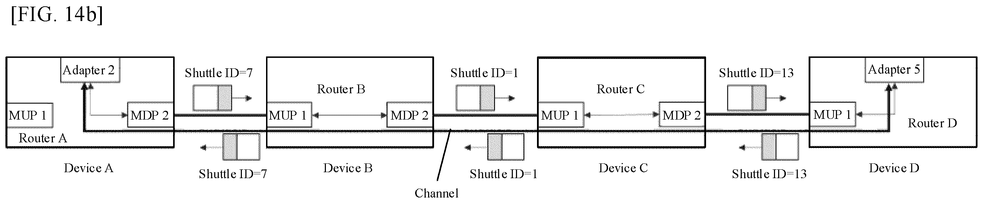

FIG. 14b is a diagram of an example channel.

For example, in FIG. 14b, a device A is a source device, a device B and a device C are router devices, and a device D is a sink device. The device A may include an adapter 2, an MDP 2, an MUP 1, and a router A. The device B may include an MUP 1, an MDP 2, and a router B. The device C may include an MUP 1, an MDP 2, and a router C. The device D may include an adapter 5, an MUP 1, and a router D.

As shown in FIG. 14b, for example, a shuttle between the MDP 2 of the device A and the MUP 1 of the device B is a shuttle with Shuttle ID=7, a shuttle between the MDP 2 of the device B and the MUP 1 of the device B is a shuttle with Shuttle ID=1, and a shuttle between the MDP 2 of the device C and the MUP 1 of the device D is a shuttle with Shuttle ID=13.

As shown in FIG. 14b, a channel in FIG. 14b is a bidirectional virtual shuttle from the adapter 2 in the device A to the adapter 5 in the device D. The channel includes three shuttles: the shuttle with Shuttle ID=7 between the device A and the device B, the shuttle with Shuttle ID=1 between the device B and the device C, and the shuttle with Shuttle ID=13 between the device C and the device D.

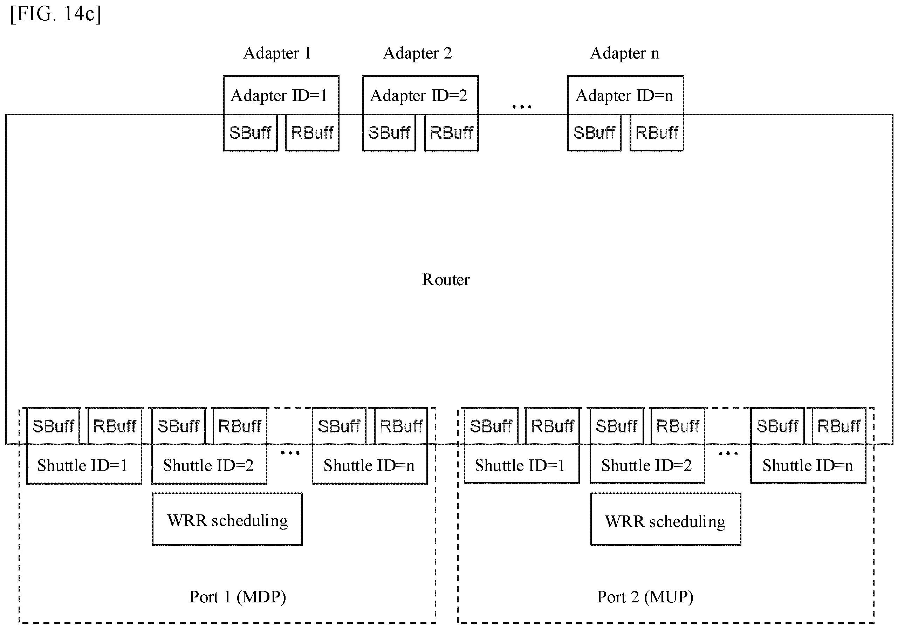

FIG. 14c is a diagram of an example end device. FIG. 14c shows a UMI controller of a composite device.

As shown in FIG. 14c, for example, the composite device includes n (n is a positive integer) adapters (Adapter), and each adapter has a corresponding adapter identifier (Adapter ID). For example, an adapter 1 has Adapter ID=1, an adapter 2 has Adapter ID=2, ..., and an adapter n has Adapter ID=n. Each adapter has a corresponding receive buffer (RBuff) and transmit buffer (SBuff).

As shown in FIG. 14c, for example, the composite device includes two ports: an MDP and an MUP, and each port has a corresponding port identifier (Port ID). For example, the MDP has Port ID=1, and the MUP has Port ID=2. Each port corresponds to a plurality of shuttles, and each shuttle has a corresponding shuttle identifier (Shuttle ID). For example, for n shuttles corresponding to the MDP, the 1st shuttle corresponds to Shuttle ID=1, the 2nd shuttle corresponds to Shuttle ID=2, ..., and the nth shuttle corresponds to Shuttle ID=n. For example, for n shuttles corresponding to the MUP, the 1st shuttle corresponds to Shuttle ID=1, the 2nd shuttle corresponds to Shuttle ID=2, ..., and the nth shuttle corresponds to Shuttle ID=n.

In a possible manner, in a routing process, one receive buffer (RBuff) and one transmit buffer (SBuff) may be established for each shuttle. A quantity of receive buffers included in each port is the same as a quantity of shuttles included in the port, and a quantity of receive buffers included in each port is the same as a quantity of shuttles included in the port. That is, each shuttle has corresponding RBuff and SBuff, as shown in FIG. 14c.

In a possible manner, in a routing process, one receive buffer and one transmit buffer may be established for one or more shuttles with a high priority based on priorities of the shuttles. A quantity of receive buffers included in each port is less than a quantity of shuttles included in the port, and a quantity of transmit buffers included in each port is less than the quantity of shuttles included in the port. In this application, an example in which each shuttle in FIG. 14c has corresponding RBuff and SBuff is used for description.

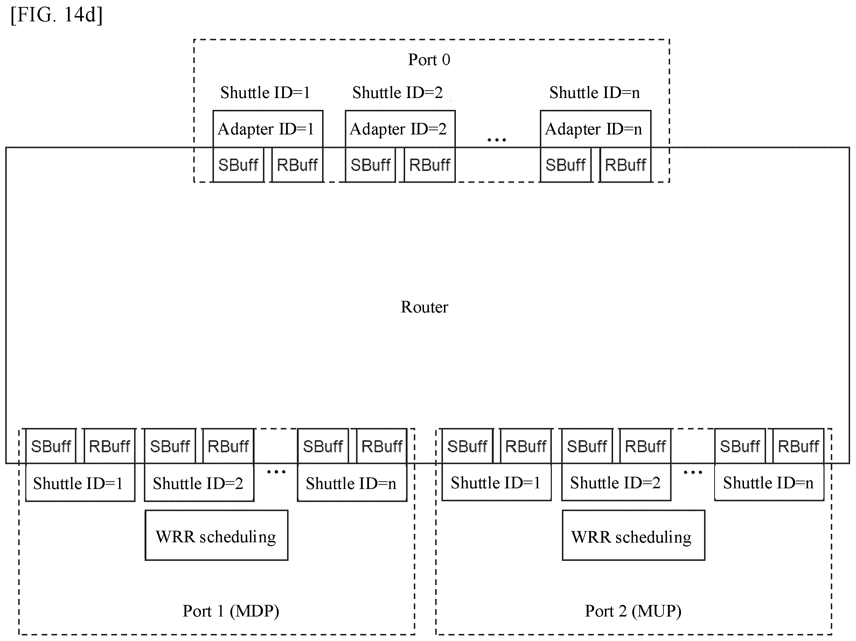

It can be learned from FIG. 14c that, the adapter and the shuttle are logically equivalent. Therefore, all adapters in the UMI controller may be combined to form a virtual port (Port 0), each adapter is a shuttle in the port, and an adapter ID is a shuttle ID, as shown in FIG. 14d.

For example, in FIG. 14c and FIG. 14d, an algorithm of scheduling a packet in SBuff by a port may be a weighted round robin (Weighted Round Robin, WRR) algorithm. To be specific, a packet is sent to a port of another end device/an apparatus in the end device based on information such as a priority and a weight of the packet.

The routing method in this application may be applied to a multicast scenario and a unicast scenario.

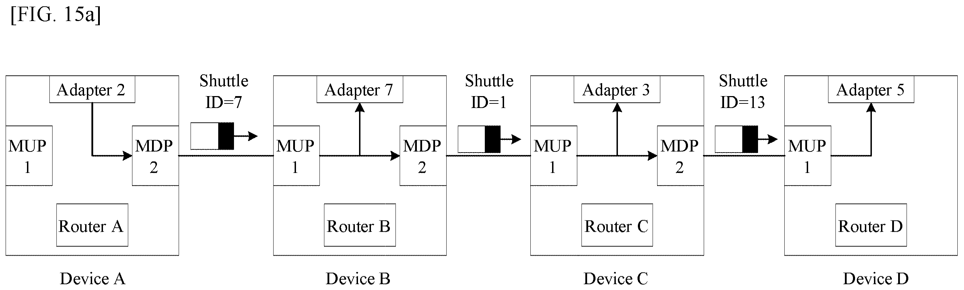

FIG. 15a is a diagram of an example application scenario. In the embodiment of FIG. 15a, a multicast scenario of unidirectional video data is shown. To be specific, a device A sends a video stream, and a device B, a device C, and a device D receive the video stream.

As shown in FIG. 15a, for example, an adapter 2 (the adapter 2 may be an audio/video transmit adapter) in the device A may send a video stream, and the video stream is received by each of an adapter 7 (the adapter 7 may be an audio/video receive adapter) in the device B, an adapter 3 (the adapter 3 may be an audio/video receive adapter) in the device C, and an adapter 5 (the adapter 5 may be an audio/video receive adapter) in the device D.

For example, the device A may be a source device, the device B and the device C may be composite devices, and the device D may be a sink device. For example, the device A is a DVD, the device B is a speaker, and the device C and the device D are displays.

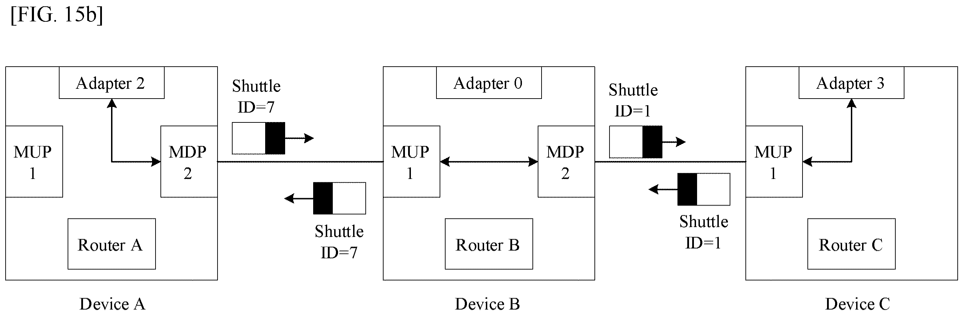

FIG. 15b is a diagram of an example application scenario. In the embodiment of FIG. 15b, a unicast scenario of bidirectional third-party protocol data is shown. To be specific, a device A sends a third-party protocol data stream, and a device C receives the third-party protocol data stream; or a device C sends a third-party protocol data stream, and a device A receives the third-party protocol data stream.

As shown in FIG. 15b, for example, an adapter 2 (the adapter 2 may be a USB3.0 tunnel adapter) in the device A may send a data stream, and the data stream is transmitted to an adapter 3 (the adapter 3 may be a USB3.0 tunnel adapter) in the device C through a port 1 (MUP 1) and a port 2 (MDP 2) in the device B and a port 1 (MUP 1) in the device C.

As shown in FIG. 15b, for example, the adapter 3 (the adapter 3 may be a USB3.0 tunnel adapter) in the device C may send a data stream, and the data stream is transmitted to the adapter 2 (the adapter 2 may be a USB3.0 tunnel adapter) in the device A through the port 2 (MDP 2) and the port 1 (MUP 1) in the device B and the port 2 (MDP 2) in the device A.

For example, the device A may be a source device, the device B may be a router device or a composite device, and the device C may be a sink device.

For example, in this application, routing information may be configured in advance. In this case, in an actual data stream transmission process, routing may be performed based on the preconfigured routing information, to implement multicast or unicast. The following provides descriptions by using an example in which routing information in an end device is configured.

For example, it is assumed that the end device includes M ports, and quantities of shuttles corresponding to the M ports are N1, N2, N3, ..., and NM. Any two values of N1, N2, N3, ..., and NM may be the same or different. This is not limited in this application. For example, the routing information in the end device may include M input stream information sets and M output stream information sets that correspond to the M ports. One port corresponds to one input stream information set and one output stream information set. M, N1, N2, N3, ..., and NM each are a positive integer.

For example, for a $k^{th}$ (k is a positive integer between 1 and M, including 1 and M) port, if the $k^{th}$ port corresponds to Nk shuttles, one input stream information set corresponding to the $k^{th}$ port may include Nk pieces of input stream information (the input stream information may also be referred to as an input stream node). One output stream information set corresponding to the $k^{th}$ port may include Nk output stream information groups (the output stream information group may be referred to as an output stream linked list), and each output stream information group includes one or more pieces of output stream information (the output stream information may also be referred to as an output stream node). One shuttle in the $k^{th}$ port may correspond to one piece of input stream information in the input stream information set corresponding to the $k^{th}$ port, and may correspond to one output stream information group in the output stream information set corresponding to the $k^{th}$ port. One piece of input stream information corresponding to one shuttle in the $k^{th}$ port and a $1^{st}$ piece of output stream information in the corresponding output stream information group may be referred to as an entry node. One piece of input stream information corresponding to one shuttle in the $k^{th}$ port and the corresponding output stream information group may be referred to as a routing entry. The routing information may include a plurality of routing entries.

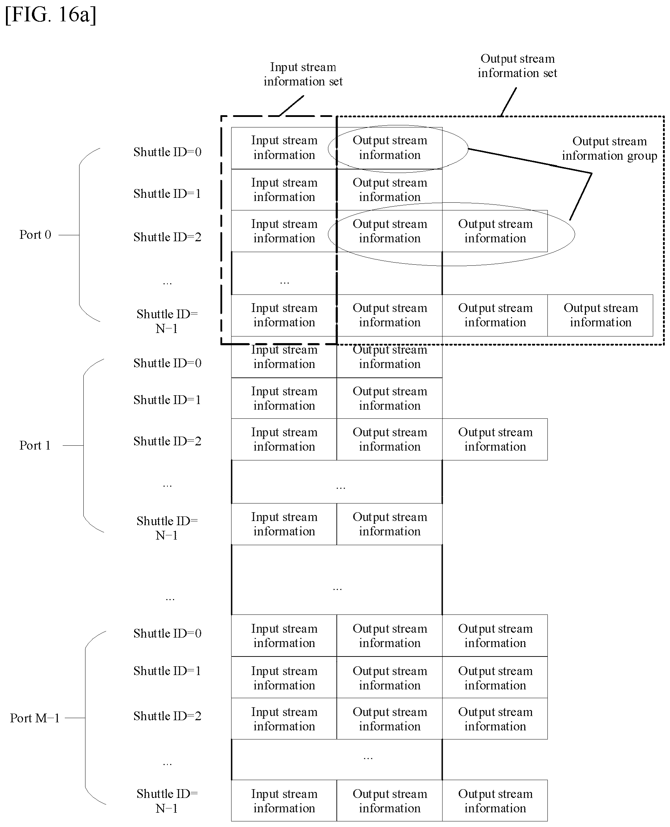

FIG. 16a is a diagram of example routing information. In FIG. 16a, quantities of shuttles corresponding to all ports are the same, namely, N.

As shown in FIG. 16a, for example, a port 0 corresponds to N shuttles, and shuttle identifiers (Shuttle ID) of the N shuttles are 0, 1, 2, ..., and N-1. The port 0 corresponds to one input stream information set (as shown in a left dashed box in FIG. 16a) and one output stream information set (as shown in a right dashed box in FIG. 16a). The input stream information set includes N pieces of input stream information corresponding to the N shuttles, and the output stream information set includes N output stream information groups corresponding to the N shuttles. For ease of subsequent description, input stream information that corresponds to a shuttle with Shuttle ID=s corresponding to a port with Port ID=p may be referred to as input stream information corresponding to [Port ID=p, Shuttle ID=s]; and an output stream information group that corresponds to a shuttle with Shuttle ID=s corresponding to a port with Port ID=p may be referred to as an output stream information group corresponding to [Port ID=p, Shuttle ID=s].

An output stream information group corresponding to [Port ID=0, Shuttle ID=0] includes one piece of output stream information, an output stream information group corresponding to [Port ID=0, Shuttle ID=1] includes one piece of output stream information, an output stream information group corresponding to [Port ID=0, Shuttle ID=2] includes two pieces of output stream information, ..., and an output stream information group corresponding to [Port ID=0, Shuttle ID=N-1] includes three pieces of output stream information.

As shown in FIG. 16a, for example, a port 1 corresponds to N shuttles, and shuttle identifiers (Shuttle ID) of the N shuttles are 0, 1, 2, ..., and N-1. The port 1 corresponds to one input stream information set and one output stream information set. The input stream information set includes N pieces of input stream information corresponding to the N shuttles, and the output stream information set includes N output stream information groups corresponding to the N shuttles. An output stream information group corresponding to [Port ID=1, Shuttle ID=0] includes one piece of output stream information, an output stream information group of a shuttle of [Port ID=1, Shuttle ID=1] includes one piece of output stream information, an output stream information group of a shuttle of [Port ID=1, Shuttle ID=2] includes two pieces of output stream information, ..., and an output stream information group of a shuttle of [Port ID=1, Shuttle ID=N-1] includes one piece of output stream information.

...

As shown in FIG. 16a, for example, a port M-1 corresponds to N shuttles, and shuttle identifiers (Shuttle ID) of the N shuttles are 0, 1, 2, ..., and N-1. The port M-1 corresponds to one input stream information set and one output stream information set. The input stream information set includes N pieces of input stream information corresponding to the N shuttles, and the output stream information set includes N output stream information groups corresponding to the N shuttles. An output stream information group corresponding to a shuttle of [Port ID=M-1, Shuttle ID=0] includes two pieces of output stream information, an output stream information group of a shuttle of [Port ID=M-1, Shuttle ID=1] includes two pieces of output stream information, an output stream information group of a shuttle of [Port ID=M-1, Shuttle ID=2] includes two pieces of output stream information, ..., and an output stream information group of a shuttle of [Port ID=M-1, Shuttle ID=N-1] includes two pieces of output stream information.

For example, the routing information may be divided into first routing information and second routing information, and the first routing information and the second routing information are stored in blocks (for example, may be stored in blocks in a register), to facilitate management and use of the routing information. The first routing information may include M input stream information sets and a 1$^{st}$ piece of output stream information in each output stream information group (in other words, the first routing information may include a plurality of entry nodes), and the second routing information may include the other output stream information in each output stream information group. The other output stream information is output stream information in the output stream information group other than the 1$^{st}$ piece of output stream information.

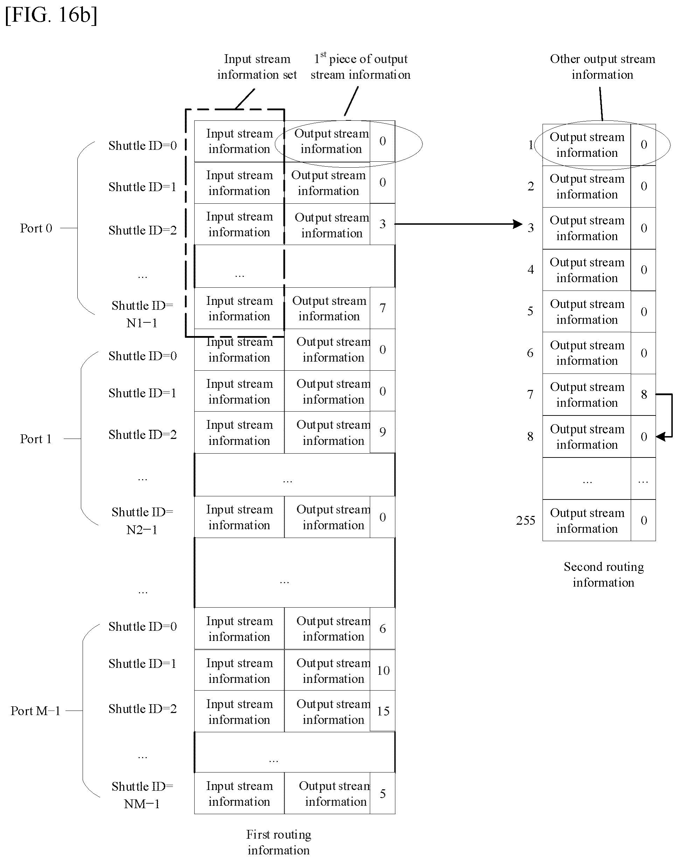

FIG. 16b is a diagram of example routing information. FIG. 16b shows the first routing information and the second routing information that are obtained by splitting the routing information in FIG. 16a.

As shown in FIG. 16b, for example, the first routing information may include M input stream information sets corresponding to M ports, and a 1$^{st}$ piece of output stream information in each output stream information group in the M output stream information sets corresponding to the M ports. The second routing information may include the other output stream information in each output stream information group in the M output stream information sets corresponding to the M ports. All output stream information in the second routing information is numbered uniformly, and is not numbered based on port IDs and shuttle IDs. For example, "1-255" on the left of each piece of output stream information in the second routing information in FIG. 16b may be a sequence number (or a storage address) of the output stream information.

As shown in FIG. 16a again, for example, the output stream information group corresponding to [Port ID=0, Shuttle ID=0] includes only one piece of output stream information. Further, one piece of output stream information corresponding to [Port ID=0, Shuttle ID=0] in the first routing information in FIG. 16b is one piece of output stream information in the output stream information group corresponding to [Port ID=0, Shuttle ID=0] in the routing information in FIG. 16a. The second routing information in FIG. 16b does not include the other output stream information in the output stream information group corresponding to [Port ID=0, Shuttle ID=0]. "0" included in a piece of output stream information corresponding to [Port ID=0, Shuttle ID=0] in the first routing information in FIG. 16b may mean that the output stream information is a last piece of output stream information in [Port ID=0, Shuttle ID=0].

As shown in FIG. 16a again, for example, the output stream information group corresponding to [Port ID=0, Shuttle ID=1] includes only one piece of output stream information. Further, one piece of output stream information corresponding to [Port ID=0, Shuttle ID=1] in the first routing information in FIG. 16b is one piece of output stream information in the output stream information group corresponding to [Port ID=0, Shuttle ID=1] in the routing information in FIG. 16a. The second routing information in FIG. 16b does not include the other output stream information in the output stream information group corresponding to [Port ID=0, Shuttle ID=1]. "0" included in a piece of output stream information corresponding to [Port ID=0, Shuttle ID=1] in the first routing information in FIG. 16b may mean that the output stream information is a last piece of output stream information in [Port ID=0, Shuttle ID=1].

As shown in FIG. 16a again, for example, the output stream information group corresponding to [Port ID=0, Shuttle ID=2] includes two pieces of output stream information. Further, one piece of output stream information corresponding to [Port ID=0, Shuttle ID=2] in the first routing information in FIG. 16b is a 1$^{st}$ piece of output stream information in the output stream information group corresponding to [Port ID=0, Shuttle ID=2] in the routing information in FIG. 16a. One piece of output stream information corresponding to [Port ID=0, Shuttle ID=2] in the second routing information in FIG. 16b is a 2$^{nd}$ piece of output stream information in the output stream information group corresponding to [Port ID=0, Shuttle ID=2] in the routing information in FIG. 16a. "3" included in a piece of output stream information corresponding to [Port ID=0, Shuttle ID=2] in the first routing information in FIG. 16b may be a sequence number (or a storage address) of a next piece of output stream information corresponding to [Port ID=0, Shuttle ID=2] in the second routing information. "0" included in a piece of output stream information whose sequence number (or storage address) is "3" in the second routing information in FIG. 16b indicates that the output stream information is a last piece of output stream information.

...

As shown in FIG. 16a again, for example, the output stream information group corresponding to [Port ID=0, Shuttle ID=N-1] includes three pieces of output stream information. Further, one piece of output stream information corresponding to [Port ID=0, Shuttle ID=N-1] in the first routing information in FIG. 16b is a 1$^{st}$ piece of output stream information in the output stream information group corresponding to [Port ID=0, Shuttle ID=N-1] in the routing information in FIG. 16a. Output stream information corresponding to [Port ID=0, Shuttle ID=N-1] in the second routing information in FIG. 16b is a 2$^{nd}$ piece of output stream information and a 3$^{rd}$ piece of output stream information in the output stream information group corresponding to [Port ID=0, Shuttle ID=N-1] in the routing information in FIG. 16a. "7" included in a piece of output stream information corresponding to [Port ID=0, Shuttle ID=N-1] in the first routing information in FIG. 16b may be a sequence number (or a storage address) of a next piece of output stream information corresponding to [Port ID=0, Shuttle ID=N-1] in the second routing information. "8" included in a piece of output stream information whose sequence number (or storage address) is "7" in the second routing information in FIG. 16b may be a sequence number (or a storage address) of a next piece of output stream information in the second routing information. "0" included in a piece of output stream information whose sequence number (or storage address) is "8" in the second routing information in FIG. 16b indicates that the output stream information is a last piece of output stream information.

It should be understood that the same is true to other ports. Details are not described herein again.

For example, the first routing information may be used for unicast, and the second routing information may be used for multicast. In this case, the routing information is divided into the first routing information and the second routing information. In this way, routing efficiency can be improved.

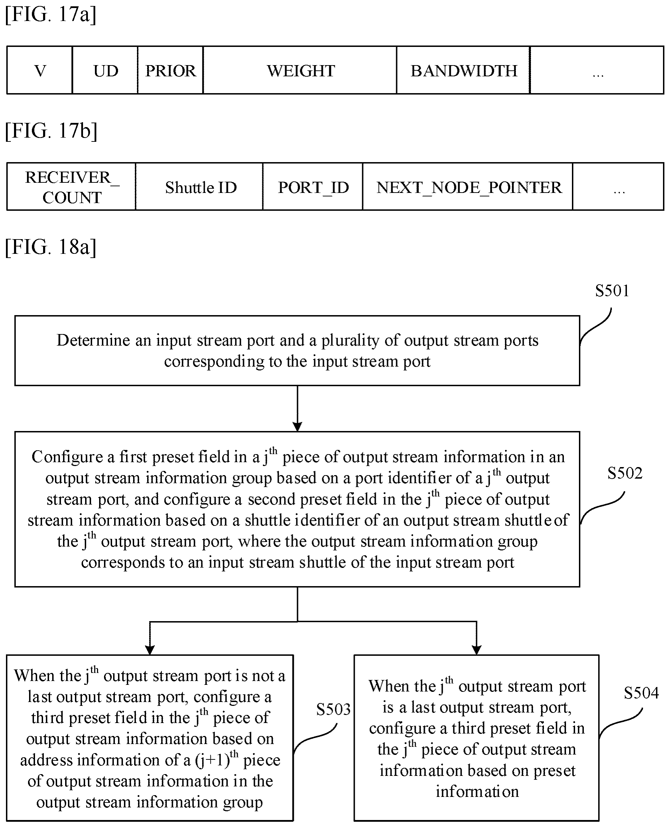

For example, the input stream information may be used to describe a feature of a data stream received by a port, for example, a data stream priority, a data stream scheduling weight, a data stream bandwidth, whether to enable stream control, and whether to use a shared buffer. A data structure of the input stream information may be shown in FIG. 17a. For example, fields included in the input stream information in FIG. 17a may be explained with reference to Table 3.

Table 3

| Field name | Description | Operation type | Default value |
|---|---|---|---|
| BANDWIDTH | Indicates a bandwidth allocated by an end device to a shuttle. A unit is bps. | R (read)/W (write) | 0000h |
| WEIGHT | Indicates a WRR scheduling weight corresponding to the shuttle. | R/W | 00h |
| PRIOR | Used to describe a priority corresponding to the shuttle. | R/W | 0h |
| UNIDIRECTION (UD) | Reverse stream flag of a unidirectional stream: When the flag is 1, a current shuttle is used to identify only a reverse stream of the unidirectional stream (in other words, an actual bandwidth is 0 and no packet is transmitted). | R/W | 0 |
| VALID (V) | Validity: 0 indicates invalid, that is, the shuttle is not used; and 1 indicates valid, that is, the shuttle is used. | R/W | 0 |

It should be understood that FIG. 17a shows merely an example data structure of input stream information in this application. The data structure of the input stream information in this application may be another data structure. In addition, the input stream information in this application includes more or fewer fields than those shown in FIG. 17a. This is not limited in this application.

For example, the output stream information may be used to describe a feature related to the port (which may include related information about the port and the corresponding shuttle, a related feature of a corresponding transmit buffer, and the like). A data structure of the output stream information may be shown in FIG. 17b. Fields included in the output stream information in FIG. 17b may be explained with reference to Table 4.

Table 4

| Field name | Description | Operation type | Default value |
|---|---|---|---|
| PORT_ID | Destination port number (output stream port number) | R/W | 0 |
| SHUTTLE_ID | Target shuttle number (output stream shuttle number) | R/W | 0 |
| NEXT_NODE_POINTER | Next output stream information pointer | R/W | 0 |
| RECEIVER_COUNT | Receiver count: Counting needs to be performed by using the receiver counter if a plurality of target devices in a current target port simultaneously receive a current stream RECEIVER_COUNT=n indicates that n+1 devices receive the current stream. | R/W | 0 |

It should be understood that FIG. 17b shows merely an example data structure of output stream information in this application. The data structure of the output stream information in this application may be another data structure. In addition, the output stream information in this application includes more or fewer fields than those shown in FIG. 17b. This is not limited in this application.

Values included in the output stream information in FIG. 16b such as "0", "3", "7", "9", "6", "10", "15", "5", and "8", may indicate a value of NEXT_NODE_POINTER in the output stream information.

For example, one piece of input stream information and one piece of output stream information that correspond to one shuttle in the first routing information are 16 (0x10) bytes, and one piece of output stream information that corresponds to one shuttle in the second routing information is 8 bytes. If maximum quantities of shuttles (MAX_SHUTTLE_ID) supported by all ports in the end device are the same, and are all N (N is a positive integer), each port needs 0x10*N bytes of space to store the first routing information. If the end device supports M-1 ports, and there is a port 0 (a virtual port including all adapters) that represents the end device by default, a size of first routing information of the end device is 0x10*N*M.

For example, a register base address of the first routing information may be preconfigured, and the register base address of the first routing information may be represented by ROUTER_TABLE_BASE. In addition, a register base address of the second routing information may be preconfigured, and the register base address of the second routing information may be represented by ROUTER_FNODE_BASE. In this case, an address of input stream information corresponding to [Port ID=p, Shuttle ID=s] may be as follows:

$$ROUTER\_TABLE\_BASE + 0x10*(MAX\_SHUTTLE\_ID+1)*p + 0x10*s \quad (1)$$

An address of a 1st piece of output stream information corresponding to [Port ID=p, Shuttle ID=s] may be as follows:

$$ROUTER\_TABLE\_BASE + 0x10*(MAX\_SHUTTLE\_ID+1)*p + 0x10*s+8) \quad (2)$$

For example, when NEXT_NODE_POINTER=r in one piece of output stream information, an address of other output stream information pointed to by NEXT_NODE_POINTER is as follows:

$$ROUTER\_FNODE\_BASE + 8*r \quad (3)$$

The following describe a configuration process of routing information by using FIG. 15a as an example.

FIG. 18a is a diagram of an example routing information configuration process.

S501: Determine an input stream port and a plurality of output stream ports corresponding to the input stream port.

For example, in FIG. 15a, after the device B is connected to the device A, the device C is connected to the device B, and the device D is connected to the device C, the device B, the device C, and the device D each may set the device A as a source device in response to a user operation; and then the device A may initiate channel configuration. The channel configuration is bandwidth allocation, shuttle allocation, priority allocation, weight allocation, port allocation, and the like.

The following describes a channel configuration process by using an example in which a channel 1 between an adapter 2 in the device A and an adapter 7 in the device B is configured, a channel 2 between the adapter 2 in the device A and an adapter 3 in the device C is configured, and a channel 3 between the adapter 2 in the device A and an adapter 5 in the device D is configured. Data streams transmitted on the channel 1, the channel 2, and the channel 3 are the same.

First, port allocation is performed.

For example, a port 0 in the device A, an MDP 2 in the device A, an MUP 1 in the device B, a port 0 in the device B, an MDP 2 in the device B, an MUP 1 in the device C, a port 0 in the device C, an MDP 2 in the device C, an MUP 1 in the device D, and a port 0 in the device D may be configured as ports used to form a channel.

Then, bandwidth allocation, priority allocation, and weight allocation are performed.

For example, priorities of the data streams transmitted on the channel 1, the channel 2, and the channel 3 may be all set to 1, weights may be all set to 1, and transmission bandwidths may be all set to 0x66B.

Then, shuttle configuration is performed.

For example, an adapter (namely, the adapter 2) with Shuttle ID=2 is selected from the device A.

For example, an idle shuttle such as a shuttle with Shuttle ID=7 is selected from all shuttles between the MDP 2 in the device A and the MUP 1 in the device B as a shuttle used to transmit the data stream.

For example, an adapter (namely, the adapter 7) with Shuttle ID=7 is selected from the device B.

For example, an idle shuttle such as a shuttle with Shuttle ID=1 is selected from all shuttles between the MDP 2 in the device B and the MUP 1 in the device C as a shuttle used to transmit the data stream.

For example, an adapter (namely, the adapter 3) with Shuttle ID=3 is selected from the device C.

For example, an idle shuttle such as a shuttle with Shuttle ID=13 is selected from all shuttles between the MDP 2 in the device C and the MUP 1 in the device D as a shuttle used to transmit the data stream.

For example, an adapter (namely, the adapter 5) with Shuttle ID=5 is selected from the device D.

After channel configuration is completed, channel configuration information may be obtained. The channel configuration information may include priority information, weight information, bandwidth information, a port identifier, and a shuttle identifier.

The following describes, by using one end device as an example, a process of configuring routing information in the end device. It should be noted that, the end device may further include a management and control apparatus, and the management and control apparatus in the end device may perform routing information configuration. In other words, the management and control apparatus performs S501 to S504.

For example, based on the foregoing descriptions, it can be learned that a channel between end devices is a bidirectional channel, and the data stream may also be a bidirectional data stream. When directions of transmitted data streams are different, in a same end device, a port (referred to as an input stream port below) used to receive a data stream sent by another end device/an apparatus (for example, an audio/video collection apparatus or a third-party protocol controller) in the end device is different from a port (referred to as an output stream port below) used to send a data stream to another end device/an apparatus (for example, an audio/video processing apparatus or a third-party protocol controller) in the end device. A data stream sent by the source device to a composite device/sink device/docking station may be referred to as a forward data stream, and a data stream sent by the composite device/sink device/docking station to the source device may be referred to as a reverse data stream.

For example, based on the channel configuration information and a data stream direction, one input stream port and one or more output stream ports that are located on the channel are determined from a plurality of ports included in the end device; an input stream shuttle (namely, a shuttle used to receive the data stream sent by the another end device/the apparatus in the end device) in the input stream port is determined; and an output stream shuttle (namely, a shuttle used to send a data stream to the another end device/the apparatus in the end device) in each output stream port is determined.

For example, for the device A in FIG. 15a, when the transmitted data stream is a forward data stream, the input stream port is the port 0 (Port ID=0) in the device A, and the input stream shuttle is the adapter 2 (namely, a shuttle with Shuttle ID=2); and the output stream port is the MDP 2 (Port ID=2) in the device A, and the output stream shuttle is a shuttle with Shuttle ID=7. When the transmitted data stream is a reverse data stream, the input stream port is the MDP 2 (Port ID=2) in the device A, and the input stream shuttle is the shuttle with Shuttle ID=7; and the output stream port is the port 0 (Port ID=0) in the device A, and the output stream shuttle is the adapter 2 (namely, the shuttle with Shuttle ID=2).

For example, for the device B in FIG. 15a, when the transmitted data stream is a forward data stream, the input stream port is the MUP 1 (Port ID=1) in the device B, and the input stream shuttle is the shuttle with Shuttle ID=7; one output stream port is the port 0 (Port ID=0) in the device B, and a corresponding output stream shuttle is the adapter 7 (namely, the shuttle with Shuttle ID=7); and the other output stream port is the MDP 2 (Port ID=2) in the device B, and the output stream shuttle is the shuttle with Shuttle ID=1. When the transmitted data stream is a reverse data stream, one input stream port is the port 0 in the device B, and a corresponding input stream shuttle is the adapter 7 (namely, the shuttle with Shuttle ID=7); the other input stream port is the MDP 2 (Port ID=2) in the device B, and a corresponding input stream shuttle is the shuttle with Shuttle ID=1; and the output stream port is the MUP 1 (Port ID=1) in the device B, and the output stream shuttle is the shuttle with Shuttle ID=7.

For example, for the device C in FIG. 15a, when the transmitted data stream is a forward data stream, the input stream port is the MUP 1 (Port ID=1) in the device C, and the input stream shuttle is the shuttle with Shuttle ID=1; one output stream port is the port 0 (Port ID=0) in the device C, and a corresponding output stream is the adapter 3 (namely, the shuttle with Shuttle ID=3); and the other output stream port is the MDP 2 (Port ID=2) in the device C, and the output stream shuttle is the shuttle with Shuttle ID=13. When the transmitted data stream is a reverse data stream, one input stream port is the port 0 in the device C, and a corresponding input stream shuttle is the adapter 3 (namely, the shuttle with Shuttle ID=3); the other input stream port is the MDP 2 (Port ID=2) in the device C, and a corresponding input stream shuttle is the shuttle with Shuttle ID=13; and the output stream port is the MUP 1 (Port ID=1) in the device C, and the output stream shuttle is the shuttle with Shuttle ID=1.

For example, for the device D in FIG. 15a, when the transmitted data stream is a forward data stream, the input stream port is the MUP 1 (Port ID=1) in the device D, and the input stream shuttle is the shuttle with Shuttle ID=13; and the output stream port is the port 0 (Port ID=0) in the device D, and the output stream shuttle is the adapter 5 (namely, the shuttle with Shuttle ID=5). When the transmitted data stream is a reverse data stream, the input stream port is the port 0 (Port ID=0) in the device D, and the input stream shuttle is the adapter 5 (namely, the shuttle with Shuttle ID=5); and the output stream port is the MUP 1 (Port ID=1) in the device D, and the output stream shuttle is the shuttle with Shuttle ID=13.

It is assumed that a port identifier of the input stream port satisfies Port ID=p1, and a shuttle identifier of an input stream shuttle between the input stream port and the another end device/the apparatus in the end device satisfies Shuttle ID=s1. In this case, an output stream information group corresponding to [Port ID=p1, Shuttle ID=s1] may be configured with reference to S502 to S504.

It is assumed that a quantity of output stream ports is R (R is an integer greater than 1). When there are R output stream ports, the output stream information group corresponding to [Port ID=p1, Shuttle ID=s1] may include R pieces of output stream information. The following describes a $j^{th}$ piece of output stream information in the output stream information group corresponding to [Port ID=p1, Shuttle ID=s1] by using a $j^{th}$ output stream port in the R output stream ports, where j is a positive integer less than or equal to R.

S502: Configure a first preset field in the jth piece of output stream information in the output stream information group based on a port identifier of the jth output stream port, and configure a second preset field in the jth piece of output stream information based on a shuttle identifier of an output stream shuttle of the jth output stream port, where the output stream information group corresponds to an input stream shuttle of the input stream port.

The first preset field may be the PORT_ID field in Table 4, and the second preset field may be the SHUTTLE_ID field in Table 4.

S503: When the jth output stream port is not a last output stream port, configure a third preset field in the jth piece of output stream information based on address information of a (j+1)th piece of output stream information in the output stream information group.

For example, the third preset field may be the NEXT_NODE_POINTER field in Table 4.

For example, the address information of the (j+1)th piece of output stream information may be used to determine an address of the (j+1)th piece of output stream information, for example, may indicate a value of a pointer used to point to the address of the (j+1)th piece of output stream information.

S504: When the jth output stream port is a last output stream port, configure a third preset field in the jth piece of output stream information based on preset information.

For example, the preset information may be 0.

For example, for the device B in FIG. 15a, when the transmitted data stream is a forward data stream, the input stream port is the MUP 1 (Port ID=1) in the device B, and the output stream port is the port 0 (Port ID=0) and the MDP 2 (Port ID=2) in the device B.

It is assumed that a 1st output stream port is the port 0 and a 2nd output stream port is the MDP 2.

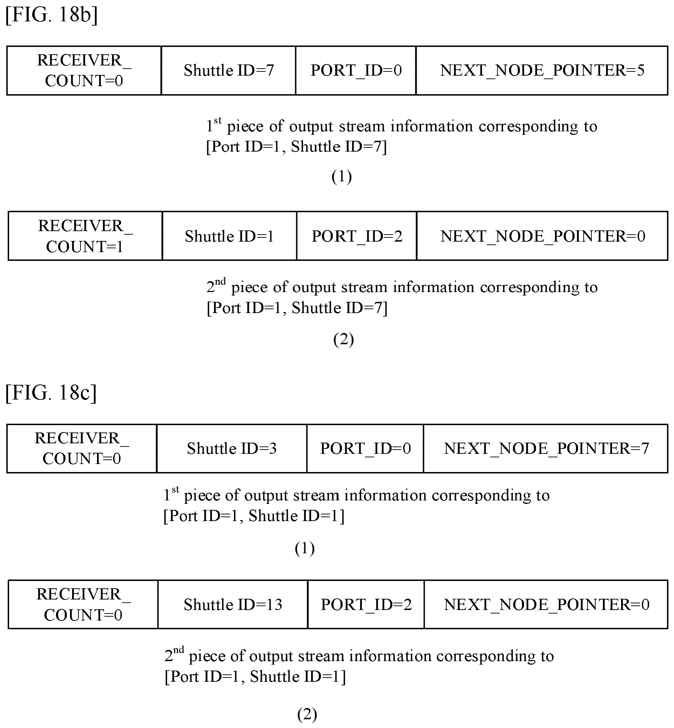

For the 1st output stream port, a first preset field in a 1st piece of output stream information corresponding to [Port ID=1, Shuttle ID=7] may be configured based on the port identifier Port ID=0 of the port 0; a second preset field in the 1st piece of output stream information corresponding to [Port ID=1, Shuttle ID=7] is configured based on the shuttle identifier Shuttle ID=7 of the output stream shuttle in the port 0; and a third preset field in the 1st piece of output stream information corresponding to [Port ID=1, Shuttle ID=7] is configured based on a value (for example, 5) of a pointer used to point to an address of a 2nd piece of output stream information corresponding to [Port ID=1, Shuttle ID=7], which may be shown in (1) in FIG. 18b. In addition, a fourth preset field (namely, the RECEIVER_COUNT field in Table 4) of the 1st piece of output stream information corresponding to [Port ID=1, Shuttle ID=7] may be further configured based on a quantity of end devices connected to the port 0 in the device B.

For the 2nd output stream port, a first preset field in the 2nd piece of output stream information corresponding to [Port ID=1, Shuttle ID=7] may be configured based on the port identifier Port ID=2 of the MDP 2; a second preset field in the 2nd piece of output stream information corresponding to [Port ID=1, Shuttle ID=7] is configured based on the shuttle identifier Shuttle ID=1 of the output stream shuttle in the MDP 2; and a third preset field in the 2nd piece of output stream information corresponding to [Port ID=1, Shuttle ID=7] is configured based on the preset information, which may be shown in (2) in FIG. 18b. In addition, a fourth preset field in the 2nd piece of output stream information corresponding to [Port ID=1, Shuttle ID=7] may be further configured based on a quantity of end devices connected to the MDP 2 in the device B.

For example, for the device C in FIG. 15a, when the transmitted data stream is a forward data stream, the input stream port is the MUP 1 (Port ID=1) in the device C, and the output stream port is the port 0 (Port ID=0) and the MDP 2 (Port ID=2) in the device C.

It is assumed that a 1st output stream port is the port 0 and a 2nd output stream port is the MDP 2.

For the 1st output stream port, a first preset field in a 1st piece of output stream information corresponding to [Port ID=1, Shuttle ID=1] may be configured based on the port identifier Port ID=0 of the port 0; a second preset field in the 1st piece of output stream information corresponding to [Port ID=1, Shuttle ID=1] is configured based on the shuttle identifier Shuttle ID=3 of the output stream shuttle in the port 0; and a third preset field in the 1st piece of output stream information corresponding to [Port ID=1, Shuttle ID=1] is configured based on a value (for example, 7) of a pointer used to point to an address of a 2nd piece of output stream information corresponding to [Port ID=1, Shuttle ID=1], which may be shown in (1) in FIG. 18c. In addition, a fourth preset field in the 1st piece of output stream information corresponding to [Port ID=1, Shuttle ID=1] may be further configured based on a quantity of end devices connected to the port 0 in the device C.

For the 2nd output stream port, a first preset field in the 2nd piece of output stream information corresponding to [Port ID=1, Shuttle ID=1] may be configured based on the port identifier Port ID=2 of the MDP 2; a second preset field in the 2nd piece of output stream information corresponding to [Port ID=1, Shuttle ID=1] is configured based on the shuttle identifier Shuttle ID=13 of the output stream shuttle in the MDP 2; and a third preset field in the 2nd piece of output stream information corresponding to [Port ID=1, Shuttle ID=1] is configured based on the preset information, which may be shown in (2) in FIG. 18c. In addition, a fourth preset field in the 2nd piece of output stream information corresponding to [Port ID=1, Shuttle ID=1] may be further configured based on a quantity of end devices connected to the MDP 2 in the device C.

For example, when there is one output stream port, an output stream information group corresponding to [Port ID=p1, Shuttle ID=s1] may include one piece of output stream information. One piece of output stream information in the output stream information group corresponding to [Port ID=p1, Shuttle ID=s1] may be configured with reference to S502 and S504.

For example, for the device A in FIG. 15a, when the transmitted data stream is a forward data stream, the input stream port is the port 0 (Port ID=0) in the device A, and the output stream port is the MDP 2 (Port ID=2) in the device A.

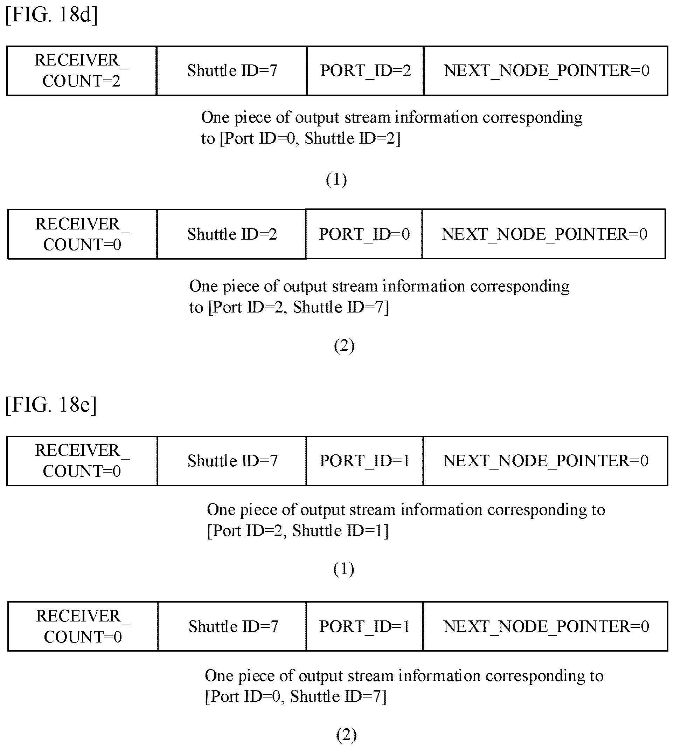

For example, a first preset field in output stream information corresponding to [Port ID=0, Shuttle ID=2] may be configured based on the port identifier Port ID=2 of the MDP 2; a second preset field in the output stream information corresponding to [Port ID=0, Shuttle ID=2] is configured based on the shuttle identifier Shuttle ID=7 of the output stream shuttle in the MDP 2; and a third preset field in the output stream information corresponding to [Port ID=0, Shuttle ID=2] is configured based on the preset information, which may be shown in (1) in FIG. 18d. In addition, a fourth preset field in the output stream information corresponding to [Port ID=0, Shuttle ID=2] may be further configured based on a quantity of end devices connected to the MDP 2 in the device A.

For example, for the device A in FIG. 15a, when the transmitted data stream is a reverse data stream, the input stream port is the MDP 2 (Port ID=2) in the device A, and the output stream port is the port 0 (Port ID=0) in the device A.

For example, a first preset field in output stream information corresponding to [Port ID=2, Shuttle ID=7] may be configured based on the port identifier Port ID=0 of the port 0; a second preset field in the output stream information corresponding to [Port ID=2, Shuttle ID=7] is configured based on the shuttle identifier Shuttle ID=2 of the output stream shuttle in the port 0; and a third preset field in the output stream information corresponding to [Port ID=2, Shuttle ID=7] is configured based on the preset information, which may be shown in (2) in FIG. 18d. In addition, a fourth preset field in the output stream information corresponding to [Port ID=2, Shuttle ID=7] may be further configured based on a quantity of end devices connected to the port 0 in the device A.

For example, for the device B in FIG. 15a, when the transmitted data stream is a reverse data stream, the input stream port is the MDP 2 (Port ID=2) in the device B and the port 0 (Port ID=0), and the output stream port is the MUP 1 (Port ID=1) in the device B.

For example, a first preset field in output stream information corresponding to [Port ID=2, Shuttle ID=1] may be configured based on the port identifier Port ID=1 of the MUP 1; a second preset field in the output stream information corresponding to [Port ID=2, Shuttle ID=1] is configured based on the shuttle identifier Shuttle ID=7 of the output stream shuttle in the MUP 1; and a third preset field in the output stream information corresponding to [Port ID=2, Shuttle ID=1] is configured based on the preset information, which may be shown in (1) in FIG. 18e. In addition, a fourth preset field in the output stream information corresponding to [Port ID=2, Shuttle ID=1] may be further configured based on a quantity of end devices connected to the MUP 1 in the device B.

For example, a first preset field in output stream information corresponding to [Port ID=0, Shuttle ID=7] may be configured based on the port identifier Port ID=1 of the MUP 1; a second preset field in the output stream information corresponding to [Port ID=0, Shuttle ID=7] is configured based on the shuttle identifier Shuttle ID=7 of the output stream shuttle in the MUP 1; and a third preset field in the output stream information corresponding to [Port ID=0, Shuttle ID=7] is configured based on the preset information, which may be shown in (2) in FIG. 18e. In addition, a fourth preset field in the output stream information corresponding to [Port ID=2, Shuttle ID=1] may be further configured based on a quantity of end devices connected to the MUP 1 in the device B.

Similarly, for configuration of each piece of output stream information in routing information of the device C and the device D, refer to configuration of each piece of output stream information in routing information of the device A and the device B. Details are not described herein again.

For example, one piece of input stream information corresponding to an input stream shuttle of an input stream port in first routing information may be further configured based on the priority information, the weight information, and the bandwidth information.

For example, it is assumed that the port identifier Port ID of the input stream port satisfies Port ID=p1, and the shuttle identifier of the input stream shuttle between the input stream port and the another end device/the apparatus in the end device satisfies Shuttle ID=s1. One piece of input stream information corresponding to [Port ID=p1, Shuttle ID=s1] in the first routing information may be configured based on the priority information, the weight information, and the bandwidth information.

For example, a fifth preset field (namely, the PRIOR field in Table 3) of the input stream information corresponding to [Port ID=p1, Shuttle ID=s1] may be configured based on the priority information; a sixth preset field (that is, the WEIGHT field in Table 3) of the input stream information corresponding to [Port ID=p1, Shuttle ID=s1] may be configured based on the weight information; and a seventh preset field (namely, the BANDWIDTH field in Table 3) of the input stream information corresponding to [Port ID=p1, Shuttle ID=s1] is configured based on the bandwidth information.

It is assumed that a priority is 1, a weight is 1, and a bandwidth is 0x66B.

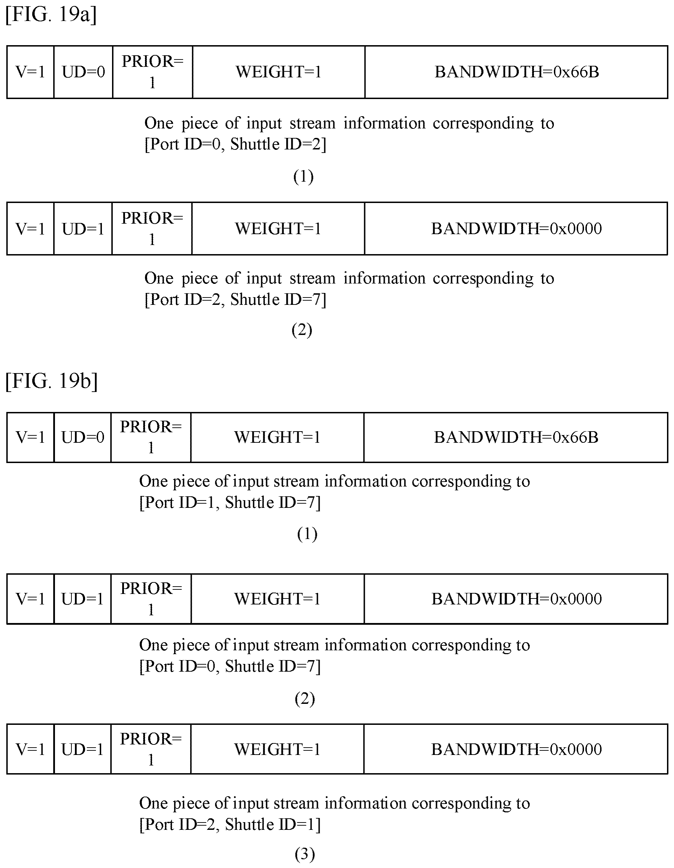

For example, for the device A in FIG. 15a, when the transmitted data stream is a forward data stream, the input stream port is the port 0, and one piece of input stream information corresponding to [Port ID=0, Shuttle ID=2] is configured, which may be shown in (1) in FIG. 19a. When the transmitted data stream is a reverse data stream, one piece of input stream information corresponding to [Port ID=2, Shuttle ID=7] may be configured, which may be shown in (2) in FIG. 19a. In (2) in FIG. 19a, UD=1, and this indicates that the data stream is a reverse stream of a unidirectional stream. In other words, there is no reverse data stream, and a bandwidth is 0.

For example, for the device B in FIG. 15a, when the transmitted data stream is a forward data stream, the input stream port is the MUP 1, and one piece of input stream information corresponding to [Port ID=1, Shuttle ID=7] in the device B is configured, which may be shown in (1) in FIG. 9b. When the transmitted data stream is a reverse data stream, and the input stream port is the port 0 and the MDP 2, one piece of input stream information corresponding to [Port ID=0, Shuttle ID=7] may be configured, which may be shown in (2) in FIG. 19b, and one piece of input stream information corresponding to [Port ID=2, Shuttle ID=1] may be configured, which may be shown in (3) in FIG. 19b. In (2) in FIG. 19b and (3) in FIG. 19b, UD=1, and this indicates that the data stream is a reverse stream of a unidirectional stream. In other words, there is no reverse data stream, and a bandwidth is 0.

Similarly, for configuration of each piece of input stream information in routing information of the device C and the device D, refer to configuration of each piece of input stream information in routing information of the device A and the device B. Details are not described herein again.

After the routing information is configured, a data stream may be transmitted between end devices through an established channel. The following describes a process of performing routing on the channel based on the configured routing information to transmit the data stream. This application provides descriptions by using an example in which the data stream is transmitted by using a packet.

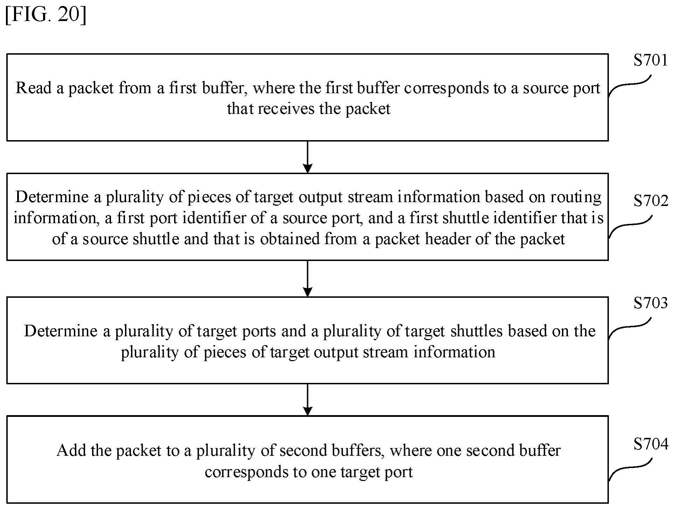

FIG. 20 is a diagram of an example routing method.

S701: Read a packet from a first buffer, where the first buffer corresponds to a source port that receives the packet.

For example, the packet may be read from a receive buffer (RBuff) corresponding to a port of an end device, and then the packet may be multicast with reference to S702 and S703. The receive buffer is configured to store a packet received from another end device/an apparatus in the end device.

For example, for subsequent description, a port that receives the packet from the another end device/the apparatus in the end device may be referred to as a source port corresponding to the packet, and a shuttle that receives a packet from the another end device/the apparatus in the end device may be referred to as a source shuttle corresponding to the packet. The source shuttle corresponding to the packet corresponds to the source port corresponding to the packet. To be specific, the source shuttle corresponding to the packet is one of a plurality of shuttles corresponding to the source port corresponding to the packet. A port identifier of the source port is referred to as a first port identifier, and a shuttle identifier of the source shuttle is referred to as a first shuttle identifier. In addition, a receive buffer used to store the packet, namely, a receive buffer corresponding to the source port, may be referred to as the first buffer.

S702: Determine a plurality of pieces of target output stream information based on routing information, the first port identifier of the source port, and the first shuttle identifier that is of the source shuttle and that is obtained from a packet header of the packet.

The packet header of the packet carries the first shuttle identifier of the source shuttle corresponding to the packet. Therefore, after the packet is read from the first buffer, the first shuttle identifier of the source shuttle may be obtained from the packet header.

For example, from the foregoing descriptions of the routing information, it can be learned that one output stream information group in the routing information corresponds to one shuttle of one port. Therefore, one target output stream information group may be determined based on the first shuttle identifier of the source shuttle, the first port identifier of the source port, and the routing information. The target output stream information group may include one or more pieces of target output stream information. A specific process is described subsequently.

For example, when one piece of target output stream information is obtained, it indicates that the packet needs to be unicast. In this case, one target port and one target shuttle may be determined based on the one piece of target output stream information, and one target port corresponds to one target shuttle. Then, one second buffer may be determined based on the target port and the target shuttle. The second buffer is a transmit buffer (SBuff) corresponding to the target port. Then, the packet may be added to the second buffer. Specifically, the packet may be forwarded to the second buffer.

For example, when a plurality of pieces of target output stream information are obtained, it indicates that the packet needs to be multicast, and S703 and S704 may be performed.

S703: Determine a plurality of target ports and a plurality of target shuttles based on the plurality of pieces of target output stream information.

For example, for each of the plurality of pieces of target output stream information, one target port and one target shuttle may be determined based on the target output stream information, and one target port corresponds to one target shuttle. Therefore, a plurality of target ports and a plurality of target shuttles may be determined, and the plurality of target ports are in one-to-one correspondence with the plurality of target shuttles.

For example, each piece of target output stream information may include a second port identifier and a second shuttle identifier. Therefore, one target port may be determined based on one second port identifier in one piece of target output stream information, and one target shuttle may be determined from a plurality of shuttles of the target port based on one second shuttle identifier in the target output stream information.

S704: Add the packet to a plurality of second buffers, where one second buffer corresponds to one target port.

For example, one second buffer may be determined based on one target port and a target shuttle of the target port, and then the plurality of second buffers may be determined. One second buffer may be a transmit buffer (SBuff) corresponding to one target port. Then, the packet may be added to the plurality of second buffers.

In a possible manner, the packet may be copied to a second buffer corresponding to a first target port, and the packet is forwarded to a second buffer corresponding to a second target port. The second target port is a last target port, and the first target port is a port in the plurality of target ports other than the second target port.

The second buffer may be configured to store a packet to be sent to the another end device/the apparatus in the end device.

It should be noted that S701 to S704 may be performed by a routing apparatus in a UMI controller in the end device.

In this way, the packet multicast can be multicast. In other words, a same packet is simultaneously sent to a plurality of devices. Compared with the conventional technology, in this method, there is no need to add another device, perform data backhaul, or send a plurality of data streams, so that a data stream multicast service can be implemented quickly and effectively, and resources can be further saved.

The following specifically describes a unicast process and a multicast process of a packet.

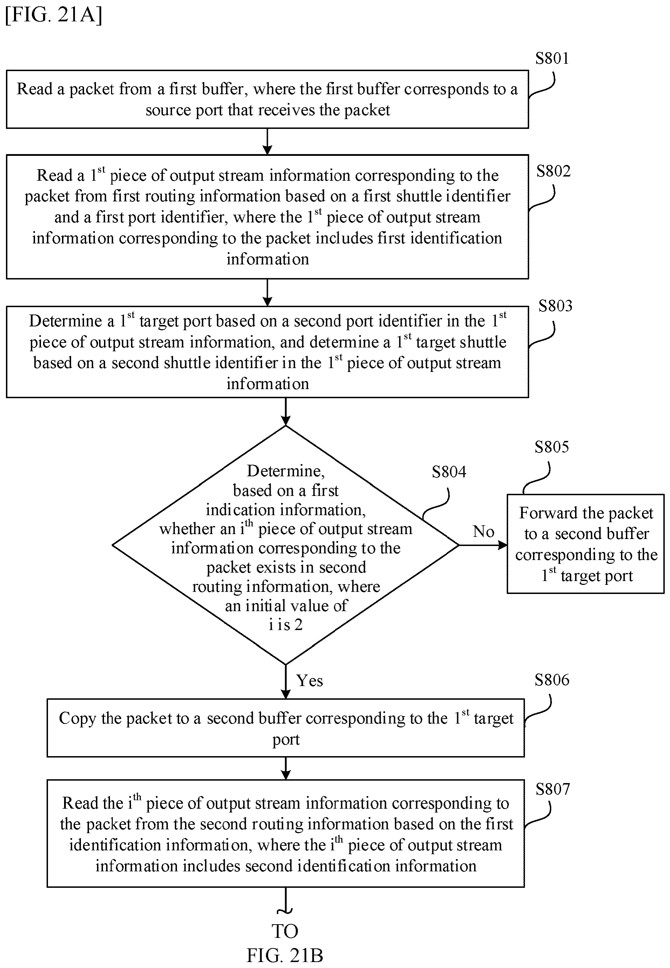

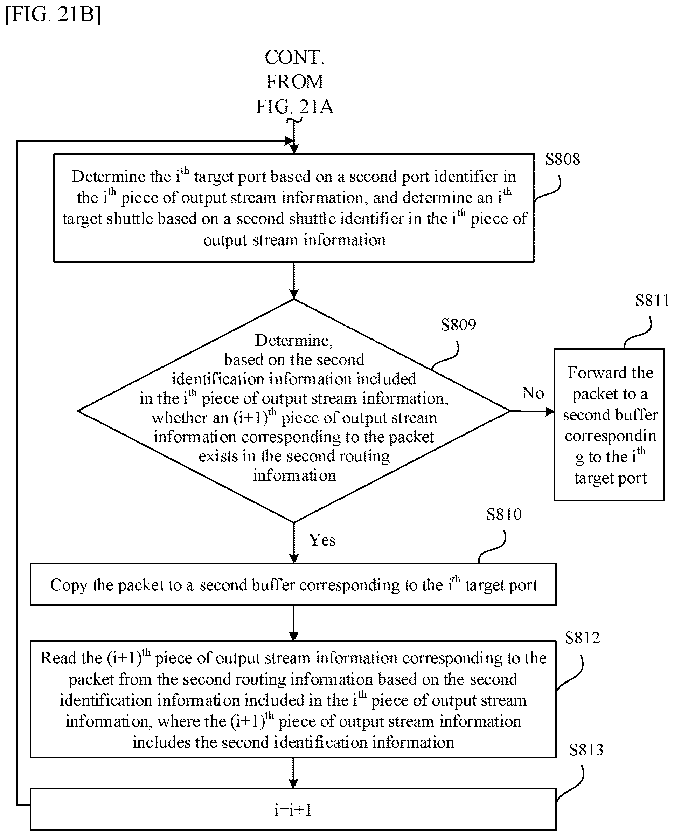

FIG. 21A and FIG. 21B are a diagram of an example routing process.

S801: Read a packet from a first buffer, where the first buffer corresponds to a source port that receives the packet.

For example, for S801, refer to the descriptions of S701. Details are not described herein again.

S802: Read a $1^{st}$ piece of output stream information corresponding to the packet from first routing information based on a first shuttle identifier and a first port identifier, where the $1^{st}$ piece of output stream information corresponding to the packet includes first identification information.

For example, based on the foregoing description of routing information, it can be learned that the routing information may include the first routing information and second routing information. The $1^{st}$ piece of output stream information corresponding to the packet may be read from the first routing information based on the first shuttle identifier and the first port identifier.

For example, from the foregoing descriptions, it can be learned that the first routing information may include a plurality of entry nodes, and first address information may be calculated based on the first shuttle identifier and the first port identifier. Specifically, the first shuttle identifier and the first port identifier may be substituted into Formula (2) for calculation, to determine the first address information. Then, information stored in the first address information may be read, to obtain an entry node corresponding to both the first shuttle identifier and the first port identifier.

For example, input stream information may be read from the entry node. When a value of a VALID field in the input stream information is 0 or a value of a UD field is 1, the packet may be discarded; or when a value of a VALID field in the input stream information is not 0 or a value of a UD field is not 1, the $1^{st}$ piece of output stream information may be read from the entry node.

For example, the $1^{st}$ piece of output stream information corresponding to the packet may include a second port identifier, a second shuttle identifier, and the first identification information. The second port identifier may be extracted from a first preset field in the $1^{st}$ piece of output stream information corresponding to the packet; the second shuttle identifier may be extracted from a second preset field in the $1^{st}$ piece of output stream information corresponding to the packet; and the first identification information may be extracted from a third preset field in the $1^{st}$ piece of output stream information corresponding to the packet.

The second port identifier in the $1^{st}$ piece of output stream information corresponding to the packet may be used to determine a $1^{st}$ target port corresponding to the packet. The second shuttle identifier in the $1^{st}$ piece of output stream information corresponding to the packet may be used to determine a $1^{st}$ target shuttle corresponding to the packet. The $1^{st}$ target shuttle corresponds to the $1^{st}$ target port. The first identification information may indicate whether other output stream information (namely, a $2^{nd}$ piece of output stream information) corresponding to the packet exists in the second routing information, and when the $2^{nd}$ piece of output stream information corresponding to the packet exists in the second routing information, a storage address of the $2^{nd}$ piece of output stream information may be determined.

S803: Determine the $1^{st}$ target port based on the second port identifier in the $1^{st}$ piece of output stream information, and determine the $1^{st}$ target shuttle based on the second shuttle identifier in the $1^{st}$ piece of output stream information.

S804: Determine, based on the first identification information, whether an $i^{th}$ piece of output stream information corresponding to the packet exists in the second routing information, where an initial value of i is 2.

In S804, i=2.

For example, when the first identification information is preset information, it may be determined that the $2^{nd}$ piece of output stream information corresponding to the packet does not exist in the second routing information. That is, in a current end device, there is no target port corresponding to the packet other than the 1st target port corresponding to the packet. In this case, it may be determined that the packet is unicast. That is, S805 may be performed.

For example, when the first identification information is address information, it may be determined that the 2nd piece of output stream information corresponding to the packet exists in the second routing information. That is, in a current end device, there is a target port corresponding to the packet other than the 1st target port corresponding to the packet. In this case, S807 and S806 may be performed.

It should be noted that S804 and S803 may be performed in parallel.

S805: When it is determined, based on the first identification information, that the 2nd piece of output stream information corresponding to the packet does not exist in the second routing information, forward the packet to a second buffer corresponding to the 1st target port.

S806: When it is determined, based on the first identification information, that the 2nd piece of output stream information corresponding to the packet exists in the second routing information, copy the packet to a second buffer corresponding to the 1st target port.

S807: When it is determined, based on the first identification information, that the $i^{th}$ piece of output stream information corresponding to the packet exists in the second routing information, read the $i^{th}$ piece of output stream information corresponding to the packet from the second routing information based on the first identification information, where the $i^{th}$ piece of output stream information includes second identification information, and an initial value of i is 2.

For example, in S807, i=2.

For example, when it is determined, based on the first identification information, that the 2nd piece of output stream information corresponding to the packet exists in the second routing information, the 2nd piece of output stream information corresponding to the packet may be read from the second routing information based on the first identification information. For example, the first identification information may be a pointer used to point to an address of the 2nd piece of output stream information. In this case, second address information may be calculated based on the first identification information (for example, the first identification information may be substituted into Formula (3) to calculate the second address information), and then the 2nd piece of output stream information corresponding to the packet may be obtained by reading information stored in the second address information.

For example, the 2nd piece of output stream information corresponding to the packet may include the second port identifier, the second shuttle identifier, and the second identification information. The second port identifier may be extracted from a first preset field in the 2nd piece of output stream information corresponding to the packet; the second shuttle identifier may be extracted from a second preset field in the 2nd piece of output stream information corresponding to the packet; and the second identification information may be extracted from a third preset field in the 2nd piece of output stream information corresponding to the packet.

The second port identifier in the 2nd piece of output stream information corresponding to the packet may be used to determine a 2nd target port corresponding to the packet. The second shuttle identifier in the 2nd piece of output stream information corresponding to the packet may be used to determine a 2nd target shuttle corresponding to the packet. The 2nd target shuttle and the 2nd target port corresponds to the 2nd target port. The second identification information in the 2nd piece of output stream information corresponding to the packet may indicate whether other output stream information (namely, a 3rd piece of output stream information) corresponding to the packet exists in the second routing information, and when the 3rd piece of output stream information corresponding to the packet exists in the second routing information, a storage address of the 3rd piece of output stream information may be determined.

S808: Determine the $i^{th}$ target port based on the second port identifier in the $i^{th}$ piece of output stream information, and determine the $i^{th}$ target shuttle based on the second shuttle identifier in the $i^{th}$ piece of output stream information.

S809: Determine, based on the second identification information included in the $i^{th}$ piece of output stream information, whether an $(i+1)^{th}$ piece of output stream information corresponding to the packet exists in the second routing information.

For example, when the second identification information included in the $i^{th}$ piece of output stream information is preset information, it may be determined that the $(i+1)^{th}$ piece of output stream information corresponding to the packet does not exist in the second routing information. In this case, S811 may be performed.

For example, when the second identification information included in the $i^{th}$ piece of output stream information is address information, it may be determined that the $(i+1)^{th}$ piece of output stream information corresponding to the packet exists in the second routing information. In this case, S810 and S812 may be performed.

It should be understood that S808 and S809 may be performed in parallel.

S810: When it is determined, based on the second identification information in the $i^{th}$ piece of output stream information, that the $(i+1)^{th}$ piece of output stream information corresponding to the packet exists in the second routing information, copy the packet to a second buffer corresponding to the $i^{th}$ target port.

S811: When it is determined, based on the second identification information in the $i^{th}$ piece of output stream information, that the $(i+1)^{th}$ piece of output stream information corresponding to the packet does not exist in the second routing information, forward the packet to a second buffer corresponding to the $i^{th}$ target port.

S812: When it is determined, based on the second identification information included in the $i^{th}$ piece of output stream information, that the $(i+1)^{th}$ piece of output stream information corresponding to the packet exists in the second routing information, read the $(i+1)^{th}$ piece of output stream information corresponding to the packet from the second routing information based on the second identification information, where the $(i+1)^{th}$ piece of output stream information corresponding to the packet includes the second identification information.

For example, when it is determined, based on the second identification information included in the $i^{th}$ piece of output stream information, that the $(i+1)^{th}$ piece of output stream information corresponding to the packet exists in the second routing information, the $(i+1)^{th}$ piece of output stream information corresponding to the packet may be read from the second routing information based on the second identification information. For example, the second identification information included in the $i^{th}$ piece of output stream information may be a pointer used to point to an address of the $(i+1)^{th}$ piece of output stream information. Therefore, second address information may be calculated based on the second identification information (for example, the second identification information may be substituted into Formula (3) to calculate the second address information), and then the $(i+1)^{th}$ piece of output stream information corresponding to the packet may be obtained by reading information stored in the second address information.

For example, the $(i+1)^{th}$ piece of output stream information corresponding to the packet may include the second port identifier, the second shuttle identifier, and the second identification information. The second port identifier may be extracted from a first preset field in the $(i+1)^{th}$ piece of output stream information corresponding to the packet; the second shuttle identifier may be extracted from a second preset field in the $(i+1)^{th}$ piece of output stream information corresponding to the packet; and the second identification information may be extracted from a third preset field in the $(i+1)^{th}$ piece of output stream information corresponding to the packet.

The second port identifier in the $(i+1)^{th}$ piece of output stream information corresponding to the packet may be used to determine an $(i+1)^{th}$ target port corresponding to the packet. The second shuttle identifier in the $(i+1)^{th}$ piece of output stream information corresponding to the packet may be used to determine an $(i+1)^{th}$ target shuttle corresponding to the packet. The $(i+1)^{th}$ target shuttle corresponds to the $(i+1)^{th}$ target port. The second identification information in the $(i+1)^{th}$ piece of output stream information corresponding to the packet may indicate whether other output stream information (namely, a $(i+2)^{th}$ piece of output stream information) corresponding to the packet exists in the second routing information, and when the $(i+2)^{th}$ piece of output stream information corresponding to the packet exists in the second routing information, a storage address of the $(i+2)^{th}$ piece of output stream information may be determined.

S813: Increase i by 1.

For example, after the $(i+1)^{th}$ piece of output stream information is obtained, i may be increased by 1, and then S808 is performed. It should be understood that, when S808 and S809 are performed in parallel, after i+1, S808 and S809 may be performed again.

It should be understood that, in a process of copying or forwarding the packet, a routing apparatus may first modify a port identifier of a target port in a packet header to the second port identifier found based on the routing information; modify a shuttle identifier of a target shuttle in the packet header to the second shuttle identifier found based on the routing information; and store, in the second buffer, the packet whose port identifier and shuttle identifier are modified.

It should be understood that, after a physical connection between ports of any two devices on a channel is disconnected, each device on the channel may separately release a bandwidth based on the routing information. For example, in FIG. 15a, after the device B and the device C are disconnected, the device B may release, based on the routing information, a bandwidth of a shuttle with Shuttle=1 between the MDP 2 of the device B and the MUP 1 of the device C, and release a bandwidth of the adapter 7 of the device B. In addition, the device B may notify the device A, and then negotiate with the device A, to release a bandwidth of a shuttle with Shuttle=7 between the MUP 1 of the device B and the MUP 1 of the device A. The device A can also release a bandwidth of the adapter 2 of the device A. Similarly, the device C and the device D may also release a bandwidth in this manner. Details are not described herein again.

Compared with the conventional technology in which only a host (Host) device can release a bandwidth and another device disconnected from a source device cannot release a bandwidth, in this application, a bandwidth released based on the routing information is more flexible, and the bandwidth can be released in a timely manner, thereby avoiding a waste of resources.

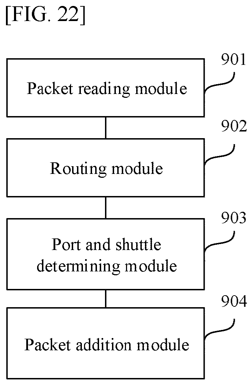

FIG. 22 is a diagram of a structure of an example routing apparatus. The routing apparatus may be configured to perform the method in the foregoing embodiments. Therefore, for beneficial effect that can be achieved by the routing apparatus, refer to beneficial effect in the corresponding method provided above. Details are not described herein again. The routing apparatus may include:

a packet reading module 901, configured to read a packet from a first buffer, where the first buffer corresponds to a source port that receives the packet;
a routing module 902, configured to determine a plurality of pieces of target output stream information based on routing information, a first port identifier of the source port, and a first shuttle identifier that is of a source shuttle and that is obtained from a packet header of the packet, where the routing information includes a plurality of output stream information groups, one output stream information group includes a plurality of pieces of output stream information, and one output stream information group corresponds to one shuttle of one port;

a port and shuttle determining module 903, configured to determine a plurality of target ports and a plurality of target shuttles based on the plurality of pieces of target output stream information, where the plurality of target ports are in one-to-one correspondence with the plurality of target shuttles, and one piece of target output stream information is used to determine one target port and one target shuttle; and

a packet addition module 904, configured to add the packet to a plurality of second buffers, where one second buffer corresponds to one target port.

For example, the routing information includes first routing information and second routing information, the first routing information includes a 1st piece of output stream information in the output stream information group, the second routing information includes other output stream information in the output stream information group, and the plurality of pieces of target output stream information include a 1st piece of output stream information corresponding to the packet and other output stream information corresponding to the packet.

The routing module 902 is specifically configured to: read the 1st piece of output stream information corresponding to the packet from the first routing information based on the first shuttle identifier and the first port identifier; and read other output stream information corresponding to the packet from the second routing information based on the 1st piece of output stream information corresponding to the packet.

For example, the 1st piece of output stream information corresponding to the packet includes first identification information, and the routing module 902 is specifically configured to: when it is determined, based on the first identification information, that the other output stream information corresponding to the packet exists in the second routing information, read the other output stream information corresponding to the packet from the second routing information based on the first identification information.

For example, the routing module 902 is specifically configured to: readd an $i^{th}$ piece of output stream information corresponding to the packet from the second routing information based on the first identification information, where the $i^{th}$ piece of output stream information includes second identification information, and an initial value of i is 2; determine, based on the second identification information included in the $i^{th}$ piece of output stream information, whether an $(i+1)^{th}$ piece of output stream information corresponding to the packet exists in the second routing information; when it is determined, based on the second identification information included in the $i^{th}$ piece of output stream information, that the $(i+1)^{th}$ piece of output stream information corresponding to the packet exists in the second routing information, read the $(i+1)^{th}$ piece of output stream information corresponding to the packet from the second routing information based on the second identification information included in the $i^{th}$ piece of output stream information, where the $(i+1)^{th}$ piece of output stream information corresponding to the packet includes the second identification information; and increase i by 1, and return to perform the step of determining, based on the second identification information included in the $i^{th}$ piece of output stream information, whether the $(i+1)^{th}$ piece of output stream information corresponding to the packet exists in the second routing information.

For example, the packet addition module 904 is specifically configured to: copy the packet to a second buffer corresponding to a first target port, and forward the packet to a second buffer corresponding to a second target port. The second target port is a last target port, and the first target port is a port in the plurality of target ports other than the second target port.

For example, the target output stream information includes a second port identifier and a second shuttle identifier, and the port and shuttle determining module 903 is specifically configured to: determine the plurality of target ports based on a plurality of second port identifiers included in the plurality of pieces of target output stream information; and determine one target shuttle from a plurality of shuttles of one target port based on one second shuttle identifier included in one piece of target output stream information.

For example, when the first identification information is preset information, it is determined that the other output stream information corresponding to the packet does not exist in the second routing information; or when the first identification information is address information, it is determined that the other output stream information corresponding to the packet exists in the second routing information.

For example, the port and shuttle determining module 903 is further configured to: when it is determined, based on the first identification information, that the other output stream information corresponding to the packet does not exist in the second routing information, determine a 1st target port and a 1st target shuttle based on the 1st piece of output stream information corresponding to the packet, where the 1st target port corresponds to the 1st target shuttle; and the packet addition module 904 is further configured to forward the packet to a second buffer corresponding to the 1st target port.

For example, the packet is a packet of multimedia data.

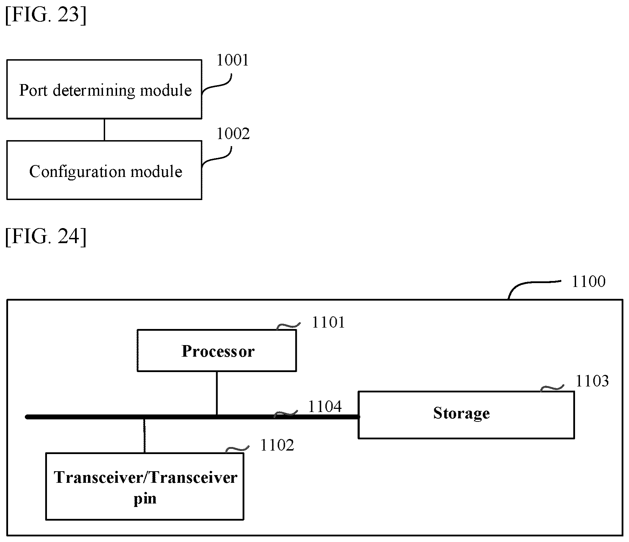

FIG. 23 is a diagram of a structure of an example routing information configuration apparatus. The routing information configuration apparatus may be configured to perform the method in the foregoing embodiments. Therefore, for beneficial effect that can be achieved by the routing information configuration apparatus, refer to beneficial effect in the corresponding method provided above. Details are not described herein again. The routing information configuration apparatus may be a part of the foregoing management and control apparatus. The routing information configuration apparatus may include:

a port determining module 1001, configured to determine an input stream port and a plurality of output stream ports corresponding to the input stream port; and

a configuration module 1002, configured to: for a $j^{th}$ output stream port in the plurality of output stream ports: configure a first preset field in a $j^{th}$ piece of output stream information in an output stream information group based on a port identifier of the $j^{th}$ output stream port, and configure a second preset field in the $j^{th}$ piece of output stream information based on a shuttle identifier of an output stream shuttle of the $j^{th}$ output stream port, where the output stream information group corresponds to an input stream shuttle of the input stream port; and when the $j^{th}$ output stream port is not a last output stream port, configure a third preset field in the $j^{th}$ piece of output stream information based on address information of a $(j+1)^{th}$ piece of output stream information in the output stream information group; or when the $j^{th}$ output stream port is a last output stream port, configure a third preset field in the $j^{th}$ piece of output stream information based on preset information.

In an example, FIG. 24 is a block diagram of an apparatus 1100 according to an embodiment of this application. The apparatus 1100 may include a processor 1101 and a transceiver/transceiver pin 1102, and optionally further includes a storage 1103.

Components of the apparatus 1100 are coupled together through a bus 1104. In addition to a data bus, the bus 1104 further includes a power bus, a control bus, and a status signal bus. However, for clear description, various buses are referred to as the bus 1104 in the figure.

Optionally, the storage 1103 may be configured to store instructions in the foregoing method embodiments. The processor 1101 may be configured to: execute the instructions in the storage 1103, control a receive pin to receive a signal, and control a transmit pin to send a signal.

The apparatus 1100 may be the electronic device or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors. The interface circuit is configured to: receive a signal from a storage of an electronic device, and send the signal to the processor. The signal includes computer instructions stored in the storage. When the processor executes the computer instructions, the electronic device is enabled to perform the foregoing related method steps, to implement the routing method and/or the routing information configuration method in the foregoing embodiments. The interface circuit may be the transceiver 1102.

An embodiment further provides a computer storage medium. The computer storage medium stores computer instructions. When the computer instructions are run on an electronic device, the electronic device is enabled to perform the foregoing related method steps, to implement the routing method and/or the routing information configuration method in the foregoing embodiments.

An embodiment further provides a computer program product. When the computer program product is run on a computer, the computer is enabled to perform the foregoing related method steps, to implement the routing method and/or the routing information configuration method in the foregoing embodiments.

In addition, an embodiment of this application further provides an apparatus. The apparatus may be specifically a chip, a component, or a module, and the apparatus may include a processor and a storage that are connected. The storage is configured to store computer-executable instructions. When the apparatus runs, the processor may execute the computer-executable instructions stored in the storage, so that the chip performs the routing method and/or the routing information configuration method in the foregoing method embodiments.

The electronic device, the computer storage medium, the computer program product, or the chip provided in embodiments is configured to perform the corresponding method provided above. Therefore, for beneficial effect that can be achieved by the electronic device, the computer storage medium, the computer program product, or the chip, refer to the beneficial effect in the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example.

For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A transmission method, wherein a first device and a second device are connected through a port, and the method comprises:

    obtaining a packet of a first service stream from a receive buffer; and

transmitting the packet of the first service stream through a transmit buffer of a first service virtual shuttle based on a router forwarding table, wherein the first service virtual shuttle is a virtual shuttle between the first device and the second device, the router forwarding table indicates a packet forwarding rule based on a service virtual shuttle, and the service virtual shuttle is used to support bidirectional transmission of a service stream between two devices.

2.  The method according to claim 1, wherein the packet of the first service stream comprises a first shuttle identifier, and the first shuttle identifier indicates the first service virtual shuttle.

3.  The method according to claim 1 or 2, wherein a forward bandwidth of the first

    service virtual shuttle is inconsistent with a reverse bandwidth of the first service virtual shuttle; and
    a forward direction is a direction from the first device to the second device, and a reverse direction is a direction from the second device to the first device.

4.  The method according to claim 3, wherein the forward bandwidth is 0.

5.  The method according to claim 3, wherein the reverse bandwidth is 0.

6.  The method according to any one of claims 1 to 5, wherein that the first device and the second device are connected through the port comprises:
    the first device and the second device are connected through a unified multimedia interconnection port.

7.  The method according to any one of claims 1 to 6, wherein the first device comprises a management adapter, a plurality of service adapters, and a plurality of ports, each port comprises a management virtual shuttle and a plurality of service virtual shuttles, and the management adapter and the plurality of service adapters form a virtual port.

8.  The method according to any one of claims 1 to 7, wherein the router forwarding table comprises input stream information and output stream information, the input stream information indicates a port identifier and a shuttle identifier that correspond to an input stream, and the output stream information indicates a target port identifier and a target shuttle identifier that correspond to an output stream.

9.  The method according to any one of claims 1 to 8, wherein obtaining the packet of the first service stream from the receive buffer comprises:
    obtaining the packet of the first service stream from a receive buffer of a first service adapter in the first device, wherein the packet of the first service stream is obtained by converting a to-be-transmitted signal or to-be-transmitted data.

10. The method according to any one of claims 1 to 8, wherein obtaining the packet of the first service stream from the receive buffer comprises:
    obtaining the packet of the first service stream from a receive buffer of a second service virtual shuttle, wherein a receive port is prohibited from forwarding a packet on a service virtual shuttle in the receive port to another service virtual shuttle in the receive port.

11. The method according to claim 9 or 10, wherein the method further comprises:
    forwarding the packet of the first service stream to a transmit buffer of a second service adapter in the first device based on the router forwarding table.

12. The method according to claim 11, wherein the first service adapter and the second service adapter in the first device form a virtual channel.

13. The method according to any one of claims 1 to 12, wherein the router forwarding table indicates a plurality of pieces of output stream information, and the method further comprises:
    transmitting the packet of the first service stream through a transmit buffer of a third service virtual shuttle indicated by the router forwarding table, wherein when a packet of the same service stream is forwarded to another port, the port comprises a maximum of one service virtual shuttle.

14. The method according to any one of claims 1 to 13, wherein a virtual channel between two adapters comprises a plurality of cascaded virtual shuttles, and the virtual channel supports bidirectional transmission.

15. The method according to claim 14, wherein the router forwarding table further comprises a receiver count, and the receiver count indicates a quantity of virtual channels on which a service virtual shuttle is used.

16. The method according to any one of claims 1 to 15, wherein the method further comprises:
transmitting a packet of a second service stream through a transmit buffer of a fourth service virtual shuttle based on the router forwarding table, wherein the first service virtual shuttle and the fourth service virtual shuttle belong to a same port.

17. The method according to any one of claims 1 to 16, wherein the method further comprises:
obtaining a first management packet from the management virtual shuttle, and forwarding the first management packet to the management adapter in the first device.

18. The method according to any one of claims 1 to 17, wherein the method further comprises:
obtaining a second management packet from the management adapter in the first device, and forwarding the second management packet to a management virtual shuttle in a port specified by the management adapter in the first device.

19. A transmission network, wherein the transmission network comprises a first device, a second device, and a router device, and the first device, the second device, and the router device are connected through ports;

the first device is configured to transmit a packet of a first service stream with the second device through the router device, wherein the packet of the first service stream is obtained by converting first data;
the first device is further configured to transmit a packet of a second service stream with the second device through the router device, wherein the packet of the second service stream is obtained by converting second data; and
the second device is configured to transmit a packet of a third service stream with the first device through the router device, wherein the packet of the third service stream is obtained by converting third data.

20. The transmission network according to claim 19, wherein

the first device is further configured to obtain the packet of the first service stream from a receive buffer of a first service adapter in the first device; and
the first device is further configured to obtain the packet of the second service stream from a receive buffer of a second service adapter in the first device.

21. The transmission network according to claim 20, wherein

the first device is specifically configured to transmit the packet of the first service stream to the router device through a transmit buffer of a first service virtual shuttle based on a first router forwarding table, wherein the first service virtual shuttle is a virtual shuttle between the first device and the router device, the router forwarding table indicates a packet forwarding rule based on a service virtual shuttle, and the service virtual shuttle is used to support bidirectional transmission of a service stream between two devices;
the router device is configured to receive the packet of the first service stream through a receive buffer of the first service virtual shuttle;
the router device is further configured to transmit the packet of the first service stream to the second device through a transmit buffer of a second service virtual shuttle based on a second router forwarding table, wherein the second service virtual shuttle is a virtual shuttle between the router device and the second device; the second device is specifically configured to receive the packet of the first service stream through a receive buffer of the second service virtual shuttle; and the second device is further configured to forward the packet of the first service stream to a receive buffer of a service adapter in the second device based on a third router forwarding table, and the service adapter restores the first service stream to the signal or data.

22. The transmission network according to claim 20 or 21, wherein

the first device is specifically configured to transmit the packet of the second service stream to the router device through a transmit buffer of a third service virtual shuttle based on the first router forwarding table, wherein the third service virtual shuttle is a virtual shuttle between the first device and the router device; the router device is further configured to receive the packet of the second service stream through a receive buffer of the third service virtual shuttle;

the router device is further configured to transmit the packet of the second service stream to the second device through a transmit buffer of a fourth service virtual shuttle based on the second router forwarding table, wherein the fourth service virtual shuttle is a virtual shuttle between the router device and the second device; the second device is specifically configured to receive the packet of the second service stream through a receive buffer of the fourth service virtual shuttle; and the second device is further configured to forward the packet of the second service stream to a receive buffer of a service adapter in the second device based on the third router forwarding table.

23. The transmission network according to any one of claims 19 to 22, wherein

the second device is further configured to obtain the packet of the third service stream from a receive buffer of a third service adapter in the second device.

24. The transmission network according to claim 23, wherein

the second device is specifically configured to transmit the packet of the third service stream to the router device through a transmit buffer of a fifth service virtual shuttle based on the third router forwarding table, wherein the fifth service virtual shuttle is a virtual shuttle between the second device and the router device; the router device is further configured to receive the packet of the third service stream through a receive buffer of the fifth service virtual shuttle;

the router device is further configured to transmit the packet of the third service stream to the first device through a transmit buffer of a sixth service virtual shuttle based on the second router forwarding table, wherein the sixth service virtual shuttle is a virtual shuttle between the router device and the first device;

the first device is specifically configured to receive the packet of the third service stream through a receive buffer of the sixth service virtual shuttle; and

the first device is further configured to forward the packet of the third service stream to a receive buffer of a service adapter in the first device based on the first router forwarding table.

25. A transmission network, wherein the transmission network comprises a first device, a second device, and a third device, and the first device, the second device, and the third device are connected through ports;

the first device is configured to obtain a packet of a first service stream from a receive buffer of a service adapter in the first device, wherein the packet of the first service stream is obtained by converting first data;

the first device is further configured to transmit the packet of the first service stream to the second device through a transmit buffer of a first service virtual shuttle based on a first router forwarding table, wherein the router forwarding table indicates a packet forwarding rule based on a service virtual shuttle, and the service virtual shuttle is used to support bidirectional transmission of a service stream between two devices;

the second device is configured to receive the packet of the first service stream through a receive buffer of the first service virtual shuttle;

the second device is further configured to transmit the packet of the first service stream to the third device through a transmit buffer of a second service virtual shuttle based on a second router forwarding table;

the second device is further configured to forward the packet of the first service stream to a receive buffer of a service adapter in the second device based on the second router forwarding table, and the service adapter restores the first service stream to a signal or data;

the third device is configured to receive the packet of the first service stream through a receive buffer of the second service virtual shuttle; and

the third device is further configured to forward the packet of the first service stream to a receive buffer of a service adapter in the third device based on a third router forwarding table, and the service adapter restores the first service stream to a signal or data.

26. A transmission network, wherein the transmission network comprises a first device, a second device, a third device, and a plurality of router devices, the first device, the second device, the third device, and the plurality of router devices are connected through ports, and the first device is configured to perform the method steps according to any one of claims 1 to 18.

27. The transmission network according to claim 26, wherein a network topology of the transmission network is a star topology or a mesh topology.

28. A transmission apparatus, comprising:

a receiving module, configured to obtain a packet of a first service stream from a receive buffer; and
a sending module, configured to transmit the packet of the first service stream through a transmit buffer of a first service virtual shuttle based on a router forwarding table, wherein the first service virtual shuttle is a virtual shuttle between the first device and the second device, the router forwarding table indicates a packet forwarding rule based on a service virtual shuttle, and the service virtual shuttle is used to support bidirectional transmission of a service stream between two devices.

29. An electronic device, wherein the electronic device comprises a storage and a processor, the storage is configured to store a group of computer instructions, and when the processor executes the group of computer instructions, the processor performs operation steps of the method according to any one of claims 1 to 18.

30. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the processor is enabled to perform operation steps of the method according to any one of claims 1 to 18.

31. A computer-readable storage medium, wherein the computer-readable storage medium stores a computer program, and when the computer program is run on a computer or a processor, the computer or the processor is enabled to perform operation steps of the method according to any one of claims 1 to 18.

32. A routing method, wherein the method comprises:

reading a packet from a first buffer, wherein the first buffer corresponds to a source port that receives the packet;
determining a plurality of pieces of target output stream information based on routing information, a first port identifier of the source port, and a first shuttle identifier that is of a source shuttle and that is obtained from a packet header of the packet, wherein the routing information comprises a plurality of output stream information groups, one output stream information group comprises a plurality of pieces of output stream information, and one output stream information group corresponds to one shuttle of one port;
determining a plurality of target ports and a plurality of target shuttles based on the plurality of pieces of target output stream information, wherein the plurality of target ports are in one-to-one correspondence with the plurality of target shuttles, and one piece of target output stream information is used to determine one target port and one target shuttle; and
adding the packet to a plurality of second buffers, wherein one second buffer corresponds to one target port.

33. The method according to claim 32, wherein the routing information comprises

first routing information and second routing information, the first routing information comprises a 1st piece of output stream information in the output stream information group, the second routing information comprises other output stream information in the output stream information group, and the plurality of pieces of target output stream information comprise a 1st piece of output stream information corresponding to the packet and other output stream information corresponding to the packet; and
determining the plurality of pieces of target output stream information based on the routing information, the first port identifier of the source port, and the first shuttle identifier that is of the source shuttle and that is obtained from the packet header of the packet comprises:

reading the 1st piece of output stream information corresponding to the packet from the first routing information based on the first shuttle identifier and the first port identifier; and
reading other output stream information corresponding to the packet from the second routing information based on the 1st piece of output stream information corresponding to the packet.

34. The method according to claim 33, wherein the 1st piece of output stream information corresponding to the packet comprises first identification information, and reading the other output stream information corresponding to the packet from the second routing information based on the 1st piece of output stream information corresponding to the packet comprises:
when it is determined, based on the first identification information, that the other output stream information corresponding to the packet exists in the second routing information, reading the other output stream information corresponding to the packet from the second routing information based on the first identification information.

35. The method according to claim 34, wherein reading the other output stream information corresponding to the packet from the second routing information based on the first identification information comprises:

reading an $i^{th}$ piece of output stream information corresponding to the packet from the second routing information based on the first identification information,
wherein the $i^{th}$ piece of output stream information comprises second identification information, and an initial value of i is 2;
determining, based on the second identification information comprised in the $i^{th}$ piece of output stream information, whether an $(i+1)^{th}$ piece of output stream information corresponding to the packet exists in the second routing information;
when it is determined, based on the second identification information comprised in the $i^{th}$ piece of output stream information, that the $(i+1)^{th}$ piece of output stream information corresponding to the packet exists in the second routing information, reading the $(i+1)^{th}$ piece of output stream information corresponding to the packet from the second routing information based on the second identification information comprised in the $i^{th}$ piece of output stream information, wherein the $(i+1)^{th}$ piece of output stream information corresponding to the packet comprises the second identification information; and
increasing i by 1, and returning to perform the step of determining, based on the second identification information comprised in the $i^{th}$ piece of output stream information, whether the $(i+1)^{th}$ piece of output stream information corresponding to the packet exists in the second routing information.

36. The method according to any one of claims 32 to 35, wherein adding the packet to the plurality of second buffers comprises:

copying the packet to a second buffer corresponding to a first target port, and forwarding the packet to a second buffer corresponding to a second target port, wherein
the second target port is a last target port, and the first target port is a port in the plurality of target ports other than the second target port.

37. The method according to any one of claims 32 to 36, wherein the target output stream information comprises a second port identifier and a second shuttle identifier, and determining the plurality of target ports and the plurality of target shuttles based on the plurality of pieces of target output stream information comprises:

determining the plurality of target ports based on a plurality of second port identifiers comprised in the plurality of pieces of target output stream information; and
determining one target shuttle from a plurality of shuttles of one target port based on one second shuttle identifier comprised in one piece of target output stream information.

38. The method according to claim 34 or 35, wherein

when the first identification information is preset information, determining that the other output stream information corresponding to the packet does not exist in the second routing information; or
when the first identification information is address information, determining that the other output stream information corresponding to the packet exists in the second routing information.

39. The method according to claim 34 or 35, wherein the method further comprises:

when it is determined, based on the first identification information, that the other output stream information corresponding to the packet does not exist in the second routing information, determining a $1^{st}$ target port and a $1^{st}$ target shuttle based on the $1^{st}$ piece of output stream information corresponding to the packet, wherein the $1^{st}$ target port corresponds to the $1^{st}$ target shuttle; and
forwarding the packet to a second buffer corresponding to the $1^{st}$ target port.

40. The method according to any one of claims 32 to 39, wherein the packet is a packet of multimedia data.

41. A routing information configuration method, wherein the method comprises:

determining an input stream port and a plurality of output stream ports corresponding to the input stream port; and
for a $j^{th}$ output stream port in the plurality of output stream ports:

configuring a first preset field in a $j^{th}$ piece of output stream information in an output stream information group based on a port identifier of the $j^{th}$ output stream port, and configuring a second preset field in the $j^{th}$ piece of output stream information based on a shuttle identifier of an output stream shuttle of the $j^{th}$ output stream port, wherein the output stream information group corresponds to an input stream shuttle of the input stream port; and

when the $j^{th}$ output stream port is not a last output stream port, configuring a third preset field in the $j^{th}$ piece of output stream information based on address information of a $(j+1)^{th}$ piece of output stream information in the output stream information group; or

when the $j^{th}$ output stream port is a last output stream port, configuring a third preset field in the $j^{th}$ piece of output stream information based on preset information.

42. A routing apparatus, wherein the apparatus comprises:

a packet reading module, configured to read a packet from a first buffer, wherein the first buffer corresponds to a source port that receives the packet;

a routing module, configured to determine a plurality of pieces of target output stream information based on routing information, a first port identifier of the source port, and a first shuttle identifier that is of the source shuttle and that is obtained from a packet header of the packet, wherein the routing information comprises a plurality of output stream information groups, one output stream information group comprises a plurality of pieces of output stream information, and one output stream information group corresponds to one shuttle of one port;

a port and shuttle determining module, configured to determine a plurality of target ports and a plurality of target shuttles based on the plurality of pieces of target output stream information, wherein the plurality of target ports are in one-to-one correspondence with the plurality of target shuttles, and one piece of target output stream information is used to determine one target port and one target shuttle; and

a packet addition module, configured to add the packet to a plurality of second buffers, wherein one second buffer corresponds to one target port.

43. A routing information configuration apparatus, wherein the apparatus comprises:

a port determining module, configured to determine an input stream port and a plurality of output stream ports corresponding to the input stream port; and

a configuration module, configured to: for a $j^{th}$ output stream port in the plurality of output stream ports: configure a first preset field in a $j^{th}$ piece of output stream information in an output stream information group based on a port identifier of the $j^{th}$ output stream port, and configure a second preset field in the $j^{th}$ piece of output stream information based on a shuttle identifier of an output stream shuttle of the $j^{th}$ output stream port, wherein the output stream information group corresponds to an input stream shuttle of the input stream port; and when the $j^{th}$ output stream port is not a last output stream port, configure a third preset field in the $j^{th}$ piece of output stream information based on address information of a $(j+1)^{th}$ piece of output stream information in the output stream information group;

or when the $j^{th}$ output stream port is a last output stream port, configure a third preset field in the $j^{th}$ piece of output stream information based on preset information.

44. An electronic device, comprising:

a storage and a processor, wherein the storage is coupled to the processor; and

the storage stores program instructions, and when the program instructions are executed by the processor, the electronic device is enabled to perform the routing method according to any one of claims 1 to 9.

45. An electronic device, comprising:

a storage and a processor, wherein the storage is coupled to the processor; and

the storage stores program instructions, and when the program instructions are executed by the processor, the electronic device is enabled to perform the routing information configuration method according to claim 41.

46. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the electronic device is enabled to perform the routing method according to any one of claims 1 to 9.

47. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the electronic device is enabled to perform the routing information configuration method according to claim 41.

48. A computer storage medium, wherein the computer-readable storage medium stores a computer program, and when the computer program is run on a computer or a processor, the computer or the processor is enabled to perform the method according to any one of claims 1 to 10.

49. A computer program product, wherein the computer program product comprises a software program, and when the software program is executed by a computer or a processor, the steps of the method according to any one of claims 1 to 10 are performed.

**Amended claims under Art. 19.1 PCT**

1. A transmission method, wherein a first device and a second device are connected through a port, and the method comprises:

   obtaining a packet of a first service stream from a receive buffer; and
   transmitting the packet of the first service stream through a transmit buffer of a first service virtual shuttle based on a router forwarding table, wherein the first service virtual shuttle is a virtual shuttle between the first device and the second device, the router forwarding table indicates a packet forwarding rule based on a service virtual shuttle, and the service virtual shuttle is used to support bidirectional transmission of a service stream between two devices.

2. The method according to claim 1, wherein the packet of the first service stream comprises a first shuttle identifier, and the first shuttle identifier indicates the first service virtual shuttle.

3. The method according to claim 1 or 2, wherein a forward bandwidth of the first service virtual shuttle is inconsistent with a reverse bandwidth of the first service virtual shuttle; and
a forward direction is a direction from the first device to the second device, and a reverse direction is a direction from the second device to the first device.

4. The method according to claim 3, wherein the forward bandwidth is 0.

5. The method according to claim 3, wherein the reverse bandwidth is 0.

6. The method according to any one of claims 1 to 5, wherein that the first device and the second device are connected through the port comprises:
the first device and the second device are connected through a unified multimedia interconnection port.

7. The method according to any one of claims 1 to 6, wherein the first device comprises a management adapter, a plurality of service adapters, and a plurality of ports, each port comprises a management virtual shuttle and a plurality of service virtual shuttles, and the management adapter and the plurality of service adapters form a virtual port.

8. The method according to any one of claims 1 to 7, wherein the router forwarding table comprises input stream information and output stream information, the input stream information indicates a port identifier and a shuttle identifier that correspond to an input stream, and the output stream information indicates a target port identifier and a target shuttle identifier that correspond to an output stream.

9. The method according to any one of claims 1 to 8, wherein obtaining the packet of the first service stream from the receive buffer comprises:
obtaining the packet of the first service stream from a receive buffer of a first service adapter in the first device, wherein the packet of the first service stream is obtained by converting a to-be-transmitted signal or to-be-transmitted data.

10. The method according to any one of claims 1 to 8, wherein obtaining the packet of the first service stream from the receive buffer comprises:
obtaining the packet of the first service stream from a receive buffer of a second service virtual shuttle, wherein a receive port is prohibited from forwarding a packet on a service virtual shuttle in the receive port to another service virtual shuttle in the receive port.

11. The method according to claim 9 or 10, wherein the method further comprises:
forwarding the packet of the first service stream to a transmit buffer of a second service adapter in the first device based on the router forwarding table.

12. The method according to claim 11, wherein the first service adapter and the second service adapter in the first device form a virtual channel.

13. The method according to any one of claims 1 to 12, wherein the router forwarding table indicates a plurality of pieces of output stream information, and the method further comprises:
transmitting the packet of the first service stream through a transmit buffer of a third service virtual shuttle indicated by the router forwarding table, wherein when a packet of the same service stream is forwarded to another port, the port comprises a maximum of one service virtual shuttle.

14. The method according to any one of claims 1 to 13, wherein a virtual channel between two adapters comprises a plurality of cascaded virtual shuttles, and the virtual channel supports bidirectional transmission.

15. The method according to claim 14, wherein the router forwarding table further comprises a receiver count, and the receiver count indicates a quantity of virtual channels on which a service virtual shuttle is used.

16. The method according to any one of claims 1 to 15, wherein the method further comprises:
transmitting a packet of a second service stream through a transmit buffer of a fourth service virtual shuttle based on the router forwarding table, wherein the first service virtual shuttle and the fourth service virtual shuttle belong to a same port.

17. The method according to any one of claims 1 to 16, wherein the method further comprises:
obtaining a first management packet from the management virtual shuttle, and forwarding the first management packet to the management adapter in the first device.

18. The method according to any one of claims 1 to 17, wherein the method further comprises:
obtaining a second management packet from the management adapter in the first device, and forwarding the second management packet to a management virtual shuttle in a port specified by the management adapter in the first device.

19. A transmission network, wherein the transmission network comprises a first device, a second device, and a router device, and the first device, the second device, and the router device are connected through ports;

the first device is configured to transmit a packet of a first service stream with the second device through the router device, wherein the packet of the first service stream is obtained by converting first data;
the first device is further configured to transmit a packet of a second service stream with the second device through the router device, wherein the packet of the second service stream is obtained by converting second data; and
the second device is configured to transmit a packet of a third service stream with the first device through the router device, wherein the packet of the third service stream is obtained by converting third data.

20. The transmission network according to claim 19, wherein

the first device is further configured to obtain the packet of the first service stream from a receive buffer of a first service adapter in the first device; and
the first device is further configured to obtain the packet of the second service stream from a receive buffer of a second service adapter in the first device.

21. The transmission network according to claim 20, wherein

the first device is specifically configured to transmit the packet of the first service stream to the router device through a transmit buffer of a first service virtual shuttle based on a first router forwarding table, wherein the first service virtual shuttle is a virtual shuttle between the first device and the router device, the router forwarding table indicates a packet forwarding rule based on a service virtual shuttle, and the service virtual shuttle is used to support bidirectional transmission of a service stream between two devices;

the router device is configured to receive the packet of the first service stream through a receive buffer of the first service virtual shuttle;

the router device is further configured to transmit the packet of the first service stream to the second device through a transmit buffer of a second service virtual shuttle based on a second router forwarding table, wherein the second service virtual shuttle is a virtual shuttle between the router device and the second device; the second device is specifically configured to receive the packet of the first service stream through a receive buffer of the second service virtual shuttle; and the second device is further configured to forward the packet of the first service stream to a receive buffer of a service adapter in the second device based on a third router forwarding table, and the service adapter restores the first service stream to the signal or data.

22. The transmission network according to claim 20 or 21, wherein

the first device is specifically configured to transmit the packet of the second service stream to the router device through a transmit buffer of a third service virtual shuttle based on the first router forwarding table, wherein the third service virtual shuttle is a virtual shuttle between the first device and the router device;

the router device is further configured to receive the packet of the second service stream through a receive buffer of the third service virtual shuttle;

the router device is further configured to transmit the packet of the second service stream to the second device through a transmit buffer of a fourth service virtual shuttle based on the second router forwarding table, wherein the fourth service virtual shuttle is a virtual shuttle between the router device and the second device;

the second device is specifically configured to receive the packet of the second service stream through a receive buffer of the fourth service virtual shuttle; and

the second device is further configured to forward the packet of the second service stream to a receive buffer of a service adapter in the second device based on the third router forwarding table.

23. The transmission network according to any one of claims 19 to 22, wherein
the second device is further configured to obtain the packet of the third service stream from a receive buffer of a third service adapter in the second device.

24. The transmission network according to claim 23, wherein

the second device is specifically configured to transmit the packet of the third service stream to the router device through a transmit buffer of a fifth service virtual shuttle based on the third router forwarding table, wherein the fifth service virtual shuttle is a virtual shuttle between the second device and the router device;

the router device is further configured to receive the packet of the third service stream through a receive buffer of the fifth service virtual shuttle;

the router device is further configured to transmit the packet of the third service stream to the first device through a transmit buffer of a sixth service virtual shuttle based on the second router forwarding table, wherein the sixth service virtual shuttle is a virtual shuttle between the router device and the first device;

the first device is specifically configured to receive the packet of the third service stream through a receive buffer of the sixth service virtual shuttle; and

the first device is further configured to forward the packet of the third service stream to a receive buffer of a service adapter in the first device based on the first router forwarding table.

25. A transmission network, wherein the transmission network comprises a first

device, a second device, and a third device, and the first device, the second device, and the third device are connected through ports;

the first device is configured to obtain a packet of a first service stream from a receive buffer of a service adapter in the first device, wherein the packet of the first service stream is obtained by converting first data;

the first device is further configured to transmit the packet of the first service stream to the second device through a transmit buffer of a first service virtual shuttle based on a first router forwarding table, wherein the router forwarding table indicates a packet forwarding rule based on a service virtual shuttle, and the service virtual shuttle is used to support bidirectional transmission of a service stream between two devices;

the second device is configured to receive the packet of the first service stream through a receive buffer of the first service virtual shuttle;

the second device is further configured to transmit the packet of the first service stream to the third device through a transmit buffer of a second service virtual shuttle based on a second router forwarding table;

the second device is further configured to forward the packet of the first service stream to a receive buffer of a service adapter in the second device based on the second router forwarding table, and the service adapter restores the first service stream to a signal or data;

the third device is configured to receive the packet of the first service stream through a receive buffer of the second service virtual shuttle; and

the third device is further configured to forward the packet of the first service stream to a receive buffer of a service adapter in the third device based on a third router forwarding table, and the service adapter restores the first service stream to the signal or data.

26. A transmission network, wherein the transmission network comprises a first device, a second device, a third device, and a plurality of router devices, the first device, the second device, the third device, and the plurality of router devices are connected through ports, and the first device is configured to perform the method steps according to any one of claims 1 to 18.

27. The transmission network according to claim 26, wherein a network topology of the transmission network is a star topology or a mesh topology.

28. A transmission apparatus, comprising:

a receiving module, configured to obtain a packet of a first service stream from a receive buffer; and

a sending module, configured to transmit the packet of the first service stream through a transmit buffer of a first service virtual shuttle based on a router forwarding table, wherein the first service virtual shuttle is a virtual shuttle between the first device and the second device, the router forwarding table indicates a packet forwarding rule based on a service virtual shuttle, and the service virtual shuttle is used to support bidirectional transmission of a service stream between two devices.

29. An electronic device, wherein the electronic device comprises a storage and a processor, the storage is configured to store a group of computer instructions, and when the processor executes the group of computer instructions, the processor performs operation steps of the method according to any one of claims 1 to 18.

30. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the processor is enabled to perform operation steps of the method according to any one of claims 1 to 18.

31. A computer-readable storage medium, wherein the computer-readable storage medium stores a computer program, and when the computer program is run on a computer or a processor, the computer or the processor is enabled to perform operation steps of the method according to any one of claims 1 to 18.

32. A routing method, wherein the method comprises:

reading a packet from a first buffer, wherein the first buffer corresponds to a source port that receives the packet;

determining a plurality of pieces of target output stream information based on routing information, a first port identifier of the source port, and a first shuttle identifier that is of a source shuttle and that is obtained from a packet header of the packet, wherein the routing information comprises a plurality of output stream information groups, one output stream information group comprises a plurality of pieces of output stream information, and one output stream information group corresponds to one shuttle of one port;

determining a plurality of target ports and a plurality of target shuttles based on the plurality of pieces of target output stream information, wherein the plurality of target ports are in one-to-one correspondence with the plurality of target shuttles, and one piece of target output stream information is used to determine one target port and one target shuttle; and

adding the packet to a plurality of second buffers, wherein one second buffer corresponds to one target port.

33. The method according to claim 32, wherein the routing information comprises

first routing information and second routing information, the first routing information comprises a 1st piece of

output stream information in the output stream information group, the second routing information comprises other output stream information in the output stream information group, and the plurality of pieces of target output stream information comprise a 1st piece of output stream information corresponding to the packet and other output stream information corresponding to the packet; and

determining the plurality of pieces of target output stream information based on the routing information, the first port identifier of the source port, and the first shuttle identifier that is of the source shuttle and that is obtained from the packet header of the packet comprises:

reading the 1st piece of output stream information corresponding to the packet from the first routing information based on the first shuttle identifier and the first port identifier; and
reading other output stream information corresponding to the packet from the second routing information based on the 1st piece of output stream information corresponding to the packet.

34. The method according to claim 33, wherein the 1st piece of output stream information corresponding to the packet comprises first identification information, and reading the other output stream information corresponding to the packet from the second routing information based on the 1st piece of output stream information corresponding to the packet comprises:
when it is determined, based on the first identification information, that the other output stream information corresponding to the packet exists in the second routing information, reading the other output stream information corresponding to the packet from the second routing information based on the first identification information.

35. The method according to claim 34, wherein reading the other output stream information corresponding to the packet from the second routing information based on the first identification information comprises:

reading an $i^{th}$ piece of output stream information corresponding to the packet from the second routing information based on the first identification information, wherein the $i^{th}$ piece of output stream information comprises second identification information, and an initial value of i is 2;
determining, based on the second identification information comprised in the $i^{th}$ piece of output stream information, whether an $(i+1)^{th}$ piece of output stream information corresponding to the packet exists in the second routing information;
when it is determined, based on the second identification information comprised in the $i^{th}$ piece of output stream information, that the $(i+1)^{th}$ piece of output stream information corresponding to the packet exists in the second routing information, reading the $(i+1)^{th}$ piece of output stream information corresponding to the packet from the second routing information based on the second identification information comprised in the $i^{th}$ piece of output stream information, wherein the $(i+1)^{th}$ piece of output stream information corresponding to the packet comprises the second identification information; and
increasing i by 1, and returning to perform the step of determining, based on the second identification information comprised in the $i^{th}$ piece of output stream information, whether the $(i+1)^{th}$ piece of output stream information corresponding to the packet exists in the second routing information.

36. The method according to any one of claims 32 to 35, wherein adding the packet to the plurality of second buffers comprises:

copying the packet to a second buffer corresponding to a first target port, and forwarding the packet to a second buffer corresponding to a second target port, wherein
the second target port is a last target port, and the first target port is a port in the plurality of target ports other than the second target port.

37. The method according to any one of claims 32 to 36, wherein the target output stream information comprises a second port identifier and a second shuttle identifier, and determining the plurality of target ports and the plurality of target shuttles based on the plurality of pieces of target output stream information comprises:

determining the plurality of target ports based on a plurality of second port identifiers comprised in the plurality of pieces of target output stream information; and
determining one target shuttle from a plurality of shuttles of one target port based on one second shuttle identifier comprised in one piece of target output stream information.

38. The method according to claim 34 or 35, wherein

when the first identification information is preset information, determining that the other output stream information corresponding to the packet does not exist in the second routing information; or

when the first identification information is address information, determining that the other output stream information corresponding to the packet exists in the second routing information.

39. The method according to claim 34 or 35, wherein the method further comprises:

when it is determined, based on the first identification information, that the other output stream information corresponding to the packet does not exist in the second routing information, determining a $1^{st}$ target port and a $1^{st}$ target shuttle based on the $1^{st}$ piece of output stream information corresponding to the packet, wherein the $1^{st}$ target port corresponds to the $1^{st}$ target shuttle; and

forwarding the packet to a second buffer corresponding to the $1^{st}$ target port.

40. The method according to any one of claims 32 to 39, wherein the packet is a packet of multimedia data.

41. A routing information configuration method, wherein the method comprises:

determining an input stream port and a plurality of output stream ports corresponding to the input stream port; and

for a $j^{th}$ output stream port in the plurality of output stream ports:

configuring a first preset field in a $j^{th}$ piece of output stream information in an output stream information group based on a port identifier of the $j^{th}$ output stream port, and configuring a second preset field in the $j^{th}$ piece of output stream information based on a shuttle identifier of an output stream shuttle of the $j^{th}$ output stream port, wherein the output stream information group corresponds to an input stream shuttle of the input stream port; and

when the $j^{th}$ output stream port is not a last output stream port, configuring a third preset field in the $j^{th}$ piece of output stream information based on address information of a $(j+1)^{th}$ piece of output stream information in the output stream information group; or

when the $j^{th}$ output stream port is a last output stream port, configuring a third preset field in the $j^{th}$ piece of output stream information based on preset information.

42. A routing apparatus, wherein the apparatus comprises:

a packet reading module, configured to read a packet from a first buffer, wherein the first buffer corresponds to a source port that receives the packet;

a routing module, configured to determine a plurality of pieces of target output stream information based on routing information, a first port identifier of the source port, and a first shuttle identifier that is of the source shuttle and that is obtained from a packet header of the packet, wherein the routing information comprises a plurality of output stream information groups, one output stream information group comprises a plurality of pieces of output stream information, and one output stream information group corresponds to one shuttle of one port;

a port and shuttle determining module, configured to determine a plurality of target ports and a plurality of target shuttles based on the plurality of pieces of target output stream information, wherein the plurality of target ports are in one-to-one correspondence with the plurality of target shuttles, and one piece of target output stream information is used to determine one target port and one target shuttle; and

a packet addition module, configured to add the packet to a plurality of second buffers, wherein one second buffer corresponds to one target port.

43. A routing information configuration apparatus, wherein the apparatus comprises:

a port determining module, configured to determine an input stream port and a plurality of output stream ports corresponding to the input stream port; and

a configuration module, configured to: for a $j^{th}$ output stream port in the plurality of output stream ports: configure a first preset field in a $j^{th}$ piece of output stream information in an output stream information group based on a port identifier of the $j^{th}$ output stream port, and configure a second preset field in the $j^{th}$ piece of output stream information based on a shuttle identifier of an output stream shuttle of the $j^{th}$ output stream port, wherein the output stream information group corresponds to an input stream shuttle of the input stream port; and when the $j^{th}$ output stream port is not a last output stream port, configure a third preset field in the $j^{th}$ piece of output stream information based on address information of a $(j+1)^{th}$ piece of output stream information in the output stream information group; or when the j<sup>th</sup> output stream port is a last output stream port, configure a third preset field in the j<sup>th</sup> piece of output stream information based on preset information.

44. An electronic device, comprising:

a storage and a processor, wherein the storage is coupled to the processor; and
the storage stores program instructions, and when the program instructions are executed by the processor, the electronic device is enabled to perform the routing method according to any one of claims 32 to 40.

45. An electronic device, comprising:

a storage and a processor, wherein the storage is coupled to the processor; and
the storage stores program instructions, and when the program instructions are executed by the processor, the electronic device is enabled to perform the routing information configuration method according to claim 41.

46. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the electronic device is enabled to perform the routing method according to any one of claims 32 to 40.

47. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the electronic device is enabled to perform the routing information configuration method according to claim 41.

48. A computer storage medium, wherein the computer-readable storage medium stores a computer program, and when the computer program is run on a computer or a processor, the computer or the processor is enabled to perform the method according to any one of claims 32 to 41.

49. A computer program product, wherein the computer program product comprises a software program, and when the software program is executed by a computer or a processor, the steps of the method according to any one of claims 32 to 41 are performed.

[FIG. 1]

Device A

Management and control | Audio/Video signal | Third-party protocol data 1 | Third-party protocol data 2

Adapter 0 | Adapter 4 | Adapter 5 | Adapter N

Router

Port 1 | Port 2 | Port M

[FIG. 2]

| Adapter 0 | Adapter 4 | Adapter 5 |

Router A

Port 1

Device A

Virtual shuttle 7    Virtual shuttle 5    Virtual shuttle 7    Virtual shuttle 7    Virtual shuttle 7    Virtual shuttle 5    Virtual shuttle 7

Virtual shuttle 7    Virtual shuttle 7    Virtual shuttle 7    Virtual shuttle 5    Virtual shuttle 7    Virtual shuttle 5    Virtual shuttle 7

| Adapter 0 | Adapter 4 | Adapter 5 |

Port 1

Router B

Device B

Forward packet of a service 1

Reverse packet of the service 1

Forward packet of a service 2

Reverse packet of a service 2

EP 4 668 699 A1

[FIG. 3]

[FIG. 4]

[FIG. 5]

Port 0

| Virtual shuttle 0 | | Virtual shuttle 4 | | | Virtual shuttle n | |
| --- | --- | --- | --- | --- | --- | --- |
| Adapter 0 | | Adapter 4 | | ... | Adapter n | |
| Transmit buffer | Receive buffer | Transmit buffer | Receive buffer | | Transmit buffer | Receive buffer |

Router

| Transmit buffer | Receive buffer | Transmit buffer | Receive buffer | | Transmit buffer | Receive buffer |
| --- | --- | --- | --- | --- | --- | --- |
| Virtual shuttle 0 | | Virtual shuttle 4 | | ... | Virtual shuttle n | |

Port 1

| Transmit buffer | Receive buffer | Transmit buffer | Receive buffer | | Transmit buffer | Receive buffer |
| --- | --- | --- | --- | --- | --- | --- |
| Virtual shuttle 0 | | Virtual shuttle 4 | | ... | Virtual shuttle n | |

Port 2

[FIG. 6]

EP 4 668 699 A1

[FIG. 7]

(a)

(b)

EP 4 668 699 A1

[FIG. 8]

Step 880: Obtain a first management packet from a management virtual shuttle, and forward the first management packet to a management adapter in the first device

Step 850: Forward the packet of the first service stream to a transmit buffer of a second service adapter in the first device

Step 890: The first device obtains a second management packet from the management adapter in the first device, and forwards the second management packet to a management virtual shuttle in a port specified by the management adapter in the first device

First device

Router

Signal/ Data

Adap-ter

Port

Router device 1

Port 3

Port 2

Port 1

Port n

Port n-1

Port n-2

Router device 2

Port 3

Port 2

Port 1

Port n

Port n-1

Port n-2

Second device

Router

Port

Adap-ter

Signal/ Data

Step 820: Transmit the packet of the first service stream

Step 811: Obtain a packet of a first service stream

Step 812: Obtain the packet of the first service stream

Step 860: Transmit the packet of the first service stream

Step 870: Transmit a packet of a second service stream

Step 840: Send the packet of the first service stream

Step 830: Receive the packet of the first service stream

Third device

Fourth device

Fifth device

EP 4 668 699 A1

58

[FIG. 9]

[FIG. 10]

Device A — Router A
Adapter 4
Port 1
Port 2

Virtual shuttle 7

**Packet of a first service stream**

Device B — Router B
Adapter 7
Port 1
Port 2

Virtual shuttle 4

**Packet of the first service stream**

Device C — Router C
Adapter 6
Port 1
Port 2

EP 4 668 699 A1

[FIG. 11]

[FIG. 12]

[FIG. 13]

Computer device 1300

Communication interface 1340

Processor 1310

Router 1360

Storage 1330

Computer instructions

Bus 1320

Memory 1350

Packet

[FIG. 14a]

Device A

| Adapter 0 | Adapter 1 | Adapter 2 |

Router A

MDP

Shuttle ID=7 — Shuttle ID=5 — Shuttle ID=7 — Shuttle ID=5 — Shuttle ID=7

Shuttle ID=7 — Shuttle ID=5 — Shuttle ID=7 — Shuttle ID=5 — Shuttle ID=7

Forward packet of a data stream 1

Reverse packet of the data stream 1

Forward packet of a data stream 2

Reverse packet of the data stream 2

Device B

| Adapter 0 | Adapter 1 | Adapter 2 |

Router B

MUP

[FIG. 14b]

Adapter 2 | Shuttle ID=7 | Router B | Shuttle ID=1 | Router C | Shuttle ID=13 | Adapter 5

MUP 1 | MDP 2 | MUP 1 | MDP 2 | MUP 1 | MDP 2 | MUP 1

Router A

Device A | Shuttle ID=7 | Device B | Shuttle ID=1 | Device C | Shuttle ID=13 | Device D

Router D

Channel

EP 4 668 699 A1

[FIG. 14c]

EP 4 668 699 A1

[FIG. 14d]

EP 4 668 699 A1

[FIG. 15a]

[FIG. 15b]

| | | | | | |
|---|---|---|---|---|---|
| Adapter 2 | Shuttle ID=7 | Adapter 0 | Shuttle ID=1 | Adapter 3 | |

Device A      Device B      Device C

MUP 1    MDP 2    MUP 1    MDP 2    MUP 1

Router A    Router B    Router C

Shuttle ID=7      Shuttle ID=1

EP 4 668 699 A1

[FIG. 16a]

Input stream
information set

Output stream
information set

Output stream
information group

Port 0
- Shuttle ID=0
- Shuttle ID=1
- Shuttle ID=2
- ...
- Shuttle ID=N−1

Port 1
- Shuttle ID=0
- Shuttle ID=1
- Shuttle ID=2
- ...
- Shuttle ID=N−1

Port M−1
- Shuttle ID=0
- Shuttle ID=1
- Shuttle ID=2
- ...
- Shuttle ID=N−1

[FIG. 16b]

Second routing
information

First routing
information

[FIG. 17a]

| V | UD | PRIOR | WEIGHT | BANDWIDTH | ... |
|---|----|-------|--------|-----------|-----|

[FIG. 17b]

| RECEIVER_ COUNT | Shuttle ID | PORT_ID | NEXT_NODE_POINTER | ... |
|------------------|-----------|---------|-------------------|-----|

[FIG. 18a]

S501

Determine an input stream port and a plurality of output stream ports corresponding to the input stream port

S502

Configure a first preset field in a $j^{th}$ piece of output stream information in an output stream information group based on a port identifier of a $j^{th}$ output stream port, and configure a second preset field in the $j^{th}$ piece of output stream information based on a shuttle identifier of an output stream shuttle of the $j^{th}$ output stream port, where the output stream information group corresponds to an input stream shuttle of the input stream port

S503

When the $j^{th}$ output stream port is not a last output stream port, configure a third preset field in the $j^{th}$ piece of output stream information based on address information of a $(j+1)^{th}$ piece of output stream information in the output stream information group

S504

When the $j^{th}$ output stream port is a last output stream port, configure a third preset field in the $j^{th}$ piece of output stream information based on preset information

[FIG. 18b]

| RECEIVER_ COUNT=0 | Shuttle ID=7 | PORT_ID=0 | NEXT_NODE_POINTER=5 |
|---|---|---|---|

1st piece of output stream information corresponding to
[Port ID=1, Shuttle ID=7]

(1)

| RECEIVER_ COUNT=1 | Shuttle ID=1 | PORT_ID=2 | NEXT_NODE_POINTER=0 |
|---|---|---|---|

2nd piece of output stream information corresponding to
[Port ID=1, Shuttle ID=7]

(2)

[FIG. 18c]

| RECEIVER_ COUNT=0 | Shuttle ID=3 | PORT_ID=0 | NEXT_NODE_POINTER=7 |
|---|---|---|---|

1st piece of output stream information corresponding to
[Port ID=1, Shuttle ID=1]

(1)

| RECEIVER_ COUNT=0 | Shuttle ID=13 | PORT_ID=2 | NEXT_NODE_POINTER=0 |
|---|---|---|---|

2nd piece of output stream information corresponding to
[Port ID=1, Shuttle ID=1]

(2)

[FIG. 18d]

| RECEIVER_COUNT=2 | Shuttle ID=7 | PORT_ID=2 | NEXT_NODE_POINTER=0 |
|---|---|---|---|

One piece of output stream information corresponding to [Port ID=0, Shuttle ID=2]

(1)

| RECEIVER_COUNT=0 | Shuttle ID=2 | PORT_ID=0 | NEXT_NODE_POINTER=0 |
|---|---|---|---|

One piece of output stream information corresponding to [Port ID=2, Shuttle ID=7]

(2)

[FIG. 18e]

| RECEIVER_COUNT=0 | Shuttle ID=7 | PORT_ID=1 | NEXT_NODE_POINTER=0 |
|---|---|---|---|

One piece of output stream information corresponding to [Port ID=2, Shuttle ID=1]

(1)

| RECEIVER_COUNT=0 | Shuttle ID=7 | PORT_ID=1 | NEXT_NODE_POINTER=0 |
|---|---|---|---|

One piece of output stream information corresponding to [Port ID=0, Shuttle ID=7]

(2)

[FIG. 19a]

| V=1 | UD=0 | PRIOR= 1 | WEIGHT=1 | BANDWIDTH=0x66B |
|-----|------|----------|----------|-----------------|

One piece of input stream information corresponding to
[Port ID=0, Shuttle ID=2]

(1)

| V=1 | UD=1 | PRIOR= 1 | WEIGHT=1 | BANDWIDTH=0x0000 |
|-----|------|----------|----------|------------------|

One piece of input stream information corresponding to
[Port ID=2, Shuttle ID=7]

(2)

[FIG. 19b]

| V=1 | UD=0 | PRIOR= 1 | WEIGHT=1 | BANDWIDTH=0x66B |
|-----|------|----------|----------|-----------------|

One piece of input stream information corresponding to
[Port ID=1, Shuttle ID=7]

(1)

| V=1 | UD=1 | PRIOR= 1 | WEIGHT=1 | BANDWIDTH=0x0000 |
|-----|------|----------|----------|------------------|

One piece of input stream information corresponding to
[Port ID=0, Shuttle ID=7]

(2)

| V=1 | UD=1 | PRIOR= 1 | WEIGHT=1 | BANDWIDTH=0x0000 |
|-----|------|----------|----------|------------------|

One piece of input stream information corresponding to
[Port ID=2, Shuttle ID=1]

(3)

[FIG. 20]

Read a packet from a first buffer, where the first buffer corresponds to a source port that receives the packet — S701

Determine a plurality of pieces of target output stream information based on routing information, a first port identifier of a source port, and a first shuttle identifier that is of a source shuttle and that is obtained from a packet header of the packet — S702

Determine a plurality of target ports and a plurality of target shuttles based on the plurality of pieces of target output stream information — S703

Add the packet to a plurality of second buffers, where one second buffer corresponds to one target port — S704

[FIG. 21A]

S801

Read a packet from a first buffer, where the first buffer corresponds to a source port that receives the packet

S802

Read a 1$^{st}$ piece of output stream information corresponding to the packet from first routing information based on a first shuttle identifier and a first port identifier, where the 1$^{st}$ piece of output stream information corresponding to the packet includes first identification information

S803

Determine a 1$^{st}$ target port based on a second port identifier in the 1$^{st}$ piece of output stream information, and determine a 1$^{st}$ target shuttle based on a second shuttle identifier in the 1$^{st}$ piece of output stream information

S805

S804

Determine, based on a first indication information, whether an i$^{th}$ piece of output stream information corresponding to the packet exists in second routing information, where an initial value of i is 2

No → Forward the packet to a second buffer corresponding to the 1$^{st}$ target port

Yes

S806

Copy the packet to a second buffer corresponding to the 1$^{st}$ target port

S807

Read the i$^{th}$ piece of output stream information corresponding to the packet from the second routing information based on the first identification information, where the i$^{th}$ piece of output stream information includes second identification information

TO
FIG. 21B

[FIG. 21B]

CONT.
FROM
FIG. 21A

S808

Determine the $i^{th}$ target port based on a second port identifier in the $i^{th}$ piece of output stream information, and determine an $i^{th}$ target shuttle based on a second shuttle identifier in the $i^{th}$ piece of output stream information

S809

Determine, based on the second identification information included in the $i^{th}$ piece of output stream information, whether an $(i+1)^{th}$ piece of output stream information corresponding to the packet exists in the second routing information

No

S811

Forward the packet to a second buffer corresponding to the $i^{th}$ target port

Yes

S810

Copy the packet to a second buffer corresponding to the $i^{th}$ target port

S812

Read the $(i+1)^{th}$ piece of output stream information corresponding to the packet from the second routing information based on the second identification information included in the $i^{th}$ piece of output stream information, where the $(i+1)^{th}$ piece of output stream information includes the second identification information

S813

i=i+1

[FIG. 22]

```
┌─────────────────────────────┐  901
│   Packet reading module     │
└─────────────────────────────┘
              │
┌─────────────────────────────┐  902
│      Routing module         │
└─────────────────────────────┘
              │
┌─────────────────────────────┐  903
│     Port and shuttle        │
│   determining module        │
└─────────────────────────────┘
              │
┌─────────────────────────────┐  904
│   Packet addition module    │
└─────────────────────────────┘
```

[FIG. 23]

```
┌─────────────────────────────┐  1001
│  Port determining module    │
└─────────────────────────────┘
              │
┌─────────────────────────────┐  1002
│   Configuration module      │
└─────────────────────────────┘
```

[FIG. 24]

1100

```
┌──────────────────────────────────────────────────────────────┐
│         ┌──────────────────────┐  1101                        │
│         │      Processor        │                             │
│         └──────────────────────┘                             │
│                    │                    ┌──────────────────┐  1103
│                    │          1104      │     Storage      │
│    ════════════════╪══════════════════════                  │
│                    │                    └──────────────────┘
│         ┌──────────────────────┐  1102                        │
│         │ Transceiver/Transceiver│                            │
│         │          pin          │                            │
│         └──────────────────────┘                             │
└──────────────────────────────────────────────────────────────┘
```

## INTERNATIONAL SEARCH REPORT

| | International application No. |
| --- | --- |
| | **PCT/CN2023/133808** |

| A. | CLASSIFICATION OF SUBJECT MATTER |
| --- | --- |

H04L 45/16(2022.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; CNKI: 多媒体, 视频, 音频, 音视频, 业务流, 通道, 梭车, 适配器, 路由, 转发, 双向, 入流, 出流, 缓存, 缓冲区, multimedia, video, audio, stream, channel, shuttle, adapter, router, routing, forward, bidirectional, input, output, cache

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022155839 A1 (HUAWEI TECHNOLOGIES CO., LTD.) 28 July 2022 (2022-07-28) description, pages 9-31 | 1-31, 48-49 |
| A | WO 2018000135 A1 (HUAWEI TECHNOLOGIES CO., LTD.) 04 January 2018 (2018-01-04) entire document | 1-49 |
| A | CN 112688885 A (NEW H3C BIG DATA TECHNOLOGIES CO., LTD.) 20 April 2021 (2021-04-20) entire document | 1-49 |
| A | CN 1204090 A (HEILONGJIANG UNIVERSITY) 06 January 1999 (1999-01-06) entire document | 1-49 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **02 February 2024** | **23 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/133808**

| Patent document cited in search report | | | Publication date (day/month/year) | Patent family member(s) | Publication date (day/month/year) |
|---|---|---|---|---|---|
| WO | 2022155839 | A1 | 28 July 2022 | None | |
| WO | 2018000135 | A1 | 04 January 2018 | None | |
| CN | 112688885 | A | 20 April 2021 | None | |
| CN | 1204090 | A | 06 January 1999 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023081172 W